(19) Europäisches Patentamt
European Patent Office
Office européen des brevets

(11) **EP 2 782 951 B1**

(12) **EUROPÄISCHE PATENTSCHRIFT**

(45) Veröffentlichungstag und Bekanntmachung des Hinweises auf die Patenterteilung:
**02.01.2019   Patentblatt 2019/01**

(51) Int Cl.:
*C08G 77/20* (2006.01)    *C08L 83/04* (2006.01)
*C09D 183/04* (2006.01)    *C09J 183/04* (2006.01)

(21) Anmeldenummer: **12788200.9**

(22) Anmeldetag: **19.11.2012**

(86) Internationale Anmeldenummer:
**PCT/EP2012/072964**

(87) Internationale Veröffentlichungsnummer:
**WO 2013/076032 (30.05.2013 Gazette 2013/22)**

(54) **CHLORIDARME ZUSAMMENSETZUNGEN OLEFINISCH FUNKTIONALISIERTER SILOXANOLIGOMERE BASIEREND AUF ALKOXYSILANEN**

LOW CHLORIDE COMPOSITIONS OF OLEFINICALLY FUNCTIONALISED SILOXANE OLIGOMERS BASED ON ALKOXYSILANES

COMPOSITIONS À FAIBLE TENEUR EN CHLORURE D'OLIGOMÈRES SILOXANE À FONCTIONNALITÉ OLÉFINIQUE, À BASE D'ALCOXYSILANES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2011   DE 102011086865**

(43) Veröffentlichungstag der Anmeldung:
**01.10.2014   Patentblatt 2014/40**

(73) Patentinhaber: **Evonik Degussa GmbH 45128 Essen (DE)**

(72) Erfinder: **WEISSENBACH, Kerstin 77723 Gengenbach (DE)**

(56) Entgegenhaltungen:
**EP-A1- 0 518 057      EP-A2- 1 205 481
EP-A2- 1 331 238**

EP 2 782 951 B1

**Beschreibung**

Die vorliegende Erfindung betrifft ausgewählte Zusammensetzungen olefinisch funktionalisierter Siloxanoligomere, die aus olefinisch-funktionalisierten Alkoxysilanen abgeleitet sind, die als Gemisch olefinisch funktionalisierter Siloxanoligomere vorliegen können, höchstens einen olefinischen Rest je Silizium-Atom aufweisen, ein definiertes Molekulargewicht aufweisen und deren Chloridgehalt besonders gering ist sowie Verfahren zu deren Herstellung als auch deren Verwendung.

Es ist lange bekannt, Gemische kettenförmiger und cyclischer Siloxan-Oligomerer bei der Herstellung von Thermoplasten sowie Elastomeren einzusetzen. Zwischenzeitlich ist man jedoch zunehmend bestrebt möglichst VOC-arm zu arbeiten, beispielsweise bei der Vernetzung von Thermoplasten sowie Elastomeren, insbesondere bei der Kabelherstellung (VOC - "Volatile Organic Compounds" bzw. "flüchtige organische Verbindungen").

Es ist auch bekannt, Vinyltriethoxysilan, gegebenenfalls in Gemischen mit Alkyltriethoxysilanen und/oder Tetraethoxysilan, durch saure HCl katalysierte Hydrolyse und Kondensation in einem Alkohol in Gegenwart einer berechneten Menge Wasser umzusetzen. Anschließend wird der Alkohol abgetrennt.

Die eingesetzte Säure verbleibt im Produkt oder muss im Falle des Hydro- bzw. Hydrogenchlorids (HCl) aufwendig nach der Umsetzung der organofunktionellen Alkoxysilane wieder aus den hergestellten Rohprodukten entfernt werden, um nicht zu einer Korrosion der metallischen Oberflächen der Verarbeitungsmaschinen beizutragen. Dies geschieht durch Destillation der Siloxanrohprodukte.

In der Anwendung, wie bspw. bei der Herstellung von gefüllten Kabelcompounds, kommen die Oligomere regelmäßig zusammen mit Polymeren und funktionellen Füllstoffen in Compoundiermaschinen zum Einsatz. Dies geschieht im Falle von diskontinuierlichen Verfahren in Innenmischern oder auf Misch-Walzen und im Falle von kontinuierlichen Compoundierprozessen in Doppelschneckenextrudern oder Co-Knetern. Die typischen Verarbeitungstemperaturen liegen hierbei im Bereich von 130 - 270°C, d.h., dass an den Zugabestellen der Silanverbindung, je nach Verfahren ist das der Einlass der Compoundiermaschine oder die Polymerschmelze, verfahrensbedingt, Temperaturen oberhalb der Siedetemperatur der Monomere Silane und destillierbaren Oligomere herrschen. Die Erfahrung lehrt, dass neben dem unerwünschten Wirkstoffverlust zusätzlich verstärkt Ablagerungen von freien Silanverbindungen an den Gehäuseinnenwänden oder den Entgasungszonen auftreten. Diese basieren auf Abbauprodukte der verdampften Silane oder destillierbarer Oligomere. Es können kritische Situationen durch diese ggf. alkoholhaltigen Dämpfe entstehen, die bei der Rückwärtsentgasung in den Einzugsbereich gelangen können und mit heissen Oberflächen in Kontakt kommen können. Diese Herausforderung gilt auch in teilgefüllten Zonen der Compoundieraggregate oder deren Entgasungzonen. Insgesamt ist aus diesen Gründen ein möglichst hoher Flammpunkt der eingesetzten Verbindungen notwendig. Auch der freiwerdende Hydrolysealkohol, der im Falle von gefüllten Polymercompounds bei der Hydrolysereaktion der Estergruppen der Silizium-funktionellen Gruppe des Silans oder Silan-Oligomers im Compound entsteht, ist zu beachten. Insgesamt ist die Reduktion des VOC (volatile organic compounds) daher ein sehr wichtiges Kriterium bei dieser Technologie.

Wie schon erwähnt, liegen die üblichen Betriebstemperaturen beim Compoundierprozess meist über 101 °C, und häufig erfolgt beispielsweise eine Knetung bei 170 bis 180 °C. Daher besteht weiterhin ein Bedarf an VOC verminderten und korrosionsarmen Oligomeren, die möglichst keine sauren Verbindungen, wie Ameisensäure, HCl oder Cl-haltigen Verbindungen mehr enthalten. Selbst geringste Mengen dieser Verbindungen führen bei den genannten Prozesstemperaturen zur Korrosion und damit zu Verschleiß der Maschinenteile nach kurzen Standzeiten. So wird für nichtrostende Stähle, Nickel basierte Legierungen und Kupferbasis Legierungen angegeben, dass sie aufgrund der auftretenden Korrosion unbeständig gegenüber Ameisensäure oder HCl sind (siehe z.B. Handbuch der Metallbeläge, Fa. Witzemann, Stand Januar 2010, Kapitel 7.2 Korrosionsbeständigkeit, S. 200 - 238). ThyssenKrupp beschreibt in einer Broschüre (Chemische Beständigkeit der Nirosta®-Stähle, ThyssenKrupp Nirosta GmbH, Ausgabe 3, Stand 01/2008) verschiedene Korrosionstypen und nennt typische Auslöser für eine abtragende Flächenkorrosion in Form von Loch-, Spalt- oder Spannungsrisskorrosion, wie die Anwesenheit von Säuren und Chloridionen. Die korrodierende Wirkung von Säuren und Chloridionen steigt mit erhöhter Temperatur deutlich an. An unlegierten Stählen kann die Massenabtragung bei hoher Luftfeuchtigkeit (80 bis 100 % relative Luftfeuchtigkeit) in Gegenwart von Ameisensäure 10 g/m$^2$ und in Gegenwart von Chloriden bis zu 105 g/m$^2$ nach 14 Tagen betragen. Daher soll der Gehalt an Hydrolyse- und Kondensationskatalysatoren in den erfindungsgemäß hergestellten Oligomeren möglichst bis auf einen Gehalt im Gew.-ppm bis Gew.-ppt Bereich oder bis zur Nachweisgrenze vermindert werden.

Neben der Korrosion während der Verarbeitung, spielt aber das Vorhandensein von Chlorid/-ionen oder Säuren in der Endanwendung, z.B. in Kabelisolierungen, eine große Rolle. Neben der möglichen Korrosion am isolierten Stromleiter und der möglichen negativen Beeinflussung der elektrischen Eigenschaften der Kabelisolierung selbst, müssen im Falle von halogenfreien, flammgeschützten Compounds korrosive und halogenhaltige Verbrennungsgase zwingend vermieden werden. Dieser Anspruch gilt natürlich für alle in diesen Compounds eingesetzten Rohstoffe.

Durch die schon angesprochene Vermeidung bzw. Minimierung der Chlorid- und Säure-Anteile in den erfindungsgemäßen Siloxanoligomeren könnte diesen Herausforderungen vollständig begegnet werden.

Zudem finden Silansysteme zunehmendes Interesse, die immer weniger organische Lösungsmittel enthalten und deshalb umweltfreundlicher sind. Aus diesem Grund geht der Trend dahin, vorkondensierte VOC ärmere Silansysteme bereitzustellen, die dann allerdings stabilisiert werden müssen, weil sie noch den Katalysator enthalten oder aus denen der Katalysator aufwendig abgetrennt werden muss.

EP 0 518 057 B1 bzw. US 5,282,998 offenbaren ein Verfahren zur Herstellung von Gemischen kettenförmiger und cyclischer Siloxan-Oligomerer. Gemäß den Beispielen 1 und 6 werden die jeweiligen Produktgemische durch Hydrolyse und Kondensation von Vinyltrialkoxysilanen oder einem Gemisch von Vinyl- und Alkyltrialkoxysilanen hergestellt, wobei pro Mol Si des eingesetzten Silans 0,63 Mol Wasser für die Hydrolyse und Kondensation eingesetzt werden. Zudem kann der HCl Katalysator mittels der dort offenbarten Methode nicht vollständig abgetrennt werden und ein korrodierend wirkender Restgehalt von etwa 50 bis etwa 230 ppm HCl verbleibt selbst in Produkten, die gemäß dem offenbarten Verfahren, destilliert werden. Bei Zutritt von Feuchtigkeit oder durch fortschreitende Kondensation durch Anwesenheit von HCl im Oligomerengemisch kann Alkohol freigesetzt werden. Tritt so eine Freisetzung von Alkohol während der Lagerung des Oligomerengemisches ein, führt dies in der Regel zu einem unerwünschten Absinken des Flammpunkts. Aus diesem Grund muss ein Produkt gemäß EP 0 5180 57B1 bereits bei der Aufarbeitung in energieintensiver und aufwendiger Weise unter Vakuum reindestilliert werden, um den HCl Gehalt zu vermindern. Anwendung finden besagte Oligomerengemische als Vernetzungsmittel für thermoplastische Polyolefine durch Pfropfpolymerisation und hydrolytische Auskondensation.

US 6,395,856 B1 offenbart eine Hydrosilylierung von organofuktionellen Silizium enthaltenden Oligomeren, wie die Hydrosilylierung von Vinylmethoxysiliconaten aus der Umsetzung von Vinyltrimethoxysilan in Gegenwart von Ameisensäure unter Schutzgas ohne Gegenwart eines Verdünnungsmittels.

CN 100343311 C beschreibt durch katalytische Hydrolyse und Kondensation von Vinyltrimethoxysilan gewonnene Silanoligomere. Die Verwendung von Metallsalzkatalysatoren, wie beispielsweise Kupferhydroxid, in Kombination mit Säuren ist zwingend. Die Abtrennung der Katalysatoren ist aufwändig und es ist damit zu rechnen, dass Katalysatorreste bzw. Neutralisationsprodukte im Produkt verbleiben und sich nachteilig in vielen Anwendungen auswirken. So wird hier die Abtrennung der Säure durch eine Neutralisation mittels Calciumcarbonat und Filtration des dabei entstanden Calciumsalzes offenbart.

Bei einigen Siloxanoligomeren im Stand der Technik sinkt der Flammpunkt innerhalb von wenigen Tagen im Verlauf einer Lagerung auf unter 50 °C, da möglicherweise zu hohe Konzentrationen an Resten der Katalysatoren in der Zusammensetzung verblieben sind. Anderer Zusammensetzungen aus dem Stand der Technik wiederum zeigen zu hohe Masseverluste von bis zu 25 Gew.-% um 150 °C und einen großen Masseverlust von circa 50 bis 90 Gew.-% um 200 °C.

Siloxane mit hohen Molekulargewichten im Bereich 10.000 g/mol werden in JP10-298289 A beschrieben, wobei diese durch Hydrolyse und Vorkondensation bzw. Kondensation eines Vinyl- oder Phenyl-funktionellen Alkoxysilans in Gegenwart eines Säurekatalysators hergestellt werden und der Katalysator anschließend mit Hilfe eines wasserfreien, anionischen Ionenaustauschers aus dem Produktgemisch entfernt wird. Derart hochmolekulares Material ist in den meisten Anwendungen aufgrund hoher Viskositäten und zu geringer Reaktivität nicht einsetzbar.

Organosiloxanoligomere mit einer Vielzahl an möglichen Funktionalitäten, einem mittleren Molekulargewicht im Bereich $M_n$ = 350 - 2.500 g/mol und einer Polydispersität (D = $M_w$ / $M_n$) von 1.0 - 1.3 werden in JP2004-099872 beschrieben. Die Herstellung erfolgt in Gegenwart eines basischen Katalysators aus einer sehr verdünnten wässrigen Lösung mit einer sehr geringen, wirtschaftlich nicht erstrebenswerten Raum-Zeit Ausbeute; so wurden aus 1 l Lösung 1 ml Produkt isoliert. Die Lehre der JP2004-099872A ließ sich nicht wie offenbart nacharbeiten. So konnte das Beispiel 1 mehrfach nicht wie angegeben nachgearbeitet werden.

Der vorliegenden Erfindung lag die Aufgabe zugrunde, weitere, besonders chlorarme Gemische rein olefinischer Siloxanoligomere, insbesondere basierend auf Alkenylalkoxysilanen, bzw. besonders Chlor-arme Gemische olefinisch- und alkylfunktionalisierter Siloxanoligomere, insbesondere basierend auf Alkenyl-/AlkylAlkoxysilane, sowie ein Verfahren zur Herstellung solcher Gemische bereitzustellen. Ferner bestand ein Anliegen darin, über die erfindungsgemäß modifizierten Siloxanoligomere nach Möglichkeit eine Verbesserung bei der Verarbeitbarkeit mit Thermoplasten oder Elastomeren sowie auch der Performance der damit hergestellten Thermoplaste oder Elastomere zu erzielen. Ein wesentlicher Punkt bei der Verarbeitbarkeit ist auch die schnelle Verteilbarkeit der Siloxanoligomere in den Thermoplasten in Kombination mit möglichst geringen Masseverlusten bei den gegebenen Temperaturen in Extruderanwendungen. Erfindungsgemäß sollte der Chlorgehalt, insbesondere der Gesamtchloridgehalt und/oder auch der Gehalt an hydrolysierbarem Chlorid weiter verfahrensgemäß deutlich gesenkt werden. Zudem sollten die nach dem Verfahren hergestellten Siloxanoligomere sehr hohe Flammpunkte aufweisen, auch bei hohen Temperaturen als VOC-arm gelten und ohne weitere Sicherheitsmaßnahmen in der Anwendungstechnik bei erhöhten Temperaturen verwendbar sein. Auch sollen die Siloxanoligomere selbst bei hohen Temperaturen, wie bspw. in Extrudern, nur geringe Masseverluste zeigen. Als weitere Aufgaben sollten die olefinischen Siloxanoligomere eine gute Lagerstabilität auch über längere Lagerzeiträume aufweisen und vorzugsweise auch ein Anstieg der Viskosität des Gemisches, beispielsweise durch Gelbildung oder durch Ausflockungen oder durch Nachkondensation, über einen längeren Zeitraum vermieden werden.

Gelöst werden die Aufgaben gemäß den unabhängigen Patentansprüchen, bevorzugte Ausführungsformen sind in den Unteransprüchen und in der Beschreibung detailliert dargelegt.

Überraschend wurde gefunden, dass olefinisch funktionalisierte Alkoxysilane und gegebenenfalls Alkylalkoxysilan und gegebenenfalls Tetraalkoxysilan in einfacher und wirtschaftlicher Weise durch Umsetzung mit einer definierten Menge Wasser, insbesondere von größer gleich 0,5 bis 1,5 Mol Wasser je Mol Silizium-Atome der eingesetzten Alkoxysilane, und gegebenenfalls in Gegenwart eines Lösemittels, vorzugsweise Alkohol, zu Zusammensetzungen besonders Chlor-armer olefinischer Siloxanoligomere umgesetzt werden können, wenn der Hydrolysealkohol und das gegebenenfalls vorliegende Lösemittel im Wesentlichen abgetrennt werden, insbesondere wird nur das Lösemittel und/oder der Hydrolysealkohol destillativ abgetrennt, und mindestens einmal während der destillativen Aufarbeitung oder nachfolgend jeweils eine definierte Menge Alkohol nachdosiert und abgetrennt, insbesondere wird der Alkohol abdestilliert.

Überraschend war, dass die auf diese Weise erhaltenden Siloxanoligomere bereits als Sumpfprodukt einen sehr geringen Gehalt an Chlorid bzw. Gesamtchloridgehalt zeigen. Die so erhaltenen Zusammensetzungen weisen erfindungsgemäß einen besonders niedrigen Chlorgehalt und einen besonders niedrigen Gehalt an Monomeren auf, vorzugsweise sind keine Monomere mehr nachweisbar. Das erfindungsgemäße Verfahren ist besonders wirtschaftlich, da nur noch die leicht siedenden Lösemittel abdestilliert werden, insbesondere der zugesetzte Alkohol und/oder Hydrolysealkohol. Das hochsiedende Sumpfprodukt selbst wird vorteilhaft nicht mehr destilliert. Zudem konnte in erfindungsgemäßen Zusammensetzungen der Gehalt an T-Strukturen und das Molekulargewicht gesteigert werden. Auch konnte die Beständigkeit besagter Zusammensetzungen, insbesondere die Qualitätsbeständigkeit, nochmals verbessert werden.

Die erfindungsgemäßen Zusammensetzungen und die nach dem erfindungsgemäßen Verfahren hergestellten Zusammensetzungen der olefinisch funktionalisierten Siloxanoligomere bedürfen, anders als die bekannten Oligomere keiner weiteren Aufarbeitung, wie beispielsweise Destillation der Zusammensetzungen der Siloxanoligomere. Die nach dem erfindungsgemäßen Verfahren hergestellten Zusammensetzungen, das oligomere Sumpfprodukt, zeigt die gleiche oder eine bessere Performance wie bekannte, jedoch mittels Destillation gereinigte olefinische Siloxanoligomere. Daher braucht erfindungsgemäß das erhaltene Siloxanoligomer nicht mehr selbst destilliert zu werden, sondern kann rein als Sumpfprodukt erhalten und verwendet werden.

Zudem werden erfindungsgemäß als Hydrolyse- und/oder Kondensationskatalysatoren unter Normalbedingungen gasförmige, saure Katalysatoren, insbesondere HCl, eingesetzt, die in wässriger oder alkoholischer Phase gelöst werden können. Somit erfolgt eine Umsetzung unter den Bedingungen der homogenen Katalyse. Ein überraschender Vorteil war, dass es durch das erfindungsgemäße Verfahren gelingt den gasförmigen Katalysator nahezu vollständig aus den Zusammensetzungen abzutrennen.

Offenbart werden Verfahren zur Herstellung einer Zusammensetzung und solche Zusammensetzungen erhältlich nach diesem Verfahren, enthaltend olefinisch funktionalisierte Siloxanoligomere, die höchstens einen olefinischen Rest am Silizium-Atom aufweisen, und die olefinisch funktionalisierten Siloxanoligomere Si-O-vernetzte Strukturelemente aufweisen, die kettenförmige, cyclische, vernetzte und/oder raumvernetzte Strukturen bilden, wobei mindestens eine Struktur in idealisierter Form der allgemeinen Formel I entspricht,

$$(R^1O)[(R^1O)_{1-x}(R^2)_xSi(A)O]_a[Si(Y)_2O]_c[Si(B)(R^4)_y(OR^3)_{1-y}O]_bR^3 \qquad (I),$$

- wobei die Strukturelemente aus Alkoxysilanen abgeleitet sind und
- A in dem Strukturelement einem olefinischen Rest insbesondere mit 2 bis 16 C-Atomen, und
- B in dem Strukturelement insbesondere einem linearen, verzweigten oder cyclischen gesättigten Kohlenwasserstoffrest mit 1 bis 16 C-Atomen, bevorzugt einem linearen, verzweigten oder cyclischen Alkyl-Rest mit 1 bis 16 C-Atomen,
- Y entspricht $OR^3$ oder in vernetzten Strukturen unabhängig voneinander $OR^3$ oder $O_{1/2}$ und Y entspricht in raumvernetzten Strukturen unabhängig voneinander $OR^3$ oder $O_{1/2}$,
- wobei $R^1$ unabhängig voneinander einem linearen, verzweigten und/oder cyclischen Alkyl-Rest mit 1 bis 4 C-Atomen, und gegebenenfalls H entspricht,
- $R^3$ jeweils unabhängig voneinander einem linearen, verzweigten und/oder cyclischen Alkyl-Rest mit 1 bis 4 C-Atomen, und gegebenenfalls H entspricht, und $R^2$ jeweils unabhängig einem linearen, verzweigten oder cyclischen Alkyl-Rest mit 1 bis 15 C-Atomen und $R^4$ jeweils unabhängig einem linearen, verzweigten oder cyclischen Alkyl-Rest mit 1 bis 15 C-Atomen entsprechen,
- a, b, c, x und y unabhängig ganzen Zahlen entsprechen mit $1 \leq a$, $0 \leq b$, $0 \leq c$, x unabhängig voneinander 0 oder 1 ist, y unabhängig voneinander 0 oder 1 ist, und $(a+b+c) \geq 2$, besonders bevorzugt sind x = 0 und y = 0,
- wobei insbesondere der Gehalt an Gesamtchlorid, kleiner gleich 100 mg/kg beträgt, ggf. bis 0 mg/kg, insbesondere kleiner gleich 75 mg/kg, bevorzugt kleiner gleich 50 mg/kg, weiter bevorzugt kleiner gleich 45 mg/kg, besonders bevorzugt kleiner gleich 40 mg/kg, vorzugsweise kleiner gleich 20 mg/kg, bevorzugt kleiner gleich 10 mg/kg, weiter bevorzugt kleiner gleich 5 mg/kg bis 0 mg/kg ist, wobei insbesondere zusätzlich der Gehalt an hydrolysierbarem Chlorid kleiner 20 mg/kg ist, insbesondere kleiner gleich 10 mg/kg, bevorzugt kleiner gleich 5 mg/kg bis 0 mg/kg, insbesondere in der Zusammensetzung als Sumpfprodukt, und, insbesondere

- das Gewichtsmittel des Molekulargewichts (Mw) größer gleich 410 g/mol bis 580 g/mol und das Zahlenmittel des Molekulargewichts (Mn) größer gleich 370 bis 470 g/mol, wobei die Polydispersität als Quotient aus Mw/Mn bei 1,00 bis 1,25 liegt.

- wobei die Strukturelemente der olefinisch funktionalisierten Siloxanoligomere $[(R^1O)_{1-x}(R^2)_xSi(A)O]_a$, $[Si(B)(R^4)_y(OR^3)_{1-y}O]_b$ und $[Si(Y)_2O]_c$ in der allgemeinen Formel I zusammen in Bezug auf alle Silizium-Atome der allgemeinen Formel I zu größer gleich 3 % als T-Struktur und vorzugweise kleiner 10 % als T-Struktur vorliegen.

Gemäß einer besonders bevorzugten Ausführungsform ist das Gewichtsmittel des Molekulargewichts (Mw) größer gleich 430 bis 550 g/mol, insbesondere 450 bis 530 g/mol, ferner zu nennen sind die diesbezüglichen Zahlenwerte 415, 420, 425, 435, 440, 445, 455, 460, 465, 470, 475, 480, 485, 490, 495, 500, 505, 510, 515, 520, 525, 535, 540, 545, 555, 560, 565, 570 sowie 575 g/mol, und ebenfalls besonders bevorzugt liegt das Zahlenmittel des Molekulargewichts (Mn) im Bereich von 390 g/mol bis 450 g/mol, insbesondere 400 bis 435 g/mol, ferner zu nennen sind die diesbezüglichen Zahlenwerte 375, 380, 385, 395, 405, 410, 415, 420, 425, 430, 440, 445, 455, 460 sowie 465 g/mol, wobei die Polydispersität als Quotient aus Mw/Mn vorzugsweise bei 1,00 bis 1,25 liegt. Weiter bevorzugt ist es, wenn die Polydispersität im Bereich von 1,01 bis 1,24 einschließlich aller Zwischenwerte, insbesondere auch 1,01, 1,02, 1,03, 1,04, 1,05, 1,06, 1,07, 1,08, 1,09, 1,1, 1,11, 1,12, 1,13, 1,14, 1,15, 1,16, 1,17, 1,18, 1,19, 1,2, 1,21, 1,22, 1,23, liegt.

Gewichtsmittel des Molekulargewichts (Mw)

$$M_w = \frac{\sum n_i M_i^2}{\sum n_i M_i}$$

und Zahlenmittel des Molekulargewichts (Mn)

$$M_n = \frac{\sum n_i M_i}{\sum n_i}$$

jeweils mit: $n_i$ = Stoffmenge [Masse] des i-mers, $M_i$ = Molmasse des i-mers. Details zur Definition für Gewichtsmittel und Zahlenmittel, die dem Fachmann an sich bekannt sind, kann der Leser aber auch u. a. dem Internet unter http://de.wikipedia.org/wiki/ Molmassenverteilung oder einem Standardwerk der Mathematik entnehmen. Generell gilt, dass die Bezeichnung Disiloxan, Trisiloxan, Tetrasiloxan, Pentasiloxan die jeweils linearen und/oder verzweigten Siloxane erfasst und Cyclo-Trisiloxan, Cyclo-Tetrasiloxan, Cyclo-Penta oder Cyclo-Heptasiloxan die cyclischen Siloxane erfasst.

Zudem ist Gegenstand der Offenbarung eine Zusammensetzung enthaltend olefinisch funktionalisierte Siloxanoligomere, in denen die Strukturelemente $[(R^1O)_{1-x}(R^2)_xSi(A)O]_a$, $[Si(B)(R^4)_y(OR^3)_{1-y}O]_b$ und $[Si(Y)_2O]_c$ in der allgemeinen Formel I zusammen in Bezug auf alle Silizium-Atome der allgemeinen Formel I vorzugsweise größer gleich 4 %, bevorzugt zu größer gleich 5 % vorliegen, wie 5 bis 10 %, besonders bevorzugt zu größer gleich 7,5 %, weiter bevorzugt zu größer gleich 10 %, zu größer gleich 11 %, zu größer gleich 13, zu größer gleich 15 %, alternativ zu größer gleich 20 % oder gemäß einer weiteren Alternative zu größer gleich 25 %.

Gemäß einer Alternative können die Strukturelemente $[(R^1O)_{1-x}(R^2)_xSi(A)O]_a$, $[Si(B)(R^4)_y(OR^3)_{1-y}O]_b$ und $[Si(Y)_2O]_c$, insgesamt, d. h. in Summe, in der allgemeinen Formel I zusammen in Bezug auf alle Silizium-Atome der allgemeinen Formel I zu größer gleich 5 % als T-Struktur vorliegen, mit der Maßgabe, dass $1 \leq a$, $0 \leq b$, $0 \leq c$ und $(a+b+c) \geq 2$ sind oder alternativ, dass in Summe die Strukturelemente $[(R^1O)_{1-x}(R^2)_xSi(A)O]_a$, in Bezug auf die Gesamtsumme an Silizium-Atomen in der allgemeinen Formel I zu größer gleich 5 % als T-Struktur vorliegen, wie 5 bis 10 %, insbesondere zu größer gleich 7,5 %, bevorzugt zu größer gleich 10 %, besonders bevorzugt zu größer gleich 11 %, weiter bevorzugt zu größer gleich 13 %, zu größer gleich 15 %, alternativ zu größer gleich 20 % oder gemäß einer weiteren Alternative zu größer gleich 25 %.

Ebenfalls Gegenstand der Offenbarung ist auch eine Zusammensetzung enthaltend olefinisch funktionalisierte Siloxanoligomere deren Gehalt an Silizium-Atomen monomerer Alkoxysilane kleiner gleich 3 %, insbesondere bis zur Nachweisgrenze oder 0,0 %, in Bezug auf alle Silizium-Atome der Siloxanoligomeren beträgt, insbesondere in Bezug auf die Silizium-Atome der allgemeinen Formel I mit der Maßgabe, dass $1 \leq a$, $0 \leq b$, $0 \leq c$ und $(a+b+c) \geq 2$ sind, bevorzugt

ist der Gehalt an Monomeren kleiner gleich 2 %, weiter bevorzugt kleiner gleich 1 %, besonders bevorzugt ist der Gehalt kleiner gleich 0,75 % bis 0 Gew.-%, ebenfalls bevorzugt kleiner gleich 0,5 %.

Zudem ist Gegenstand der Offenbarung eine Zusammensetzung enthaltend olefinisch funktionalisierte Siloxanoligomere, in denen die Strukturelemente $[(R^1O)_{1-x}(R^2)_xSi(A)O]_a$, $[Si(B)(R^4)_y(OR^3)_{1-y}O]_b$ und $[Si(Y)_2O]_c$ in der allgemeinen Formel I zusammen in Bezug auf alle Silizium-Atome der allgemeinen Formel I zu größer gleich 1 % als T-Struktur vorliegen, insbesondere zu größer gleich 2 %, vorzugsweise zu größer gleich 3 %, größer gleich 4%, bevorzugt zu größer gleich 5 %, wie 5 bis 10 %, besonders bevorzugt zu größer gleich 7,5 %, weiter bevorzugt zu größer gleich 10 %, zu größer gleich 11 %, zu größer gleich 13, zu größer gleich 15 %, alternativ zu größer gleich 20 % oder gemäß einer weiteren Alternative zu größer gleich 25 %.

Gemäß einer Alternative können die Strukturelemente $[(R^1O)_{1-x}(R^2)_xSi(A)O]_a$, $[Si(B)(R^4)_y(OR^3)_{1-y}O]_b$ und $[Si(Y)_2O]_c$, insgesamt, d. h. in Summe, in der allgemeinen Formel I zusammen in Bezug auf alle Silizium-Atome der allgemeinen Formel I zu größer gleich 5 % als T-Struktur vorliegen, mit der Maßgabe, dass $1 \leq a$, $0 \leq b$, $0 \leq c$ und $(a+b+c) \geq 2$ sind oder alternativ, dass in Summe die Strukturelemente $[(R^1O)_{1-x}(R^2)_xSi(A)O]_a$, in Bezug auf die Gesamtsumme an Silizium-Atomen in der allgemeinen Formel I zu größer gleich 5 % als T-Struktur vorliegen, wie 5 bis 10 %, insbesondere zu größer gleich 7,5 %, bevorzugt zu größer gleich 10 %, besonders bevorzugt zu größer gleich 11 %, weiter bevorzugt zu größer gleich 13 %, zu größer gleich 15 %, alternativ zu größer gleich 20 % oder gemäß einer weiteren Alternative zu größer gleich 25 %.

Offenbart ist eine Zusammensetzung enthaltend olefinisch funktionalisierte Siloxanoligomere, die höchstens einen olefinischen Rest am Silizium-Atom aufweisen, und die olefinisch funktionalisierten Siloxanoligomere Si-O-vernetzte Strukturelemente aufweisen, die kettenförmige, cyclische, vernetzte und/oder raumvernetzte Strukturen bilden, wobei mindestens eine Struktur in idealisierter Form der allgemeinen Formel I entspricht, wobei die Siloxanoligomere abgeleitete Strukturelemente aus mindestens einem der Alkoxysilane aufweisen, (i) aus olefinisch-funktionalisierten Alkoxysilanen der allgemeinen Formel II,

$$A\text{-}Si(R^2)_x(OR^1)_{3-x} \qquad (II)$$

mit A einem olefinischen Rest, mit $R^2$ und x wie vorstehend definiert, bevorzugt x gleich 0, und $R^1$ unabhängig einem linearen, verzweigten und/oder cyclischen Alkyl-Rest mit 1 bis 4 C-Atomen entspricht, oder gegebenenfalls einer Mischung von Alkoxysilanen der Formel II, und

(i.1) optional aus mit (mindestens) einem gesättigten Kohlenwasserstoff-Rest funktionalisierten Alkoxysilan der Formel III,

$$B\text{-}Si(R^4)_y(OR^3)_{3-y} \qquad (III)$$

mit B einem unsubstituierten Kohlenwasserstoff-Rest, mit $R^3$, $R^4$ und y wie vorstehend definiert, y bevorzugt gleich 0, oder gegebenenfalls einer Mischung von Alkoxysilanen der Formel III, und

(i.2) optional aus (mindestens) einem Tetraalkoxysilan der allgemeinen Formel IV gleich $Si(OR^3)_4$ mit $R^3$ unabhängig voneinander wie vorstehend. definiert vorzugsweise der Gehalt an Chlor, insbesondere Gesamtchlorid, kleiner gleich 100 mg/kg beträgt, insbesondere kleiner gleich 75 mg/kg bis 0 mg/kg, weiter bevorzugt kleiner gleich 50 mg/kg, und vorzugsweise die Strukturelemente zusammen in Bezug auf alle Silizium-Atome des Siloxanoligomers zu größer gleich 1 % als T-Struktur vorliegen, vorzugsweise zu größer gleich 2 %, größer gleich 3 %, größer gleich 5%, wie 5 bis 10 %, insbesondere zu größer gleich 7,5 %, bevorzugt zu größer gleich 10 %, besonders bevorzugt zu größer gleich 11 %, weiter bevorzugt zu größer gleich 13 %, zu größer gleich 15 %, alternativ zu größer gleich 20 % oder gemäß einer weiteren Alternative zu größer gleich 25 %. Besonders bevorzugt sind x = 0 und y = 0.

Alle Alkylreste, wie $R^1$, $R^2$, $R^3$, $R^4$, mit 1 bis 4 C-Atomen können jeweils unabhängig voneinander vorzugsweise Methyl, Ethyl, Propyl, n-Propyl, iso-Propyl, Butyl, n-Butyl, iso-Butyl, tert.-Butyl und/oder 2-Methylbutyl sein. Dabei können die Alkyl-Reste $R^2$ und/oder $R^4$ jeweils unabhängig einem linearen, verzweigten oder cyclischen Alkyl-Rest mit 1 bis 15 C-Atomen entsprechen, wie Methyl, Ethyl, Propyl, n-Propyl, iso-Propyl, Butyl, n-Butyl, iso-Butyl, tert.-Butyl oder mit 5 C-Atomen 2-Methylbutyl , n-Pentyl, n-Hexyl, n-Heptyl, n-Octyl, n-Nonyl, n-Decyl, n-Undecyl usw. sowie die entsprechen iso-Alkyle sowie Cyclopentyl, Cyclohexyl sowie Alkyl-substituierte Cyclopentyl und Cyclohexyl Gruppen. Dabei können die Alkyl-Reste $R^2$ und $R^4$ jeweils unabhängig ausgewählt sein aus einer Methyl-, Ethyl-, Propyl-, Butyl-, i-Butyl-, n-Butyl-, tert-Butyl-, Pentyl-, n-Pentyl-, iso-Pentyl-, neo-Pentyl-, Hexyl-, i-Hexyl-, neo-Hexyl-, 2,2-Dimethylbutyl-, 2,3-Dimethylbutyl-, 2-Methylpentyl-, 3-Methylpentyl-, Octyl-, n-Octyl-, iso-Octyl-, Nonyl-, Decyl-, Undecyl- Dodecyl- , $C_{13}H_{27}$-, $C_{14}H_{29}$- und $C_{15}H_{31}$-Gruppe.

Siloxanoligomere als auch die Alkoxysilane der Formeln II, III und IV können als Umesterungprodukte eingesetzt oder isoliert werden. Beispielsweise als Methoxydiethoxyalkylsilan oder Methoxydiethoxyvinylsilan.

Gemäß besonders bevorzugten Ausführungsformen entspricht der olefinische Rest A in Formeln I und/oder II einem nicht hydrolysierbaren olefinischen Rest, insbesondere einer linearen, verzweigten oder cyclischen, Alkenyl- oder Cycloalkenyl-alkylen-funktionellen Gruppe mit jeweils 2 bis 16 C-Atomen, bevorzugt mit 2 bis 8 C-Atomen, besonders bevorzugt einer Vinyl-, Allyl-, Butenyl-, wie 3-Butenyl-, Pentenyl-, Hexenyl-, Ethylhexenyl-, Heptenyl-, Octenyl-, Cyclohexenyl-C1 bis C8-alkylen-, vorzugsweise Cyclohexenyl-2-ethylen-, wie 3'-Cyclohexenyl-2-ethylen- und/oder Cyclohexadienyl-C1 bis C8-alkylen-, vorzugsweise Cyclohexadienyl-2-ethylen-Gruppe.

Ebenso bevorzugt kann der unsubstituierte Kohlenwasserstoff-Rest B unabhängig in Formeln I und/oder III einem linearen, verzweigten oder cyclischen Alkyl-Rest mit 1 bis 16 C-Atomen entsprechen, insbesondere eine Methyl-, Ethyl-, Propyl-, i-Butyl-, Octyl-, oder Hexadecyl-Gruppe,

Gemäß einer Alternative können die olefinisch funktionalisierten Siloxanoligomere, insbesondere der Formel I, vorzugsweise ein Verhältnis an Silizium-Atomen zu A- und B-Resten mit der Maßgabe aufweisen, dass a größer gleich 1, b größer gleich 0 und c größer gleich 0 ist, und (a+b+c) größer gleich 2, von Si zu (A- + B-Resten) von 1 zu 1 bis etwa 1,22 zu 1, vorzugsweise von 1 : 1 bis 1,15 :1 auf.

Ebenfalls offenbart sind Verfahren in denen Zusammensetzungen enthaltend Siloxanoligomere gewonnen werden und Zusammensetzungen enthaltend olefinisch funktionalisierte Siloxanoligomere, die höchstens einen olefinischen Rest am Silizium-Atom aufweisen und in denen, insbesondere jeweils unabhängig,

(i) das Strukturelement $[(R^1O)_{1-x}(R^2)_xSi(A)O]_a$ in der allgemeinen Formel I in Bezug auf alle Silizium-Atome der allgemeinen Formel I zu größer gleich 1 % als T-Struktur hergestellt wird, insbesondere zu größer gleich 2 %, zu größer gleich 3 %, bevorzugt zu größer gleich 4 %, besonders bevorzugt zu größer gleich 5 %, alternativ zu größer gleich 7,5 % oder gemäß einer weiteren Alternative zu größer gleich 8 %, vorzugsweise bis kleiner 10 %, bevorzugt kleiner 9,5 %, und gegebenenfalls

(ii) dass die Strukturelemente $[(R^1O)_{1-x}(R^2)_xSi(A)O]_a$, und $[Si(B)(R^4)_y(OR^3)_{1-y}O]_b$ und $[Si(Y)_2O]_c$ in der allgemeinen Formel I unabhängig voneinander zusammen in Bezug auf alle Silizium-Atome der allgemeinen Formel I zu größer gleich 20% als D-Struktur hergestellt werden, insbesondere zu größer gleich 25 %, bevorzugt zu größer gleich 30 %, besonders bevorzugt zu größer gleich 35 %, 40 % oder auch zu 45%, und vorzugsweise kleiner 55 %, insbesondere für a größer gleich 1, b größer gleich 0, c größer gleich 0, vorzugsweise a größer gleich 1 und b= 0, c=0 oder a größer gleich 1 und b größer gleich 1 und c gleich 0, oder jeweils unabhängig a, b und c größer gleich 1, und gegebenenfalls

(iii) das Strukturelement $[(R^1O)_{1-x}R^2)_xSi(A)O]_a$ in der allgemeinen Formel I in Bezug auf alle Silizium-Atome der allgemeinen Formel I zu kleiner gleich 60 % als M-Struktur hergestellt wird,, insbesondere zu kleiner gleich 55 %, bevorzugt zu kleiner gleich 50 %, besonders bevorzugt zu kleiner gleich 45 %, und vorzugsweise größer 30 %, insbesondere größer gleich, und gegebenenfalls

(iv.a) das Strukturelement $[Si(B)(R^4)_y(OR^3)_{1-y}O]_b$ in der allgemeinen Formel I in Bezug auf alle Silizium-Atome der allgemeinen Formel I zu kleiner gleich 45 % als M-Struktur hergestellt wird, insbesondere zu kleiner gleich 40 %, bevorzugt zu kleiner gleich 38 %, vorzugsweise größer 30 %, und/oder gegebenenfalls

(iv.b) das Strukturelement $[Si(B)(R^4)_y(OR^3)_{1-y}O]_b$ in der allgemeinen Formel I zu größer gleich 10 % als M-Struktur hergestellt wird, insbesondere zu größer gleich 20 %, insbesondere zu größer gleich 25 %, bevorzugt zu größer gleich 30 %, und/oder gegebenenfalls

(v) das Strukturelement $[Si(Y)_2O]_c$ in der allgemeinen Formel I vorzugsweise zwischen 15 bis 52 % als D-Struktur hergestellt wird, oder überwiegend als D-Struktur hergestellt wird, alternativ liegen über 20 % der Strukturelemente $[Si(Y)_2O]_c$ in der allgemeinen Formel I als D-Struktur vor, insbesondere über 25 %, bevorzugt über 30 %, besonders bevorzugt über 35 %.

Gemäß einer besonders bevorzugten Alternative weist ein hergestelltes rein olefinische Siloxanoligomer, insbesondere mit den Strukturelementen $[(R^1O)_{1-x}(R^2)_xSi(A)O]_a$, in der allgemeinen Formel I zu 38 bis 60 % M-Strukturen zu 35 bis 55 % D-Strukturen und zu größer gleich 3 % T-Strukturen auf, insbesondere größer 3,5 % T-Strukturen.

Der Gehalt an M-, D-, T- oder Q-Strukturen wird nach einer dem Fachmann bekannten Methode ermittelt, wie vorzugsweise mittels $^{29}$Si-NMR.

Die Definition für M-, D-, T- und Q-Strukturen bezieht sich in der Regel auf die Anzahl gebundener Sauerstoffe in Siloxanbindungen, wie nachfolgend anhand von Alkoxysilyleinheiten beispielhaft dargestellt: Mit jeweils unabhängig R gleich $OR^1$, $OR^3$, Gruppe-A oder Gruppe B, wie vorstehend definiert. Mit M = $[-O_{1/2}-Si(R)_3]$, D = $[-O_{1/2}-Si(R)_2-O_{1/2}-]$, T = $[RSi(-O_{1/2}-)_3]$ und Q = $[Si(-O_{1/2}-)_4]$. $-O_{1/2}-$ ist immer ein Sauerstoff in einer Siloxanbindung. So kann man, um Silicone und Siloxane bzw. Silanoligomere anschaulicher beschreiben zu können, anstelle einer idealisierten formelmäßigen Beschreibung auch auf die M-, D-, T- (vernetzt) und Q-Strukturen (raumvernetzt) zurückgegriffen. Zur genaueren Nomenklatur der Benennung solcher Siloxanstrukturen sei auf das "Römpp Chemielexikon" - Stichwort: Silicone - hingewiesen. Beispielsweise können aus Baueinheiten M lediglich Dimere mit $M_2$, wie Hexaalkoxydisiloxan, gebildet werden. Zum Aufbau von Ketten werden Zusammensetzungen von Baueinheiten D und M benötigt, sodass Trimere ($M_2D$,

Octaalkoxytrisiloxan), Tetramere ($M_2D_2$) und so fort bis zu linearen Oligomeren mit $M_2D_n$ aufgebaut werden können. Zur Ausbildung von cyclischen Oligomeren werden Baueinheiten D benötigt. Auf diese Weise können beispielsweise Ringe mit $D_3$, $D_4$, $D_5$ oder höher aufgebaut werden. Verzweigte bzw. vernetzte Strukturelemente, zu denen auch Spiroverbindungen zu rechnen sind, werden erhalten, wenn Baueinheiten T und /oder Q zusammen vorliegen. Denkbare vernetzte Strukturen können als $T_n$ ($n \geq 4$), $D_nT_m$ ($m < n$), $D_nT_m$ ($n \gg m$), $D_3T_2$, $M_4Q$, $D_4Q$ und so weiter vorliegen, um nur einige denkbare Möglichkeiten zu nennen. Baueinheiten M werden auch als Stopper oder Regler bezeichnet, während D-Einheiten als Ketten- oder Ringbildner und die T- und gegebenenfalls auch die Q-Einheiten als Netzwerkbildner bezeichnet werden. So kann der Einsatz von Tetraalkoxysilanen aufgrund der vier hydrolysierbaren Gruppen und Zutritt von Wasser bzw. Feuchtigkeit Baueinheiten Q und somit die Ausbildung eines Netzwerks (raumvernetzt) bewirken. Demgegenüber können vollständig hydrolysierte Trialkoxysilane Verzweigungen, d. h. T-Einheiten $[-Si(-O-)_{3/2}]$, in einem Strukturelement bedingen, beispielsweise $MD_3TM_2$ für ein Oligomer mit einem Oligomerisierungsgrad von n=7, wobei in diesen Strukturdarstellungen die jeweiligen Funktionalitäten an den freien Valenzen der Silyloxyeinheiten zu definieren sind.

Weitere Details zum Nomenklaturverständnis von M-, D-, T- und Q-Strukturen sowie diesbezüglicher Untersuchungsmethoden sind u. a.:

- "Strukturuntersuchungen von oligomeren und polymeren Siloxanen durch hochauflösende 29Si-Kernresonanz", H.-G. Horn, H. Ch. Marsmann, Die Markromolekulare Chemie 162 (1972), 255-267,
- "Über die 1H-, 13C- und 29Si-NMR chemischen Verschiebungen einiger linearer, verzweigter und cyclischer Methyl-Siloxan-Verbindungen", G. Engelhardt, H. Jancke, J. Organometal. Chem. 28 (1971), 293-300,
- "Chapter 8 - NMR spectroscopy of organosilicon compounds", Elizabeth A. Williams, The Chemistry of Organic Silicon Compounds, 1989 John Wiley & Sons Ltd, 511-533.

Nach dem offenbarten Verfahren werden Zusammensetzungen gewonnen, in denen das Verhältnis von M : D Strukturen in den olefinischen Siloxanoligomere vorzugsweise von 1 : 2 bis 3,5 : 1 beträgt, insbesondere 1 : 2 bis 2,5 : 1, alternativ 1 : 2 bis 1,5 : 1, insbesondere mit einem Gehalt an monomeren Alkoxysilanen von kleiner gleich 3 % bis 0 %, vorzugsweise von kleiner gleich 2 %, besonders bevorzugt von kleiner gleich 1 %, wobei vorzugsweise der Gehalt an T-Strukturen in Summe größer gleich 1 %, bevorzugt größer gleich 3 % ist. Zusammensetzungen, die die vorgenannten Strukturen aufweisen verfügen aufgrund des verminderten Gehaltes monomerer Alkoxysilane über einen beständigen Vernetzungsgrad und weisen einen besonders geringen Chlor-Gehalt auf. Ein hervorzuhebender Vorteil der erfindungsgemäßen Zusammensetzungen und des erfindungsgemäßen Verfahrens ist, dass die hergestellten olefinischen Siloxanoligomere, insbesondere die Vinyloligomere, anders als die bekannten Oligomere keine weitere Aufarbeitung, wie Destillation der Zusammensetzungen der Siloxanoligomere benötigen. Das hergestellte oligomere Sumpfprodukt zeigt die gleiche oder eine bessere Performance wie bekannte, jedoch mittels Destillation gereinigte Siloxanoligomere.

Ein besonderer Vorteil der erfindungsgemäß hergestellten olefinisch-funktionalisierten Siloxanoligomere ist, dass der erniedrigte Gehalt an Chlor und der erhöhte Gehalt an T-Strukturen der Siloxanoligomere unmittelbar die Verarbeitbarkeit der Siloxanoligomere mit Polymeren verbessert, beispielsweise bei der Knetung oder Compoundierung. Konkret verbessert sich der Schmelzindex, so dass der Energieaufwand bei der Verarbeitung sinkt. Ferner nimmt die Korrosion der eisenhaltigen Maschinen ab, da der Chloridgehalt weiter gesenkt werden konnte. Zudem ist die Wasseraufnahmefähigkeit der mit den erfindungsgemäßen Siloxanoligomeren compoundierten Polymere reduziert sowie häufig deren Bruchdehnung als auch meist die Zugfestigkeit verbessert. Die verminderte Wasseraufnahmefähigkeit ist in den späteren Anwendungsfeldern vorteilhaft, beispielsweise bei der Herstellung von gefüllten Kabelmassen, insbesondere für Kabel, die in der Erde verlegt werden sollen und anhaltender Feuchtigkeit ausgesetzt sind. Es kann bevorzugt sein, dass die Zusammensetzung und/oder das Siloxanoligomer zudem Trialkylsilan-Gruppen aufweisen, wie Trimethylsilan oder Triethylsilan-Gruppen, bspw. durch die Zugabe von Alkoxytrialkylsilan, um den Oligomerisierungsgrad einzustellen.

Es werden Zusammensetzungen von Gemischen olefinischer Siloxanoligomere gewonnen, bei denen insbesondere mehr als 20 Gew.-% der Siloxanoligomere einen Oligomerisierungsgrad von größer gleich 4, optional größer gleich 8 aufweisen, d. h. die Anzahl der Silizium-Atome (n) je Oligomer ist größer gleich 4, optional größer gleich 8 (n $\geq$ 8), weiter bevorzugt ist zugleich der Anteil an Siloxanoligomeren mit T-Struktur größer gleich ($\geq$) 1 %, insbesondere größer gleich 2 %, bevorzugt größer gleich 3 %, wie 3 bis 10 %, wobei gleichzeitig die Viskosität vorzugsweise kleiner gleich $\leq$ 3.000 mPa s beträgt, insbesondere kleiner gleich 1.000 mPa s und vorzugsweise größer gleich 5 mPa s ist, besonders bevorzugt kleiner gleich 500 mPa s und insbesondere größer gleich 10 mPa s. Alternativ ist es bevorzugt, wenn die Viskosität der Zusammensetzung enthaltend olefinisch funktionalisierte Siloxane kleiner gleich 3.000 mPa s ist und größer gleich 7 mPa s, bevorzugt kleiner gleich 2.500, insbesondere kleiner gleich 500 mPa s und größer gleich 10 mPa s, alternativ bevorzugt kleiner gleich 1.000 mPa s, insbesondere kleiner gleich 500 mPa s und größer gleich 12 mPa s. Derartige Zusammensetzungen lassen sich hervorragend mit Elastomeren oder Thermoplasten compoundieren und weisen die vorstehend genannten besseren Eigenschaften auf.

Generell können die Siloxanoligomere lineare und/oder cyclische Oligomere mit M-, D-Strukturen und T-Struktur sein. Erst bei Zugabe von Tetraalkoxysilan während der Herstellung oder vor der Verarbeitung der Oligomere werden Siloxanoligomere mit M-, D-, Q- und ggf. T-Strukturen ausgebildet. Erfindungsgemässe Zusammensetzungen weisen Siloxanoligomere auf, in denen die Summe aus (a + b) eine ganze Zahl größer gleich 2 ist, insbesondere von größer gleich 4 bis 30, vorzugsweise größer gleich 6 bis 30, optional größer gleich 8 bis 30 und c gegebenenfalls größer gleich 1 ist, wie beispielsweise 1 bis 20, insbesondere 2 bis 15. Bei zu hohen Oligomerisierungsgraden können keine homogenen und reproduzierbaren Produkteigenschaften bei den Siloxanoligomeren erzielt werden. Zur Einstellung des Oligomerisierungsgrades während der Herstellung der Zusammensetzung kann es daher bevorzugt sein, für einen Kettenabbruch zu einem gewünschten Zeitpunkt, ein Alkoxytrialkylsilan, wie vorzugsweise ein Ethoxytrimethylsilan oder Methoxytrimethylsilan zur herzustellenden Zusammensetzung zuzusetzen.

Die nach dem Verfahren gewonnenen Zusammensetzungen können mindestens 20 Gew.-% an Siloxanoligomeren aufweisen, bei denen der Oligomerisierungsgrad an olefinischen-funktionalisierten Siloxanoligomeren größer gleich 4 ist, insbesondere größer 6, optional größer gleich 8. Dabei ist es weiter bevorzugt, wenn bei mindestens 20 Gew.-% der Oligomere, insbesondere der Formel I, die Summe aus (a + b) eine ganze Zahl größer gleich 4, alternativ größer gleich 5 ist, insbesondere ist die Summe aus (a+b) größer gleich 6, optional größer gleich 8, mit a größer gleich 1 und b gleich 0 oder b größer gleich 1, vorzugsweise jeweils a und b unabhängig voneinander größer gleich 2, vorzugsweise größer gleich 3, insbesondere unabhängig größer gleich 4, und gegebenenfalls mit c in (a+b+c) größer gleich 1 ist. Gemäß einer bevorzugten Alternative oder zusätzlich zu den vorgenannten Merkmalen weisen 95 % bis 100 % der Siloxanoligomere einen Oligomerisierungsgrad von 2 bis 20 auf, bevorzugt von 2 bis 6, alternativ 2 bis 7, vorzugsweise von 3 bis 10 auf.

Gemäß einer bevorzugten Alternative ist b größer gleich 1, insbesondere größer gleich 2, bevorzugt größer gleich 4. Weiter bevorzugt weisen mindestens 20 % der olefinisch funktionalisierten Siloxanoligomere, insbesondere der Formel I, einen Oligomerisierungsgrad (a+b+c) größer gleich 4, optional größer gleich 8 auf, mit a größer gleich 1 und b größer gleich 1 und gegebenenfalls c größer gleich 1, wobei der Anteil an Siloxanoligomeren mit T-Struktur größer gleich ($\geq$) 1 % ist, und vorzugsweise die Viskosität kleiner gleich $\leq$ 1.000 mPa s und insbesondere größer 5 mPa s beträgt. Weiter bevorzugt ist der Anteil an T-Strukturen der Siloxanoligomere größer gleich 3 %, alternativ größer gleich 1 bis 10 %, wobei gleichzeitig die Viskosität kleiner gleich 500 mPa s beträgt.

Die nach einer alternativen Verfahrensführung gewonnenen Zusammensetzung weisen zusätzlich oder alternativ zu einem oder mehreren der vorgenannten Merkmale vorzugsweise nach vollständiger Hydrolyse aller Alkoxygruppen einen Alkoholgehalt von kleiner gleich 20 Gew.-% auf, insbesondere kleiner gleich 18 Gew.-%, bevorzugt kleiner gleich 16 Gew.-%, weiter bevorzugt kleiner gleich 15 Gew.-% bis kleiner gleich 0,1 Gew.-%, ebenfalls bevorzugt kleiner gleich 12 Gew.-% bis kleiner gleich 1 Gew.-% mit der Maßgabe, dass nur so viel Wasser zugesetzt wird, wie zur Hydrolyse benötigt wird. Eine weitere Verdünnung erfolgt zur Bestimmung nicht.

Zusätzlich oder alternativ zu einem oder mehreren der vorgenannten Merkmale weist die nach dem Verfahren gewonnene Zusammensetzung vorzugsweise ein Molverhältnis von A-Resten zu B-Resten von 1 : 0 bis 1 : 8 auf, vorzugsweise von etwa 1 : 0 bis 1 : 4, besonders bevorzugt ein Verhältnis von 1 : 0 bis 1 : 2, vorzugsweise 1 : 0 bis 1 : 1, bevorzugt um 1 : 1.

Dabei ist es weiter bevorzugt, wenn die nach dem Verfahren gewonnene Zusammensetzung olefinische Siloxanoligomere aufweist, in denen

(i) das Verhältnis der Silizium-Atome ausgewählt aus olefinisch funktionalisierten Silizium-Atomen und aus mit einem gesättigten Kohlenwasserstoff funktionalisierten Silizium-Atomen zu Alkoxygruppen im Siloxanoligomer oder ggf. in der allgemeinen Formel I von 1 : 03, bis 1 : 3,5 ist, insbesondere 1 : 0,3 bis 1 : 2,0, besonders bevorzugt 1 : 1,0 bis 1 : 1,8, ebenfalls bevorzugt sind jedoch auch 1 : 0,4 bis 1 : 1,8, 1 : 0,4 bis 1 : 1,6, bevorzugt 1 : 0,4 bis 1 : 1,5, alternativ bei Zugabe von mehr Wasser von 1 : 0,4 bis 1 : 0,9, insbesondere von 1 : 0,4 bis 1 : 0,8, ebenfalls bevorzugt 1 : 0,4 bis 1 : 0,7, mit der Maßgabe, dass das olefinisch funktionalisierte Siloxanoligomer aus Alkoxysilanen der allgemeinen Formel II und III abgeleitet ist

(ii) das Verhältnis der Silizium-Atome ausgewählt aus olefinisch funktionalisierten Silizium-Atomen und aus mit einem gesättigten Kohlenwasserstoff funktionalisierten Silizium-Atomen zu Alkoxygruppen im Siloxanoligomer oder ggf. in der allgemeinen Formel I von 1 : 0,9 bis 1 : 2,5 beträgt, insbesondere von 1 : 0,9 bis 1 : 1,5 beträgt, insbesondere von 1 : 1,0 bis 1 : 1,4, alternativ bei Zugabe von mehr Wasser von 1 : 1,0 bis 1 : 1,3, bevorzugt von 1 : 1,0 bis 1 : 1,2 mit der Maßgabe, dass das olefinisch funktionalisierte Siloxanoligomer aus Alkoxysilanen der allgemeinen Formel II und IV und der Formel III abgeleitet ist.

Gemäß einer Alternative werden Zusammensetzungen von rein olefinischsubstituierten Siloxanoligomeren hergestellt, insbesondere der Formel I mit a gleich eine ganze Zahl größer gleich 2, wobei bevorzugt mindestens 20 Gew.-% der Siloxanoligomere mit a größer gleich 4, optional größer gleich 8 vorliegen. Bevorzugte olefinische Gruppen sind lineare, verzweigte oder cyclische, Alkenyl-, Cycloalkenyl-alkylen-funktionelle Gruppen mit jeweils 2 bis 16 C-Atomen, insbesondere mit 2 bis 8 C-Atomen, bevorzugt eine Vinyl-, Allyl-, Butenyl-, wie 3-Butenyl-, Pentenyl-, Hexenyl-, Ethylhexenyl-, Heptenyl-, Octenyl-, Cyclohexenyl-C1 bis C8-alkylen-, vorzugsweise Cyclohexenyl-2-ethylen-, wie 3'-Cyclohexenyl-2-ethylen- und/oder Cyclohexadienyl-C1 bis C8-alkylen-, vorzugsweise Cyclohexadienyl-2-ethylen-Gruppe. Besonders bevorzugt ist Vinyl-. Gegebenenfalls kann die Zusammensetzung auf einem Siloxanoligomer beruhen, das in Gegenwart von Tetraalkoxysilan hergestellt wurde. Entsprechend einer zweiten bevorzugten Alternative werden Zusammensetzungen von olefinisch- und Alkyl-substituierten Siloxanoligomeren hergestellt, insbesondere der Formel I mit a größer gleich 1 und b größer gleich 1, und insbesondere mindestens 20 Gew.-% der Siloxanoligomere, insbesondere der Formel I, weisen (a+b) gleich eine ganze Zahl größer gleich 4, optional größer gleich 8 auf. Bei diesen Zusammensetzungen ist es weiter bevorzugt, wenn das Molverhältnis von A-Resten zu B-Resten 1 : 0 bis 1 : 8 ist, insbesondere ist das Verhältnis von a : b gleich 1 : 0 bis 1 : 8, insbesondere 1 : 0 oder 1 : 1 bis 1 : 8. Gegebenenfalls kann die Zusammensetzung auf einem Siloxanoligomer beruhen, das in Gegenwart von Tetraalkoxysilan hergestellt wurde.

Entsprechend einer weiteren bevorzugten Alternative werden Zusammensetzungen von Vinyl- und Alkyl-substituierten Siloxanoligomeren hergestellt, insbesondere der Formel I mit a größer gleich 1 und b größer gleich 1, und insbesondere mit 20 Gew.-% der Siloxane mit (a+b) gleich eine ganze Zahl größer gleich 4, optional größer gleich 8, vorzugsweise mit einem Molverhältnis von A-Resten zu B-Resten 1 : 0 bis 1 : 8, insbesondere von a : b gleich 1 : 0 bis 1 : 8, insbesondere 1 : 0 oder 1 : 1 bis 1 : 8. Gegebenenfalls können die Zusammensetzungen auf einem Siloxanoligomer beruhen, das in Gegenwart von Tetraalkoxysilan hergestellt wurde.

Weiter bevorzugt umfasst die Zusammensetzung olefinisch funktionalisierte Siloxanoligomere mit Strukturelementen, die erhältlich sind bzw. abgeleitet sind aus mindestens einem der Alkoxysilane, aus olefinisch-funktionalisierten Alkoxysilanen der allgemeinen Formel II und gegebenenfalls aus mit einem Alkyl-funktionalisierten Alkoxysilan der Formel III, und gegebenenfalls aus einem Tetraalkoxysilan der allgemeinen Formel IV gleich $Si(OR^3)_4$, wobei vorzugsweise der Gehalt an Silizium-Atomen monomerer Alkoxysilane unter 1% bis 0 % beträgt und der Gehalt an Strukturelementen der Siloxanoligomeren mit T-Strukturen größer gleich 1 % ist, insbesondere 1 bis 10%, weiter können mindestens 20 Gew.-% der Siloxanoligomere einen Oligomerisierungsgrad von (a+b+c) von größer gleich 4, optional größer gleich 8 aufweisen.

Unter einem Strukturelement - einer monomeren Siloxan-Einheit - wird durchgängig die einzelne Baueinheit M, D, T oder Q verstanden, d. h. die aus einem Alkoxysubstituierten Silan abgeleitete Baueinheit, die sich durch zumindest teilweise Hydrolyse bis gegebenenfalls vollständige Hydrolyse und zumindest teilweise Kondensation in einem Kondensat bildet. Erfindungsgemäß können sich insbesondere die Siloxanoligomere mit den folgenden Strukturelementen bilden, wie vorzugsweise: $(R^1O)[(R^1O)_{1-x}(R^2)_xSi(A)O]_aR^1$; $(R^1O)[(R^1O)_{1-x}(R^2)_xSi(A)O]_a$; $[(R^1O)_{1-x}(R^2)_xSi(A)O]_a$; $[(R^1O)_{1-x}(R^2)_xSi(A)O]_aR^1$, $(R^3O)[Si(Y)_2O]c$; $[Si(Y)_2O]_cR^3$, $(R^3O)[Si(Y)_2O]cR^3$; $[Si(Y)_2O]_c$; $(R^3O)[Si(B)(R^4)_y(OR^3)_{1-y}O]_bR^3$, $[Si(B)(R^4)_y(OR^3)_{1-y}O]_bR^3$, $[Si(B)(R^4)_y(OR^3)_{1-y}O]_b$; $(R^3O)[Si(B)(R^4)_y(OR^3)_{1-y}O]_bR^3$ die kettenförmige, cyclische und/oder vernetzte Strukturen bilden können und in Gegenwart von Tetraalkoxysilanen oder deren Hydrolyse und/oder Kondensationsprodukten können sich auch raumvernetzte Strukturen ausbilden. Die Strukturelemente mit freien Valenzen am Si-Atom sind kovalent über -O-Si und die freien Valenzen am O-Atom mit -Si verbrückten Bindungen anderer Strukturelemente, Alkyl- oder ggf. Wasserstoff abgesättigt. Die Strukturelemente können dabei eine regellose oder auch statistische Anordnung in den Kondensaten einnehmen, die, wie der Fachmann weiß, auch durch die Zugabereihenfolge und die Hydrolyse- und/oder Kondensationsbedingungen gesteuert werden können. Die allgemeine Formel I gibt nicht die tatsächlich vorliegende Struktur oder Zusammensetzung wider. Sie entspricht einer idealisierten Darstellungsmöglichkeit.

Die Zusammensetzung enthält bevorzugt Siloxanoligomere, die durch statistische und/oder regellose Homo- oder Co-Hydrolyse und/oder Homo- oder Co-Kondensation und/oder Blockkondensation der genannten Strukturelemente, basierend auf den erfindungsgemäß mit A oder B-Resten substituierten Alkoxysilanen der Formeln II, III und/oder IV, entstehen und/oder sich unter den gewählten Versuchsbedingungen bilden.

Das Substitutionsmuster der Strukturelemente gilt entsprechend auch für die nicht in idealisierter Form dargestellten kettenförmigen, cyclischen, vernetzten und/oder raumvernetzten Siloxanoligomere in der Zusammensetzung, wobei die Silyl-Gruppen der Siloxanoligomere unabhängig, wie folgt substituiert sein können: mit Y einem $OR^3$ oder in vernetzten und/oder raumvernetzten Strukturen unabhängig voneinander $OR^3$ oder $O_{1/2}$ - in einer Siloxanbindung, mit Reste A und/oder B, wie definiert, $R^3$ entspricht in den Siloxanoligomeren im Wesentlichen einem Alkyl-Rest, wie für $R^3$ definiert, wobei in vernetzten und/oder raumvernetzten Strukturen auch aus den Resten $OR^3$ jeweils unabhängig voneinander Siloxanbindungen mit $O_{1/2}$ gebildet werden können bzw. diese Reste unabhängig voneinander als $O_{1/2}$ vorliegen können und ggf. unabhängig mit $R^2$ und/oder $R^4$ und die wie definiert einem Alkyl-Rest mit 1 bis 15 C-Atomen entsprechen, mit $-OR^1$, $R^1$ kann ebenfalls wie definiert einem Alkyl-Rest mit 1 bis 4 C-Atomen sein.

Offenbart ist auch eine Zusammensetzung enthaltend olefinisch funktionalisierte Siloxanoligomere, insbesondere mindestens ein Siloxanoligomer gemäß der idealisierten Formel I, die als weitere Komponenten mindestens ein organisches Lösemittel, ein organisches Polymer, Wasser, Salz, Füllstoff, Additiv, Pigment oder eine Mischung mindestens zwei der genannten Komponenten enthält. Die Komponenten können während der Herstellung der Zusammensetzung als auch zu einem späteren Zeitpunkt der Zusammensetzung zugesetzt werden.

Ein besonderer Vorteil der Zusammensetzung liegt darin, dass sie herstellbedingt einen sehr geringen Gehalt an Chlor aufweist und somit bei einer Verarbeitung in Kabelmassen zu einer erheblichen Verbesserung der Brandschutzeigenschaften führt. Somit ist ein wesentlicher Vorteil der Zusammensetzung, dass sie als Sumpfprodukt, ggf. nach Abtrennung des Hydrolysealkohols und ggf. zugesetzten Lösemittels, direkt in wirtschaftlicher Weise erfindungsgemäß verwendet werden kann. Ein weiterer Vorteil der erfindungsgemäßen Zusammensetzungen ist, dass sie durch den erhöhten Anteil an T-Strukturen, bei guter Verarbeitbarkeit in Extrudern zu einer verbesserten Bruchdehnung der damit verarbeiteten Thermoplasten und Elastomeren führen und auch die Zugeigenschaften verbessert werden konnten.

Die offenbarten Zusammensetzungen olefinisch-funktionalisierter Siloxanoligomere weisen einen Gehalt an Alkohol in Bezug auf die Zusammensetzung, vorzugsweise an freiem Alkohol, von unter 2 Gew.-% bis 0,0001 Gew.-% auf, insbesondere unter 1,8 Gew.-%, bevorzugt unter 1,5 Gew.-%, weiter bevorzugt unter 1,0 Gew.-%, besonders bevorzugt unter 0,5 Gew.-% bis zur Nachweisgrenze. Dabei weist eine Zusammensetzung diesen geringen Gehalt an Alkohol, vorzugsweise freien Alkohol, über mindestens 3 Monate, vorzugweise über einen Zeitraum von 6 Monaten auf. Diese geringen Gehalte an VOC können durch das erfindungsgemäße Verfahren sichergestellt werden, das besonders Chlor-arme Siloxane mit geringem Alkoxygehalt bereitstellt.

Gegenstand der Erfindung ist ein Verfahren zur Herstellung einer Zusammensetzung enthaltend olefinisch funktionalisierte Siloxanoligomere, sowie insbesondere auch Zusammensetzungen erhältlich nach diesem Verfahren, indem (mindestens)

(i) ein olefinisch-funktionalisiertes Alkoxysilan der allgemeinen Formel II,

$$A\text{-}Si(R^2)_x(OR^1)_{3-x} \qquad (II)$$

, wobei in Formel II A einem olefinischen Rest entspricht, der insbesondere ausgewählt ist aus einer linearen, verzweigten oder cyclischen Alkenyl- oder Cycloalkenyl-alkylen-funktionellen Gruppe mit jeweils 2 bis 16 C-Atomen, $R^2$ unabhängig einem linearen, verzweigten oder cyclischen Alkyl-Rest mit 1 bis 15 C-Atomen und x gleich 0 oder 1 und $R^1$ unabhängig einem linearen, verzweigten und/oder cyclischen Alkyl-Rest mit 1 bis 4 C-Atomen entsprechen, (ii) in Gegenwart eines Hydrolyse- und/oder Kondensationskatalysators, insbesondere von HCl, gesättigten oder ungesättigten organischen Säuren, wie Ameisensäure oder Essigsäure, und/oder Fettsäuren, wie Myristinsäure, und/oder mehrbasige organische Säuren, wie Zitronensäure, Fumarsäure,

(i.1) optional mit (mindestens) einem Alkoxysilan der Formel III,

$$B\text{-}Si(R^4)_y(OR^3)_{3-y} \qquad (III),$$

wobei in Formel III B einem gesättigten Kohlenwasserstoff-Rest der insbesondere ausgewählt ist aus einem linearen, verzweigten oder cyclischen Alkyl-Rest mit 1 bis 16 C-Atomen, $R^3$ jeweils unabhängig voneinander einem linearen, verzweigten und/oder cyclischen Alkyl-Rest mit 1 bis 4 C-Atomen und $R^4$ einem linearen, verzweigten oder cyclischen Alkyl-Rest mit 1 bis 15 C-Atomen entsprechen und y gleich 0 oder 1 ist, und (i.2) optional mit (mindestens) einem Tetraalkoxysilan der Formel IV, wobei in Formel IV $R^3$ jeweils unabhängig voneinander ein linearer, verzweigter und/oder cyclischer Alkyl-Rest mit 1 bis 4 C-Atomen ist,

$$Si(OR^3)_4 \qquad (IV),$$

und

(iii) mit einer definierten Menge Wasser, insbesondere von größer gleich 0,5 bis 1,5 Mol, insbesondere von 0,70 bis 1,5 mol, bevorzugt von größer gleich 0,75 bis 1,5 Mol, besonders bevorzugt von 1,0 bis 1,5 Mol, alternativ bevorzugt 0,75 bis 1,0 Mol Wasser je Mol Silizium-Atome der eingesetzten Alkoxysilane, gegebenenfalls in Gegenwart eines Lösemittels, vorzugsweise Alkohol, insbesondere in Gegenwart von je 0,001 bis 5,0 Volumeneinheiten Alkohol je Volumeneinheit Alkoxysilan, zu den Siloxanoligomeren umgesetzt werden, insbesondere mit x = 0 und y = 0, und (iv) der Hydrolysealkohol und das gegebenenfalls vorliegende Lösemittel im Wesentlichen abgetrennt werden, und (v) mindestens einmal während Schritt (iv) oder nachfolgend jeweils eine definierte Menge Alkohol nachdosiert und abtrennt, vorzugsweise durch eine Destillation, insbesondere werden je Volumeneinheit Alkoxysilan 0,001 bis 5,0 Volumeneinheiten Alkohol zudosiert, und insbesondere eine Zusammensetzung enthaltend ein Siloxanoligomer bzw. Siloxanoligomere hergestellt wird,

(vi) insbesondere mit einem Gehalt an Chlor, insbesondere Gesamtchlorid, in der Zusammensetzung kleiner gleich 100 mg/kg bis 0 mg/kg erhalten wird, insbesondere kleiner gleich 70 mg/kg, vorzugsweise kleiner gleich 50 mg/kg, wobei weiter bevorzugt der Gehalt an hydrolysierbarem Chlorid kleiner gleich 20 mg/kg bis 0 mg/kg ist, bevorzugt kleiner gleich 10 mg/kg, weiter bevorzugt kleiner gleich 5 mg/kg, und

(vii) ein Gewichtsmittel des Molekulargewichts (Mw) größer 410 g/mol erhalten wird, insbesondere ist das Gewichtsmittel des Molekulargewichts (Mw) größer gleich 410 g/mol und das Zahlenmittel des Molekulargewichts (Mn) größer gleich 370 g/mol, wobei die Polydispersität als Quotient aus Mw/Mn bei 1,00 bis 1,25 liegt, und gegebenenfalls (ix) größer gleich 1 % der Silizium-Atome im olefinisch funktionalisierten Siloxanoligomer in Bezug auf die Gesamtsumme an Silizium-Atomen im Siloxanoligomer als T-Struktur vorliegen, vorzugsweise größer gleich 3 bis kleiner 10 %, bevorzug größer gleich 4 bis 10.

Erfindungsgemäße wird die Zusammensetzung enthaltend olefinisch funktionalisierte Siloxanoligomere, insbesondere im Schritt (v) nach dem Abtrennen des Alkohols oder nach Abschluss des Schrittes (v), insbesondere im Anschluss an Schritt (v) als Sumpfprodukt gewonnen.

Gemäße einer besonders bevorzugten Ausführungsform wird als Lösemittel ein Alkohol eingesetzt, der vorzugsweise ausgewählt ist aus Methanol, Ethanol oder einem Gemisch enthaltend einen oder beide Alkohole.

Nach dem erfindungsgemäßen Verfahren ist es besonders bevorzugt, wenn in Schritt (iii) mit einer definierten Menge Wasser in Gegenwart eines Alkohols in einer Menge von je 0,001 bis 5,0 Volumeneinheiten Alkohol je Volumeneinheit Alkoxysilan, umgesetzt wird und/oder in Schritt (v) mindestens einmal während Schritt (iv) oder nachfolgend eine definierte Menge Alkohol nachdosiert, und abgetrennt wird, insbesondere wird der Alkohol destillativ entfernt. Vorzugsweise kann 1- bis 6-mal, vorzugsweise 2- bis 6-mal Alkohol in den genannten Mengen zudosiert werden. Der Alkohol entspricht vorzugsweise dem gebildeten Hydrolysealkohol.

Über die Häufigkeit der Zugabe und/oder die zugegebene Menge an Lösemittel, vorzugsweise Alkohol, kann zusammen mit der Wassermenge das Molekulargewicht und die Molekulargewichtverteilung optimal eingestellt werden und auf diese Weise eine Bildung hochmolekularer Oligomere weitgehend vermieden werden. Die unerwünschten höhermolekularen Oligomere werden nur mit einem geringen Gehalt gebildet.

Vorzugsweise wird in (vii), im Schritt (v) nach dem Abtrennen des Alkohols oder im Anschluss an Schritt (v) eine Zusammensetzung gewonnen mit olefinisch funktionalisierten Siloxanoligomeren, deren Molekulargewicht Mw zu größer gleich 85 % (Flächen-%, GPC) größer gleich 250 bis 750 g/mol in Bezug auf die Gesamtzusammensetzung beträgt.

Weiter ist es bevorzugt, wenn insbesondere in (vii), im Schritt (v) nach dem Abtrennen des Alkohols oder im Anschluss an Schritt (v) eine Zusammensetzung gewonnen wird mit olefinisch funktionalisierten Siloxanoligomeren, deren Molekulargewicht Mw zu größer gleich 95 % (Flächen-%, GPC) größer gleich 250 bis 1000 g/mol in Bezug auf die Gesamtzusammensetzung beträgt.

Gemäß einer besonders bevorzugten Verfahrensvariante wird in Schritt (iii) mit einer definierten Menge Wasser in Gegenwart eines Alkohols in einer Menge von je 0,05 bis 2,5 Volumeneinheiten Alkohol je Volumeneinheit Alkoxysilan umsetzt, insbesondere mit 0,1 bis 2,0 Volumeneinheiten Alkohol je Volumeneinheit Alkoxysilan, bevorzugt 0,2 bis 1,5, besonders bevorzugt 0,2 bis 1,0 oder 0,2 bis 0,9. Vorzugweise 0,5 plus/minus 0,4 Volumeneinheiten Alkohol je Volumeneinheit Alkoxysilan.

Dabei werden vorzugsweise bei einer Umsetzung von VTMO oder VTEO zur Verdünnung plus Dosierung 0,5 bis 2,5 oder 0,5 bis 2,0 und/oder in Schritt (v) mindestens einmal während Schritt (iv) oder nachfolgend eine definierte Menge Alkohol nachdosiert und abgetrennt. Zur Nachdosierung in (v), (iv) oder nachfolgend können mehrfach ebenfalls 0,001 bis 5 Volumeneinheiten, insbesondere 0,1 bis 2,5 Volumeneinheiten Alkohol je Volumeneinheit Alkoxysilan zudosiert werden. Diese Maßnahmen können beliebig wiederholt werden, vorzugsweise 1 bis 10 mal. Dabei kann der zuvor abdestillierte und aufgereinigte Alkohol wieder eingesetzt werden. Gemäß dem erfindungsgemäßen Verfahren kann in einfacher und wirtschaftlicher Weise eine Zusammensetzung enthaltend olefinisch funktionalisierte Siloxanoligomere hergestellt werden, in denen größer gleich 1 % der Silizium-Atome im olefinisch funktionalisierten Siloxanoligomer in Bezug auf die Gesamtsumme an Silizium-Atomen im Siloxanoligomer als T-Struktur erhalten werden, insbesondere 0,5 bis 10, vorzugsweise 1,0 bis 10,0%.

Ebenfalls kann nach dem erfindungsgemäßen Verfahren in einfacher und wirtschaftlicher Weise eine Zusammensetzung enthaltend olefinisch funktionalisierte Siloxanoligomere hergestellt werden, deren Gehalt an Silizium-Atomen monomerer Alkoxysilane, insbesondere der Formel II, III und/oder IV, oder deren Hydrolyseprodukte kleiner gleich 3 %, insbesondere bis zur Nachweisgrenze oder bis 0%, in Bezug auf alle Silizium-Atome erhalten wird, bevorzugt kleiner gleich 2 %, weiter bevorzugt kleiner gleich 1 %, besonders bevorzugt kleiner gleich 0,5 %.

Besonders bevorzugt ist es nach dem erfindungsgemäßen Verfahren, wenn in Schritt (v) mit einer definierten Menge Wasser in Gegenwart eines Alkohols in einer Menge von je 0,001 bis 5,0 Volumeneinheiten Alkohol je Volumeneinheit Alkoxysilan, umgesetzt wird und/oder in Schritt (vii) mindestens einmal während Schritt vi oder nachfolgend eine definierte Menge Alkohol nachdosiert, und abgetrennt wird, insbesondere wird der Alkohol destillativ entfernt. Vorzugsweise kann 1- bis 6-mal, vorzugsweise 2- bis 6-mal Alkohol in den genannten Mengen zudosiert werden. Der Alkohol entspricht vorzugsweise dem gebildeten Hydrolysealkohol.

Vorzugsweise liegt das Verhältnis des Alkohols in Schritt (iii) zu Schritt (v) von 1: 5 bis 5 : 1, bevorzugt um 1 : 2 bis 2 : 1, besonders bevorzugt um 1 : 1. Weiter ist es in dem erfindungsgemäßen Verfahren bevorzugt, wenn mindestens einmal während Schritt vi oder nachfolgend eine definierte Menge Alkohol von 0,0001 bis 5,0 Volumeneinheiten Alkohol je Volumeneinheit Alkoxysilan zudosiert wird und nachfolgend abtrennt wird, insbesondere wird der Alkohol destillativ entfernt. Dazu wird unter vermindertem Druck und erhöhter Temperatur destilliert, insbesondere bei einem Druck kleiner 300 mbar, bevorzugt kleiner 180 mbar, besonders bevorzugt kleiner 120 mbar, wobei der Druck vorzugsweise so eingestellt wird, dass die Temperaturbelastung des Sumpfproduktes bei um 90 °C oder geringerer Temperatur liegt, insbesondere von 0 bis 90 °C, vorzugsweise 20 bis 90 °C.

Bevorzugt kann im Sinne von Schritt (v) des erfindungsgemäßen Verfahrens auch mehr als einmal eine definierte Menge Alkohol nach- bzw. zudosiert werden, bevorzugt 2- bis 5-mal, insbesondere 2-, 3- oder 4-mal. Die Dosierung kann jeweils in einer Portion oder jeweils kontinuierlich erfolgen, wobei eine jeweilig kontinuierliche Dosierung vorteilhaft über 1 Minute bis zu einer Stunde erfolgen kann. Darüber hinaus erfolgt die Dosierung bzw. Nachdosierung des Alkohols bevorzugt unter den Flüssigkeitsspiegel des Reaktionsprodukts im Sumpf. Dabei kann der Sumpf zusätzlich durchmischt werden, beispielsweise durch Rühren. Bevorzugt wird annähernd das gleiche Volumen an Alkohol nachdosiert, wie zuvor während der Umsetzung in Schritt (iii) eingesetzt wurde. Vorteilhaft kann man jeweils pro Volumeneinheit Trialkoxysilan 0,001 bis 5 Volumeneinheiten Alkohol einsetzen.

In dem erfindungsgemäßen Verfahren ist es bevorzugt, wenn die Alkoxysilane der Formeln II, III und/oder IV in Gegenwart eines sauren Katalysators, insbesondere mit Chlorwasserstoff, zumindest partiell hydrolysiert und kondensiert werden und, vorzugsweise wird der Alkohol, insbesondere umfassend den in Schritt v eingesetzten Alkohol, den Hydrolysealkohol sowie der zugesetzte Alkohol aus Schritt vii im Wesentlichen vollständig entfernt.

Gemäß einer bevorzugten Ausführungsform wird ein Alkenyl-funktionalisiertes Alkoxysilan der allgemeinen Formel II gegebenenfalls zusammen mit einem Alkylalkoxysilan der allgemeinen Formel III in Gegenwart eines Kondensationskatalysators umgesetzt. Weiter bevorzugt werden jeweils ein Alkenyltrialkoxysilan und gegebenenfalls ein Alkyltrialkoxysilan umgesetzt. Die Umsetzung kann optional in Gegenwart eines Lösemittels erfolgen, vorzugsweise wird der korrespondierende Alkohol des Alkoxysilans eingesetzt. Besonders vorteilhaft kann in dem erfindungsgemäßen Verfahren pro Volumeneinheit Alkoxysilan, insbesondere Trialkoxysilan, 0,001 bis 5 Volumeneinheiten des korrespondierenden Alkohols eingesetzt werden. Weiter bevorzugt werden von 0,1 bis 4, insbesondere 0,2, 0,3, 0,4, 0,5, 0,6, 0,7, 0,8, 0,9, 1, 1,1, 1,2, 1,3, 1,4, 1,5, 1,6, 1,7, 1,8, 1,9, 2, 2,5, 3, 3,5 Volumeneinheiten je Volumeneinheit Trialkoxysilan eingesetzt.

Das einsetzte Lösemittel und/oder der eingesetzte Alkohol sind wasserfrei, insbesondere werden das Lösemittel oder der Alkohol mit einem Wassergehalt von kleiner gleich 1 Gew.-ppm eingesetzt. Bei Lösemitteln mit einem Gehalt an Wasser ist dieser Wassergehalt bei der Umsetzung zu berücksichtigen.

Vorzugsweise wird als olefinisch-funktionalisiertes Alkoxysilan ein Silan der allgemeinen Formel II einsetzt,

$$A\text{-}Si(R^2)_x(OR^1)_{3-x} \qquad (II)$$

mit A ausgewählt aus einer linearen, verzweigten oder cyclischen Alkenyl- oder Cycloalkenyl-alkylen-funktionellen Gruppe mit jeweils 2 bis 18 C-Atomen, insbesondere mit 2 bis 16 C-Atomen, bevorzugt mit 2 bis 8 C-Atomen, weiter bevorzugt eine Alkenyl-Gruppe mit ein bis zwei Doppelbindungen, bevorzugt eine Vinyl-, Allyl-, Butenyl-, Pentenyl-, Hexenyl-, Ethylhexenyl-, Heptenyl-, Octenyl-, Cyclohexenyl-C1 bis C8-alkylen-, vorzugsweise Cyclohexenyl-2-ethylen-, wie 3'-Cyclohexenyl-2-ethylen-, und/oder Cyclohexadienyl-C1 bis C8-alkylen-, besonders vorzugsweise eine Cyclohexadienyl-2-ethylen-Gruppe, besonders bevorzugt ist A Vinyl-, insbesondere ist x gleich 0, und $R^1$ unabhängig ein linearer, verzweigter und/oder cyclischer Alkyl-Rest mit 1 bis 4 C-Atomen, insbesondere eine Methyl-, Ethyl- oder Propyl-Gruppe.

Als Alkoxysilan der Formel III wird vorzugsweise ein Alkoxysilan mit einem unsubstituierten Kohlenwasserstoff-Rest B,

$$B\text{-}Si(R^4)_y(OR^3)_{3-y} \qquad (III)$$

eingesetzt, wobei die Gruppe-B ausgewählt ist aus einer Methyl-, Ethyl-, Propyl-, Butyl-, i-Butyl-, n-Butyl-, tert-Butyl-, Pentyl-, n-Pentyl-, iso-Pentyl-, neo-Pentyl-, Hexyl-, i-Hexyl-, neo-Hexyl-, 2,2-Dimethylbutyl-, 2,3-Dimethylbutyl-, 2-Methylpentyl-, 3-Methylpentyl-, Octyl-, n-Octyl-, iso-Octyl-, Nonyl-, Decyl-, Undecyl-, Dodecyl- , $C_{13}H_{27}$-, $C_{14}H_{29}$-, $C_{15}H_{31}$- und Hexadecyl-Gruppe und $R^3$ eine Methyl-, Ethyl- oder Propyl-Gruppe und y gleich 0 oder 1 sind.

Und $R^2$ und $R^4$ können unabhängig voneinander in Formel II und III vorzugsweise Methyl-, Ethyl-, Propyl-, Butyl, Pentyl, Hexyl-, Cyclohexyl-, Heptyl-, Octyl-, Nonylsowie weitere dem Fachmann bekannte Alkyl-Gruppen mitsamt den Strukturisomeren sein. Gemäß einer alternativen bevorzugten Ausführungsform werden als Rest B unsubstituierte Kohlenwasserstoffe mit verzweigten und/oder cyclischen Alkylresten mit 3 bis 16 C-Atomen eingesetzt. Gemäß einer weiteren bevorzugten Alternative der Erfindung werden lineare Alkyl-Reste mit 1 bis 7 C-Atomen als unsubstituierter Kohlenwasserstoff-Rest B eingesetzt.

Zumindest wird partiell hydrolysiert und, insbesondere zumindest partiell cokondensiert, bevorzugt werden die kondensationsfähigen, partiell hydrolysierten Alkoxysilane im Wesentlichen vollständig kondensiert. Besonders bevorzugt findet nur in dem Maße eine partielle Hydrolyse und Kondensation statt, wie dies zur Herstellung der Oligomere eines bevorzugten Oligomerisierungsgrades gewünscht ist.

Erfindungsgemäß wird der Hydrolysealkohol vollständig entfernt, vorzugsweise durch Destillation und die erfindungsgemäße Zusammensetzung erhalten. Eine besonders schonende Destillation des Hydrolysealkohols und/oder des Lösemittels findet unter Vakuum statt. Je nach Verfahrensführung kann ein besonders wirtschaftliches Verfahren ohne den Zusatz eines Lösemittels durchgeführt werden. Erfindungsgemäß muss die so hergestellte Zusammensetzung nach Entfernung des Hydrolysealkohols und ggf. Lösemittels selbst nicht weiter aufgereinigt, insbesondere nicht selbst destilliert, werden, um für die erfindungsgemäßen Verwendungen geeignet zu sein. Je nach Aufbereitung kann die Zusammensetzung nach Entfernung des Hydrolysealkohols ggf. filtriert oder dekantiert werden. Daher ist das erfindungsgemäße Verfahren deutlich wirtschaftlicher als bekannte Verfahren, in denen das Oligomer, um zur weiteren Anwendung geeignet zu sein, destillativ aufgereinigt werden muss.

Ebenso bevorzugte können in dem Verfahren mindestens ein olefinisch funktionalisiertes Alkoxysilan der allgemeinen Formel II, das ausgewählt ist aus Vinyltriethoxysilan, Vinyltrimethoxysilan, und optional aus Alkoxysilanen der Formel III eingesetzt werden, wobei die Alkoxysilane der Formel III ausgewählt sind aus Methyltriethoxysilan, Methyltrimethoxysilan, Ethyltriethoxysilan, Ethyltrimethoxysilan, Propyltriethoxysilan, Propyltrimethoxysilan, Butyltriethoxysilan, Butyltrimethoxysilan, n-Butyltriethoxysilan, n-Butyltrimethoxysilan, i-Butyltriethoxysilan, i-Butyltrimethoxysilan, Hexyltriethoxysilan, Hexyltrimethoxysilan, n-Hexyltriethoxysilan, n-Hexyltrimethoxysilan, iso-Hexyltriethoxysilan, iso-Hexyltrimethoxysilan, Octyltriethoxysilan, Octyltrimethoxysilan, n-Octyltriethoxysilan, n-Octyltrimethoxysilan, iso-Octyltriethoxysilan, iso-Octyltrimethoxysilan, Undecyltriethoxysilan, Undecyltrimethoxysilan, Decyltriethoxysilan, Decyltrimethoxysilan, Nonadecyltriethoxysilan, Nonadecyltrimethoxysilan, Dodecyltriethoxysilan, Dodecyltrimethoxysilan, $C_{13}H_{27}$-Triethoxysilan, $C_{13}H_{27}$-Trimethoxysilan, $C_{14}H_{29}$-Triethoxysilan, $C_{14}H_{29}$-Trimethoxysilan, $C_{15}H_{31}$-Trimethoxysilan, $C_{15}H_{31}$-Triethoxysilan, Hexadecyltriethoxysilan und Hexadecyltrimethoxysilan, Dimethyldimethoxysilan (DMDMO), Dimethyldiethoxysilan, Propylmethyldimethoxysilan, Propylmethyldiethoxysilan, n-Octyl-methyl-dimethoxysilan, n-Hexyl-methyl-dimethoxysilan, n-Hexyl-methyl-diethoxysilan, Propyl-methyl-diethoxysilan, Propyl-methyl-diethoxysilan, Cyclohexyl-triethoxysilan, n-Propyl-tri-n-butoxysilan, Hexadecylmethyldimethoxysilan und/oder Hexadecylmethyldiethoxysilan sowie Mischungen dieser Silane oder eine Mischung umfassend mindestens zwei der Silane sowie deren Umesterungsprodukten.

Gemäß dem erfindungsgemäßen Verfahren wird eine Zusammensetzung umfassend Siloxanoligomere erhalten, vorzugsweise als Sumpfprodukt, bevorzugt nach Durchführung von Schritt (v), die nach Durchführung der Schritte i, iii, iv und v sowie gegebenenfalls der Schritte i.1 und/oder i.2, bereits den vorzugsweise erfindungsgemäßen geringen Gehalt an Chlor, insbesondere Gesamtchlorid, kleiner gleich 100 mg/kg bis 0 mg/kg aufweist, insbesondere kleiner gleich 75 mg/kg, bevorzugt kleiner gleich 50 mg/kg, wobei vorzugsweise der Gehalt an hydrolysierbarem Chlorid kleiner 5 mg/kg bis 0 mg/kg, vorzugsweise kleiner gleich 4 mg/kg ist, und bei der vorzugsweise größer gleich 3 % der Silizium-Atome im olefinisch funktionalisierten Siloxanoligomer in Bezug auf die Gesamtsumme an Silizium-Atomen im Siloxanoligomer als T-Struktur vorliegen.

Vorzugsweise erfolgt die Umsetzung in Gegenwart einer definierten Menge Wasser von größer 0,60 bis 1,48 Mol Wasser je Mol Silizium-Atome der eingesetzten Alkoxysilane der Formel II und/oder III und gegebenenfalls der Formel IV" insbesondere 0,70 bis 1,45 Mol Wasser, bevorzugt größer 0,75 bis 1,43 Mol Wasser, besonders bevorzugt größer gleich 1,2 bis 1,43 Mol Wasser, vorzugsweise von 1,25 bis 1,4 Mol Wasser je Mol Silizium-Atome der eingesetzten Alkoxysilane der Formel II und/oder III sowie gegebenenfalls der Formel IV. Ebenfalls gelten alle in dem offenbarten Bereich eingeschlossenen Zahlenwerte an Mol Wasser als offenbart, insbesondere bis zu zweiten Nachkommastelle, wie 0,61; 0,62; 0,63; 0,64; 0,65; 0,66; 0,67; 0,68; 0,69; 0,70 bis 1,05 sowie alle dazwischen liegenden Zahlenwerte 1,06; 1,07; 1,08, 1,09, 1,11; 1,12; 1,13; 1,14; 1,15; 1,16; 1,17; 1,18, 1,19; 1;21; 1,22; 1,23; 1,24; 1,26, 1,27; 1,28; 1,29; 1,30; 1,31; 1,32; 1,33; 1,34; 1,35; 1,36; 1,37; 1,38; 1,39; 1,40; 1,41; 1,42; 1,43, 1,44; 1,45; 1,46; 1,47. Das Wasser ist vorzugsweise vollentsalzt. Dem Fachmann ist dabei klar, dass das Wasser sowohl vorgelegt, portionsweise, kontinuierlich oder zusammen mit einem oder allen Silanen dem Verfahren zugesetzt werden kann. Bevorzugt wird das Wasser kontinuierlich oder mit mindestens einer Unterbrechung über einen Zeitraum von kleiner 1 Minute bis 100 Minuten dosiert und die Umsetzung der Alkoxysilane vorzugsweise bei Reaktionstemperaturen im Bereich vorzugsweise 40 °C bis 80 °C, weiter bevorzugt im Bereich von 50 bis 80 °C, insbesondere bei einem pH kleiner 7 durchgeführt.

Generell kann das Wasser oder eine Wassermenge, gemäß Punkt v des Verfahrens a) kontinuierlich oder mindestens mit einer Unterbrechung über einen Zeitraum von 1 bis 1000 Minuten zudosiert werden und eine Temperatur im Reaktionsgemisch von 5 bis 90°C eingestellt werden, insbesondere 37 bis 90 °C, vorzugsweise 40 bis 90 °C, besonders bevorzugt von 50 bis 90 °C, weiter bevorzugt 50 bis 80 °C, wobei vorzugsweise der pH-Wert unter 7 liegt, gegebenenfalls wird das Wasser zusammen mit dem Katalysator und gegebenenfalls einem Lösemittel, insbesondere mit einem Alkohol, zugegeben. Die Umsetzung kann dann vorzugsweise so erfolgen, dass b) die Mischung aus a) (Reaktionsgemisch) gegebenenfalls für mindestens 10 Minuten bis 36 Stunden, insbesondere von 10 Minuten bis 8 Stunden (h), bevorzugt 5 bis 80 °C, weiter bevorzugt 40 bis 80 °C behandelt wird bzw. weiter umgesetzt wird, bevorzugt unter Durchmischung, gegebenenfalls kann die Reaktionsmischung auch beim Abkühlen nachreagieren. Zur Einstellung des Molekulargewichts kann dem Verfahren ein Alkoxytrialkylsilan, insbesondere Alkoxytrimethylsilan zugesetzt werden. Die so erhaltene Zusammensetzung kann dann dekantiert oder zur destillativen Entfernung des Alkohols, wie des Hydrolysealkohols, erwärmt werden. Vorzugsweise wird aus diesem Rohprodukt der Alkohol, optional einschließlich Katalysator, insbesondere HCl, unter Erwärmen und vermindertem Druck durch Destillation entfernt.

Nach einer bevorzugten Ausführungsform wird in dem Verfahren gemäß Punkt vi der Hydrolysealkohol und das gegebenenfalls vorliegende Lösemittel, insbesondere der zugesetzte Alkohol, destillativ abgetrennt und vorzugsweise (15.i, vgl. Anspruch 15) wird mindestens einmal, vorzugsweise zwei bis sechsmal, während der destillativen Aufarbeitung, insbesondere in Schritt iv oder v, oder anschließend eine definierte Menge Alkohol zugegeben, insbesondere werden je Volumeneinheit Alkoxysilan 0,001 bis 5,0 Volumeneinheiten Alkohol zudosiert, und/oder (15.ii, vgl. Anspruch 15) vor oder während der destillativen Abtrennung des Hydrolysealkohols, insbesondere in Schritt iv oder v, und ggf. Lösemittels eine definierte Menge eines Reduktionsmittels, wie Alkalimetall, Erdalkalimetall, Aluminium, ein Metallhydrid, oder eine definierte Menge einer Base, wie vorzugsweise HMDS, ein Amin oder ein Alkalialkoholat, zugesetzt, und nachfolgend wird insbesondere das olefinisch-funktionalisierte Siloxanoligomer, das als Sumpfprodukt vorliegt, filtriert oder dekantiert alternativ oder zusätzlich erfolgt ein Inkontaktbringen mit einem Ionentauscher. Durch das Filtrieren und/oder Dekantieren können gebildete Niederschläge oder Ausflockungen im Wesentlichen von der Zusammensetzung umfassend das Siloxanoligomer abgetrennt werden. Bevorzugt wird eine definierte Menge eines Reduktionsmittels, insbesondere eines anorganischen Reduktionsmittels, besonders bevorzugt eines metallischen Reduktionsmittels, wie Alkalimetall, bevorzugt Natrium, oder als Erdalkalimetall, bevorzugt Magnesium oder Calcium, oder Aluminium, und als Metallhydrid, bevorzugt Li-Aluminiumhydrid, Aluminiumhydrid, oder als Base vorzugsweise Ammoniakgas, LDA (Li-Diisopropylamid), Li-Isopropylhexylamid, Kaliumhexamethylsilazan, Hexamethyldisilazan, ein Alkalialkoholat, insbesondere Na- bzw. K-Methanolat oder Na- bzw. K-Ethanolat, Alkalialkylat, wie Butyl-Li eingesetzt. Auch dem Fachmann bekannte Metallhydride wie NaH, oder auch Lithiumaluminiumhydrid oder Basen, die mit dem Hydrogenchlorid schwerlösliche Niederschläge bilden können in dem Verfahren zusätzlich eingesetzt werden, um den Chlor(id)gehalt der Zusammensetzung weiter zu senken. Für das Verfahren geeignete Basen sollten bei einer Reaktion mit den Katalysator, beispielsweise HCl, oder mit organisch gebundenem Chlor, wie Cl-Si, kein Wasser bilden.

Der bereits vorhandene und/oder bei der Umsetzung entstandene Alkohol wird in allen erfindungsgemäßen Verfahrensvarianten im Wesentlichen, bevorzugt vollständig, aus dem Reaktionsgemisch entfernt, so dass der Gehalt an freiem Alkohol vorzugsweise maximal 1,0 Gew.-%, insbesondere unter 0,8 % bis 0,0001 Gew.-% beträgt. Die destillative Abtrennung des Alkohols wird vorzugsweise unter vermindertem Druck durchgeführt. Die destillative Entfernung des Alkohols wird vorzugsweise solange durchgeführt, bis im Kopf der Kolonne eine Temperatur erreicht ist, die der Siedetemperatur von Wasser oder bevorzugt, bis ein Vakuum von 100 mbar, insbesondere kleiner gleich 100 mbar und größer gleich 0,01 mbar, dauerhaft eingestellt werden kann. In der Regel ist die resultierende erfindungsgemäße Zusammensetzung dann im Wesentlichen lösemittelfrei, insbesondere alkoholfrei. Die so erhaltene Zusammensetzung entspricht bevorzugt direkt der erfindungsgemäßen Zusammensetzung, und muss vorzugsweise nicht selbst weiter aufgereinigt werden.

Vor oder auch nach dem Entfernen des Alkohols kann der Zusammensetzung mindestens ein Verarbeitungshilfsmittel wie Silikonöl, wie Polydimethylsiloxan, Paraffin, Paraffinöl oder eine Mischung enthaltend eines dieser Verarbeitungshilfsmittel zugesetzt werden.

Nach einer bevorzugten Variante des Verfahrens werden die Alkoxysilane der allgemeinen Formeln II, III und/oder IV in Gegenwart eines sauren Katalysators, insbesondere mit Chlorwasserstoff, zumindest partiell hydrolysiert und kondensiert. Die Hydrolyse- und Kondensation kann bei Bedarf auch in Gegenwart von HCl und einem Co-Katalysator erfolgen. Als Co-Katalysatoren kommen Fettsäuren in Betracht. Alternativ können auch HCl und gesättigte oder ungesättigte organische Säuren, wie Ameisensäure oder Essigsäure, und/oder Fettsäuren, beispielsweise Myristinsäure, und/oder mehrbasige organische Säuren, wie Zitronensäure, Fumarsäure, als Katalysator oder als Co-Katalysator mit HCl eingesetzt werden.

Weiter ist es verfahrensgemäß bevorzugt das Silan der Formel II und das Silan der Formel III im Verhältnis 1 : 0 bis 1 : 8 einzusetzen und/oder das Silan der Formel II im Verhältnis zum Silan der Formel IV im Verhältnis 1 : 0 bis 1 : 0,22, vorzugsweise 1 : 0 bis 1 : 0,20, insbesondere von 1 : 0 bis 1 : 0,15, bevorzugt 1 : 0 bis 1 : 0,10, besonders bevorzugt 1 : 0 bis 1 : 0,05 einzusetzen, vorzugsweise werden das Silan der Formel II und das Silan der Formel III im Verhältnis von etwa 1 : 0 oder etwa im Verhältnis 1 : 1 oder im Verhältnis von 1 : 0 bis 1 : 2, vorzugsweise 1 : 0 bis 1 : 1 eingesetzt. Alternativ bevorzugt ist auch ein Verfahren in dem das Silan der Formel II und das Silan der Formel IIII im Verhältnis von 1 : 0 bis 1 : 2, vorzugsweise um 1 : 1, eingesetzt werden und/oder das Silan der Formel II im Verhältnis zum Silan der Formel IV im Verhältnis 1 : 0 bis 1 : 0,20, bevorzugt 1 : 0 bis 1 : 0,10, besonders bevorzugt 1 : 0 bis 1 : 0,5 eingesetzt werden, bevorzugt im Verhältnis von 1 : 0,10 bis 1 : 0,05 oder um 1 : 0,1. Die in den genannten Verhältnissen hergestellten Siloxanoligomere zeigen anwendungstechnisch besonders homogene Eigenschaften, das Silan der Formel IV wird vorzugsweise für eine stärkere Vernetzung im Oligomer oder als auch des Oligomers mit einem Substrat eingesetzt.

Besonders bevorzugt werden nach einer Alternative das Silan der Formel II und das Silan der Formel III etwa im Verhältnis 1 : 1 eingesetzt, gemäß einer weiteren bevorzugten Alternative werden das Silan der Formel II und das Silan der Formel IV im Verhältnis von etwa 1 : 0,1 eingesetzt, wobei zusätzlich vorzugsweise das Silan der Formel II und das Silan der Formel III im Verhältnis von etwa 1 : 1 vorliegen. Bevorzugte Alkohole entsprechen dem Hydrolysealkohol, der durch die zumindest teilweise Hydrolyse- und/oder Kondensation entsteht. Zu nennen sind Ethanol oder Methanol. Dem Fachmann ist klar, dass die Umsetzung auch in Gegenwart eines anderen üblichen Lösemittels erfolgen kann, wobei jene, die sich leicht und vorzugsweise vollständig abdestillieren lassen bevorzugt sind, dies können beispielsweise aber nicht abschließend Ether, Ketone, Kohlenwasserstoffe oder Ester sein. Zweckmäßige Lösemittel können aber auch Essigester, THF, Ketone, Ether oder Kohlenwasserstoffe sein. Dem Fachmann ist klar, dass aus ökonomischen und wirtschaftlichen Gründen als Lösemittel ein Alkohol eingesetzt wird, der sich auch als Hydrolysealkohol bildet. Mischungen von Alkoholen können daher grundsätzlich auch eingesetzt werden. In allen Verfahrensvarianten werden vorzugsweise das Lösemittel und der bei der Umsetzung entstandene Alkohol destillativ aus dem Reaktionsgemisch entfernt.

Nach einer weiteren bevorzugten Verfahrensvariante wird der Oligomerisierungsgrad von mindestens 20 Gew.-% der Siloxanoligomere mit n gleich Anzahl der Silizium-Atome so eingestellt, dass bei ihnen n größer gleich 8 ist. Weiter bevorzugt werden nach dem erfindungsgemäßen Verfahren insbesondere mehr als 1 % der olefinisch funktionalisierten Silizium-Atome als T-Struktur erhalten, vorzugsweise können dies auch mehr als 2 %, bevorzugt größer gleich 3 %, besonders bevorzugt größer gleich 4 % oder auch größer gleich 5 % und auch größer gleich 7,5 % bis 10 % sein, zusätzlich oder alternativ bevorzugt liegen auch mehr als 0,3 % der mit einem gesättigten Kohlenwasserstoff funktionalisierten Silizium-Atome im Siloxanoligomer als T-Struktur vor, insbesondere 0,3 bis 2 %.

In dem erfindungsgemäßen Verfahren wird vorzugweise die dynamische Viskosität der Zusammensetzung auf kleiner gleich 1.000 mPa s, bevorzugt auf kleiner gleich 740 mPa s, besonders bevorzugt auf kleiner gleich 500 mPa s bis größer gleich 1 mPa s eingestellt.

Weiter kann in dem Verfahren die Zusammensetzung, insbesondere das Sumpfprodukt, vorzugsweise nach der destillativen Entfernung des Lösemittels und/oder Alkohols mit einem Ionentauscher in Kontakt gebracht werden, insbesondere einem Anionentauscher, vorzugsweise einem Amin-funktionellen Ionentauscher, um den Chloridgehalt weiter zu reduzieren. Vorteilhaft, ist bei diesem Verfahrensschritt, dass sich durch diese Maßnahme, anders als bei einer Destillation, der Oligomerisierungs- und/oder Verzweigungsgrad des Produktes nicht verändert. Bei einer Destillation würde zwangsläufig eine Auftrennung des Siloxanoligomers in Leicht-, Mittel- und Schwersieder (Sumpf) erfolgen. Durch den erfindungsgemäßen Einsatz des Ionentauschers bleibt der Oligomerisierungsgrad der Siloxanoligomere gleich und der Chloridgehalt kann weiter abgesenkt werden. In dem erfindungsgemäßen Verfahren kann auch das Inkontaktbringen mit dem Ionentauscher mit einer der Maßnahmen kombiniert werden, dass eine definierte Menge an Alkalimetall, Erdalkalimetall, Aluminium, ein Metallhydrid oder eine Base zugesetzt wird.

Bevorzugt kann durch das Inkontaktbringen mit einem Ionentauscher der Chlorid Gehalt bzw. der Gehalt an Chlor in Gew.-ppm der olefinischen Siloxanoligomeren um mindestens 80 % in Bezug auf die, dem Iontauscher zugeführten Siloxanoligomere vermindert werden. Weiter bevorzugt ist der Gehalt an Chlor in Gew.-ppm der olefinischen Siloxanoligomere in Bezug auf die zugeführten um mindestens 85 %, bevorzugt um mindestens 90 %, besonders bevorzugt mindestens um 92 %, ebenfalls bevorzugt mindestens um 95 %, und weiter bevorzugt um mindestens 98 % vermindert. Je nach olefinisch funktionalisiertem Siloxanoligomer und in Abhängigkeit von der Ausgangskonzentration an Chlor, der Fliessgeschwindigkeit und der Kontaktzeit mit dem Anionenaustauscher kann der Gehalt an Chlor vorzugsweise auf kleiner gleich 100 mg/kg gesenkt werden, vorzugsweise auf kleiner gleich 50 mg/kg, weiter bevorzugt auf kleiner gleich 25 mg/kg.

Bei olefinisch funktionalisierten Siloxanoligomeren mit einem Gehalt an Chlor, d. h. mit hydrolysierbarem Chlor, insbesondere chlorfunktionelle Alkylalkoxysilane und/oder Alkylalkoxysilane mit HCl, kann der Gehalt an hydrolysierbarem Chlorid vorzugsweise bei Fließgeschwindigkeiten von 0,01 m/h bis 15 m/h, vorzugsweise bis zu 5 m/h, insbesondere bei bis zu 2,5 m/h, um mindestens 80 %, insbesondere um mindestens 85 %, bevorzugt um mindestens 90 %, besonders bevorzugt mindestens um 92 %, ebenfalls bevorzugt mindestens um 95 %, und weiter bevorzugt um mindestens 98 % reduziert werden, dabei werden insbesondere die olefinisch funktionalisierten Siloxanoligomere nicht weiter kondensiert, und wobei vorzugsweise die Anionenaustauschersäule einen Durchmesser von 3 cm und eine Höhe von 15 cm aufweist. Sehr gute Ergebnisse einer Verminderung an hydrolysierbarem Chlor von bis zu 80 % werden auch bei Fließgeschwindigkeiten von bis zu 10 m/h erzielt.

Im erfindungsgemäßen Verfahren weist der Anionenaustauscher ein Trägerpolymer mit quartären Alkylammonium-Gruppen und/oder mit tertiären Dialkylamino-Gruppen auf, wobei insbesondere die quartären Alkylammonium-Gruppen im Wesentlichen Hydroxid-Ionen als Gegenionen aufweisen und/oder die tertiären Dialkylamino-Gruppen in Form der freien Base vorliegen. Dabei ist es besonders bevorzugt, wenn der basische Anionenaustauscher ein Styrol-Divinylbenzol-Copolymer mit Trialkylammonium-Gruppen, insbesondere in der OH-Form, und/oder ein Styrol-Divinylbenzol-Copolymer mit Dialkylamino-Gruppen in Form der freien Base ist. Bei Verwendung von basischen Anionenaustauschern mit einem Styrol-Divinylbenzol-Copolymer mit Trialkylammonium-Gruppen in der Chlorid-Form werden die Chloride vor der Verwendung in die OH-Form überführt, beispielsweise mit einer Alkalihydroxid-Lösung. Als Alkalihydroxid-Lösungen werden vorzugsweise wässrige Lösungen von Kaliumhydroxid, Natriumhydroxid oder auch andere in Wasser- oder Wasser-Alkohol-lösliche Basen wie Ammoniak oder Alkalicarbonate wie $Na_2CO_3$ eingesetzt. Dabei wird nach der Überführung des Anionentauschers in die OH-Form vor dem Inkontaktbringen mit den olefinischen Siloxanoligomeren der Anionentauscher mit einen Alkohol gespült, um insbesondere überschüssiges Wasser zu verdrängen. Als Alkohol wird vorzugsweise der Alkohol eingesetzt, der durch Hydrolyse der jeweiligen Alkoxygruppen gebildet würde. Bei Methoxy-Gruppen Methanol oder Ethanol bei Ethoxy-Gruppen im Alkoxysilan.

Als quartäre Ammonium-Gruppen gelten sowohl Alkylammonium- als auch N-Alkyl-Imin-funktionelle Gruppen, wie N-Alkyl-Pyridinium-Gruppen. Geeignete Alkylgruppen enthalten 1 bis 20 C-Atome, vorzugsweise mit 1 bis 4 C-Atomen, und sind vorzugsweise Methyl- oder Ethylgruppen. Erfindungsgemäß sind die schwach basischen Anionaustauscher mit Hydroxid-Ionen beladen und insbesondere weisen sie Stickstoff enthaltende Gruppen auf.

Erfindungsgemäß ist es ferner bevorzugt, wenn die Alkoxysilane der Formeln II, III und/oder IV in Gegenwart der definierten Menge Wasser und eines Hydrolyse- und Kondensationskatalysators, wie beispielsweise einer Mineralsäure, wie HCl, einer organischen gesättigten oder ungesättigten Carbonsäure, wie Ameisensäure, und/oder Fettsäure, zumindest partiell hydrolysiert und kondensiert werden und, vorzugsweise der Alkohol, insbesondere sowohl der Hydrolysealkohol als auch der gegebenenfalls zugesetzte Alkohol, entfernt wird. Der Hydrolyse- und/oder der zugesetzte Alkohol entsprechen dem freien Alkohol. Besonders bevorzugt ist der Gehalt an freiem Alkohol in der Gesamtzusammensetzung kleiner gleich 2 Gew.-% bis 0,001 Gew.-%, insbesondere kleiner 2 Gew.-% bis 0,01 Gew.-%, besonders bevorzugt kleiner gleich 1 Gew.-% bis 0,01 Gew.-% bis hin zur Nachweisgrenze.

Es hat sich überraschend herausgestellt, dass die aufgrund der weiteren Reduktion des Gehaltes an Chlor durch das erfindungsgemäße Verfahren erhaltenen funktionellen Siloxanoligomere deutlich stabiler gegenüber einer Hydrolyse sind, obwohl sie anders als bisher nicht mehr aufwendig destilliert werden. Dadurch erweisen sich die erfindungsgemäßen Siloxanoligomere stabiler als bekannte Oligomere und zugleich ist deren Gehalt monomerer Alkoxysilane gegenüber den oligomeren Sumpfprodukten des Standes der Technik reduziert.

Der über einen Zeitraum von 3 bis 6 Monaten stabile Gehalt an Lösemitteln, wie VOC, insbesondere an freiem Alkohol, in Bezug zur gesamten Zusammensetzung liegt bevorzugt unter 2 Gew.-%, insbesondere bei kleiner gleich 1 Gew.-%, besonders bevorzugt bei kleiner gleich 0,4 Gew.-%, vorzugsweise bei kleiner gleich 0,3 Gew.-%. Erfindungsgemäß einsetzbare Verbindungen der Formel II sind: Vinyltriethoxysilan, Vinyltrimethoxysilan, Allyltriethoxysilan, Allyltrimethoxysilan, Butenyltriethoxysilan, Butenyltrimethoxysilan, Cyclohexenyl-alkylen-trimethoxysilan, insbesondere Cyclohexenyl-2-ethylen-trimethoxysilan, Cyclohexenyl-2-ethylen-triethoxysilan, weiter bevorzugt 3'-Cyclohexenyl-2-ethylen-triethoxysilan und/oder 3'-Cyclohexenyl-2-ethylen-trimethoxysilan, Cyclohexendienyl-alklylentriethoxysilan, Hexenyltriethoxysilan, Hexenyltrimethoxysilan, Ethylhexenyltrimethoxysilan, Ethylhexenyltriethoxysilan, Octenyltriethoxysilan, Octenyltrimethoxysilan, wobei die methoxysubstituierten besonders bevorzugt sind. Gleichfalls können gemischtfunktionalisierte Alkoxysilane mit Ethoxy- und Methoxygruppen eingesetzt werden.

Bevorzugt verwendbare Alkylalkoxysilanverbindungen der Formel III sind: Verbindungen der Formel III mit y = 0 oder 1, wobei B einem linearen oder verzweigten Alkyl-Rest mit 1 bis 18 C-Atomen, insbesondere mit 1 bis 8 C-Atomen, bevorzugt einem Methyl-, Ethyl, besonders bevorzugt n-Propyl-, iso-Propyl-, Butyl-, Pentyl-, Hexyl-, Heptyl- , Octyl-, Hexadecyl- oder Octadecyl-Rest, $R^4$ einem linearen, verzweigten oder cyclischen Alkyl-Rest mit 1 bis 15 C-Atomen, insbesondere mit 1 bis 8 C-Atomen, bevorzugt einem Methyl-, Ethyl, besonders bevorzugt n-Propyl-, iso-Propyl- und/oder Octyl-Rest, $R^3$ einem linearen und/oder verzweigten Alkyl-Rest mit 1 bis 3 C-Atomen, besonders bevorzugt einem Methyl-, Ethyl- und/oder iso-Propyl- oder n-Propyl-Rest entsprechen. Besonders bevorzugt ist B ein Methyl-, Ethyl-, Propyl-, Octyl-, Hexadecyl- oder Octadecyl-Rest und $R^4$ ein Methyl- oder Ethyl-Rest und $R^1$ ein Methyl- oder Ethyl-Rest, wobei die Methoxy-substituierten besonders bevorzugt sind.

Ebenso bevorzugt kann der unsubstituierte Kohlenwasserstoff-Rest B unabhängig in Formeln I und/oder III einem linearen, verzweigten oder cyclischen Alkyl-Rest mit 1 bis 16 C-Atomen entsprechen, insbesondere eine Methyl-, Ethyl-, Propyl-, n-Propyl-, iso-Propyl-, Butyl-, n-Butyl-, i-Butyl-, n-Octyl, iso-Octyl-, Octyl-, oder Hexadecyl-Gruppe. Ebenso bevorzugt kann der Rest B unabhängig ausgewählt sein aus tert-Butyl, Pentyl-, n-Pentyl-, iso-Pentyl-, neo-Pentyl-, Hexyl-, i-Hexyl-, neo-Hexyl-, Heptyl-, 2,2-Dimethylbutyl-, 2,3-Dimethylbutyl-, 2-Methylpentyl-, 3-Methylpentyl-, neo-Octyl-, Nonyl-, Decyl-, Undecyl-, Dodecyl-, 2-Methylheptyl-, 3-Methylheptyl-, 4-Methylheptyl-, 2,2-Dimethylhexyl-, 2,3-Dimethylhexyl-, 2,4-Dimethylhexyl-, 2,5-Dimethylhexyl-, 3,3-Dimethylhexyl-, 3,4-Dimethylhexyl-, 3-Ethylhexyl-, 2,2,3-Trimethylpentyl-, 2,2,4-Trimethylpentyl-, 2,3,3-Trimethylpentyl-,2,3,4-Trimethylpentyl-, 3-Ethyl-2-methylpentyl-, 3-Ethyl-3-methylpentyl-, 2,2,3,3-Tetramethylbutyl-, $C_{13}H_{27}$-, $C_{14}H_{29}$- und einer $C_{15}H_{31}$-Gruppe. Gemäß einer Alternative kann der Alkyl-Rest verzweigt oder cyclisch mit 3 bis 16 C-Atomen sein oder linear mit 2 bis 7 C-Atomen.

Besonders bevorzugte ist es, wenn in Formeln I und/oder II der olefinische Rest A eine Vinyl-Gruppe ist, und unabhängig davon in Formeln I und/oder III der unsubstituierte Kohlenwasserstoff-Rest B ausgewählt ist aus einer Methyl-, Ethyl-, Propyl-, Butyl-, i-Butyl-, n-Butyl-, tert-Butyl-, Pentyl-, n-Pentyl-, iso-Pentyl-, neo-Pentyl-, Hexyl-, i-Hexyl-, neo-Hexyl-, 2,2-Dimethylbutyl-, 2,3-Dimethylbutyl-, 2-Methylpentyl-, 3-Methylpentyl-, Heptyl-, Octyl-, n-Octyl-, iso-Octyl-, Nonyl-, Decyl-, Undecyl-, Dodecyl- , $C_{13}H_{27}$-, $C_{14}H_{29}$-, $C_{15}H_{31}$- und Hexadecyl-Gruppe, und jeweils voneinander unabhängig $R^1$ eine Methyl-, Ethyl- oder Propyl-Gruppe und $R^3$ unabhängig eine Methyl-, Ethyl- oder Propyl-Gruppe sind.

Bevorzugte beispielhaft genannte Verbindungen der Formel III sind: Methyltrimethoxysilan, Methyltriethoxysilan (MTES), Propyltrimethoxysilan (PTMO), Dimethyldimethoxysilan (DMDMO), Dimethyldiethoxysilan, Propylmethyldimethoxysilan, Propylmethyldiethoxysilan, n-Propyltrimethoxysilan, n-Propyltriethoxysilan, iso-Propyltrimethoxysilan, iso-Propyltriethoxysilan, n-Octyl-methyl-dimethoxysilan, n-Hexyl-methyl-dimethoxysilan, n-Hexyl-methyl-diethoxysilan, Propyl-methyl-diethoxysilan, Propyl-methyl-diethoxysilan, Propyltriethoxysilan, Butyltrimethoxysilan, i-Butyltrimethoxysilan, i-Butyltriethoxysilan, Octyltrimethoxysilan, Octyltriethoxysilan, n-Octyltrimethoxysilan, n-Octyltriethoxysilan, i-Octyltrimethoxysilan, i-Octyltriethoxysilan, n-Hexyl-triethoxysilan, Cyclohexyl-triethoxysilan, n-Propyl-tri-n-butoxysilan, n-Propyltrimethoxysilan, n-Propyltriethoxysilan, Hexadecyltriethoxysilan, Hexadecyltrimethoxysilan, Octadecyltriethoxysilan, Octadecyltrimethoxysilan, Octadecylmethyldiethoxysilan, Octadecylmethyldimethoxysilan, Hexadecylmethyldimethoxysilan und/oder Hexadecylmethyldiethoxysilan sowie Mischungen dieser Silane oder eine Mischung umfassend mindestens zwei der Silane. Verbindungen der Formel III können ebenso ausgewählt sein aus Ethyltriethoxysilan, Ethyltrimethoxysilan, Propyltriethoxysilan, Propyltrimethoxysilan, Butyltriethoxysilan, n-Butyltriethoxysilan, n-Butyltrimethoxysilan, Hexyltriethoxysilan, Hexyltrimethoxysilan, n-Hexyltriethoxysilan, n-Hexyltrimethoxysilan, iso-Hexyltriethoxysilan, iso-Hexyltrimethoxysilan, Undecyltriethoxysilan, Undecyltrimethoxysilan, Decyltriethoxysilan, Decyltrimethoxysilan, Nonadecyltriethoxysilan, Nonadecyltrimethoxysilan, Dodecyltriethoxysilan, Dodecyltrimethoxysilan, $C_{13}H_{27}$-Triethoxysilan, $C_{13}H_{27}$-Trimethoxysilan, $C_{14}H_{29}$-Triethoxysilan, $C_{14}H_{29}$-Trimethoxysilan, $C_{15}H_{31}$-Trimethoxysilan, $C_{15}H_{31}$-Triethoxysilan, sowie deren Umesterungsprodukten.

Besonders bevorzugt werden in dem Verfahren olefinisch funktionalisierten Alkoxysilan der allgemeinen Formel II, die ausgewählt sind aus Vinyltriethoxysilan, Vinyltrimethoxysilan eingesetzt. Gemäß einer Alternative werden olefinisch funktionalisierten Alkoxysilan der allgemeinen Formel II, die ausgewählt sind aus Vinyltriethoxysilan, Vinyltrimethoxysilan und Alkoxysilane der Formel III ausgewählt aus vorstehenden eingesetzt.

Besonders bevorzugte Kombinationen an Verbindungen der Formeln II, III und/oder IV zur Herstellung der olefinisch funktionalisierten Siloxanoligomere, bzw. die daraus erhältlichen olefinisch funktionalisierten Siloxanoligomere sind: Vinyltriethoxysilan und Tetraethoxysilan; Vinyltrimethoxysilan und Tetramethoxysilan; Vinyltriethoxysilan und Methyltriethoxysilan; Vinyltriethoxysilan, Methyltriethoxysilan und Tetraethoxysilan; Vinyltrimethoxysilan und Methyltrimethoxysilan; Vinyltrimethoxysilan, Methyltrimethoxysilan und Tetraethoxysilan oder Tetramethoxysilan; Vinyltriethoxysilan und Ethyltriethoxysilan; Vinyltriethoxysilan, Ethyltriethoxysilan und Tetraethoxysilan; Vinyltrimethoxysilan und Ethyltrimethoxysilan; Vinyltrimethoxysilan, Ethyltrimethoxysilan und Tetraethoxysilan oder Tetramethoxysilan; Vinyltriethoxysilan und Propyltriethoxysilan; Vinyltriethoxysilan, Propyltriethoxysilan und Tetraethoxysilan; Vinyltrimethoxysilan und Propyltrimethoxysilan; Vinyltrimethoxysilan, Propyltrimethoxysilan und Tetraethoxysilan oder Tetramethoxysilan; Vinyltriethoxysilan und iso-Butyltriethoxysilan; Vinyltriethoxysilan, iso-Butyltriethoxysilan und Tetraethoxysilan; Vinyltrimethoxysilan und iso-Butyltrimethoxysilan; Vinyltrimethoxysilan, iso-Butyltrimethoxysilan und Tetramethoxysilan; Vinyltriethoxysilan und Octyltriethoxysilan; Vinyltriethoxysilan, Octyltriethoxysilan und Tetraethoxysilan; insbesondere mit Vinyltriethoxysilan und Tetraethoxysilan im Verhältnis von 1 : 0,20 bis 1 : 0; Vinyltrimethoxysilan und Octyltrimethoxysilan; Vinyltrimethoxysilan, Octyltrimethoxysilan und Tetramethoxysilan; insbesondere mit Vinyltrimethoxysilan und Tetramethoxysilan im Verhältnis von 1 : 0,20 bis 1 : 0.

Ein weiterer Aspekt der erfindungsgemäßen Zusammensetzung und des erfindungsgemäßen Verfahrens ist, dass das Verfahren ohne eine Verwendung von basischen Katalysatoren, insbesondere Stickstoff enthaltender Verbindungen, oder sauren Schwefel enthaltenden Ionentauschern auskommt. Beide Katalysatoren führen zu Bedingungen der heterogenen Katalyse. So führt beispielsweise wässriger Ammoniak zur Bildung von Emulsionen und auch die Umsetzung an Sulfonsäure- oder Schwefelsäure -Gruppen aufweisenden Ionentauschern bedingen Bedingungen einer heterogenen Katalyse. Es wurde festgestellt, dass die Bedingungen einer heterogenen Katalyse zur Herstellung der gewünschten engen Molmassenverteilung von Siloxanoligomeren nicht geeignet sind. Folglich sind die erfindungsgemäßen Zusammensetzungen frei von sauren Schwefel enthaltenden Gruppen, insbesondere Schwefelsäure- oder Sulfonsäure-Gruppen und/oder frei von Stickstoff enthaltenden Verbindungen, insbesondere von Stickstoff enthaltenden Verbindungen, die über basische Katalysatoren eingetragen werden. Ebenso kann in dem erfindungsgemäßen Verfahren auf die Verwendung von Metalloxiden in Kombination mit einer Säure verzichtet werden, daher sind die erfindungsgemäßen Zusammensetzungen frei von metallischen Rückständen, die durch die Zugabe von Metalloxiden eingetragen werden, wie insbesondere Kupferoxide, Eisenoxide, Aluminiumoxide, Kupferhalogenide, Eisenhalogenide, Kupferhydroxid, Eisenhydroxid, Aluminiumhydroxid. Erfindungsgemäße Zusammensetzungen weisen daher vorzugsweise nur intrinsisch vorkommende Metalle auf, bevorzugt ist der Metallgehalt kleiner 0,001 Gew.-% bis 0,1 ppm-Gew. Entsprechend kann in dem erfindungsgemäßen Verfahren auf die Zugabe von basischen Verbindungen, wie Calciumcarbonat zur Neutralisation verzichtet werden. Folglich enthalten die erfindungsgemäßen Zusammensetzungen kein zusätzlich zugesetztes Calcium, vorzugsweise enthalten sie kleiner gleich 1 Gew.-%, insbesondere kleiner gleich 0,1 Gew.-% bis 0,1 ppm-Gew. Calcium. Somit sind die Zusammensetzungen und Verfahren frei von Stickstoff enthaltenden Verbindungen, Calcium enthaltenden Verbindungen, frei von Metall enthaltenden Verbindungen, insbesondere Metalloxide, und frei von Schwefel enthaltenden Verbindungen, insbesondere sauren Schwefel haltigen Verbindungen.

Zusätzlich oder alternativ zu einem der vorgenannten Merkmale kann in dem Verfahren auch als Verarbeitungshilfsmittel mindestens ein Silikonöl, wie Polydimethylsiloxan, Paraffin, Paraffinöl oder eine Mischung enthaltend eines dieser Verarbeitungshilfsmittel eingesetzt werden. Ein besonders bevorzugtes Verarbeitungshilfsmittel ist Polydimethylsiloxan, bevorzugt mit einer kinematischen Viskosität von circa 150 bis 400 mm²/s, besonders bevorzugte Alternativen weisen eine kinematische Viskosität von um 200 mm²/s bis um 350 mm²/s.

Gegenstand der Erfindung ist auch das folgende Verfahren zur Herstellung der Zusammensetzung, als auch eine Zusammensetzung erhältlich nach diesem Verfahren, die insbesondere einen besonders geringen Gehalt an Chlor und vorzugweise einen besonders geringen Gehalt in % an Silizium-Atomen monomerer Alkoxysilane aufweisen, insbesondere unter 1,5 %, bevorzugt unter 1,0 % bis 0,0%, vorzugsweise mit den folgenden Einzelschritten,

1) mindestens ein olefinisch funktionalisiertes Alkoxysilan der Formel II, gegebenenfalls ein Alkoxysilan der Formel III und/oder ein Alkoxysilan der Formel IV, gegebenenfalls als Mischung, vorzugsweise werden sie vorgelegt, gegebenenfalls wird ein Lösemittel zur Verdünnung zugesetzt, wie der korrespondierende Alkohol zum Hydrolysealkohol.

2) Mindestens ein saurer Hydrolyse- bzw. Kondensationskatalysator, wie HCl, eine organische gesättigte oder ungesättigte Carbonsäure, der in einer definierten Menge Wasser gelöst ist, wird zugesetzt. Vorzugsweise wird dabei ein pH-Wert kleiner 7, vorzugsweise von 1 bis 6, weiter bevorzugt von 3 bis 5 eingestellt. Alternativ kann gegebenenfalls eine Mischung hergestellt werden (1+2), enthaltend mindestens eines der Silane der Formel II, III und/oder IV gegebenenfalls

mit einer definierten Menge Alkohol, insbesondere je Volumeneinheit Alkoxysilan 0,001 bis 5,0 Volumeneinheiten Alkohol, bevorzugt 0,25 bis 1, in Bezug auf die Silane der Formel II, III und/oder IV, insbesondere Methanol oder Ethanol, je nach eingesetztem Alkoxysilan, und eine definierte Menge Wasser, wobei vorzugsweise der mindestens einen sauren Hydrolyse- bzw. Kondensationskatalysators, wie HCl, eine organische gesättigte oder ungesättigte Carbonsäure, in der definierten Menge Wasser gelöst ist. Vorzugsweise wird dabei ein pH-Wert kleiner 7, vorzugsweise von 1 bis 6, weiter bevorzugt von 3 bis 5 eingestellt. Dazu werden, vorzugsweise in einer Vorlage, wie einem Rührkessel, unter Durchmischung, und als definierte Menge Wasser größer gleich 0,5 bis 1,5 Mol Wasser zugesetzt. Die definierte Menge Wasser kann kontinuierlich oder mit mindestens einer Unterbrechung über einen Zeitraum von 1 bis 1.000 Minuten dosiert werden. Die Temperatur des Reaktionsgemisches wird vorzugsweise auf 5 bis 90°C für die Umsetzung eingestellt, vorzugsweise auf 20 bis 55 °C, bevorzugt auf 30 bis 40 °C oder auf etwa 35 °C. Nach der Zugabe der Mischung wird die Temperatur der gebildeten Reaktionsmischung weiter erhöht, insbesondere wird auf Rückflusstemperatur des Alkohols eingestellt. Beispielsweise durch Erwärmen der Reaktionsmischung auf eine Temperatur von 40 bis 80 °C, bevorzugt 50 bis 80 °C, besonders bevorzugt auf um 55 bis 80 °C, erfindungsgemäß auf etwa Siedetemperatur des Alkohols. Über einen Zeitraum von mindestens 10 Minuten bis 36 Stunden, vorzugsweise 1 Stunde (h) bis 8 h, bei einer Reaktionstemperatur von 5 bis 80°C, vorzugsweise 40°C bis 80°C kann die Reaktionsmischung nachreagieren, bevorzugt unter Durchmischung, beispielsweise unter Rühren, und

3) nach beendeter Reaktion wird der Alkohol abgetrennt. Bevorzugt wird mehrere Stunden, beispielsweise etwa 2 bis 10 Stunden, vorzugsweise 3 bis 5 Stunden, besonders bevorzugt um 3,5 Stunden unter Rückfluss erhitzt und anschließend

4) der Alkohol, umfassend den Hydrolysealkohol und den eingesetzten Alkohol sowie gegebenenfalls Wasser abdestilliert, vorzugsweise unter Vakuum und bei erhöhter Temperatur, bevorzugt bis die Reaktionsmischung bzw. die erhaltene Zusammensetzung im Wesentlichen lösemittelfrei, insbesondere alkoholfrei ist. Die Destillation des Alkohols erfolgt vorzugsweise bei einer Sumpftemperatur von 0 °C bis 90 °C und einem Druck von 500 bar bis 1 mbar, dabei wird zugleich etwas HCl abdestilliert, weiter bevorzugt bei 90 °C bis 10 °C und einem Druck von 300 bar bis 10 mbar, vorzugsweise von 150 mbar bis 50 mbar.

5) Anschließend kann Normaldruck eingestellt werden; es wird eine definierte Menge an Alkohol nachdosiert, insbesondere je Volumeneinheit Alkoxysilan 0,001 bis 5,0 Volumeneinheiten Alkohol, und gegebenenfalls wird eine definierte Menge eines Reduktionsmittels, wie Alkalimetall, bevorzugt Natrium, Erdalkalimetall, bevorzugt Magnesium oder Calcium, Aluminium, Metallhydrid, bevorzugt Li-Aluminiumhydrid, Aluminiumhydrid, oder eine definierte Menge Base zugesetzt, insbesondere Ammoniakgas, Li-Diisopropylamid, Li-Isopropylhexylamid, Hexamethyldisilazan, Alkalialkoholat, wie Na- bzw. K-Methanolat oder Na- bzw. K-Ethanolat, Alkalialkylat, wie Butyl-Li, zugesetzt. Es wird gegebenenfalls erneut bei einem Druck von 300 bis 10 mbar destilliert, wobei bei Zugabe eines Alkalimetalls die Mischung reagieren gelassen wird. Das Sumpfprodukt kann im Anschluss an die Destillation filtriert oder dekantiert werden. Alternativ oder zusätzlich kann ein Inkontaktbringen mit einem Ionentauscher erfolgen. Erhalten wird die erfindungsgemäße Zusammensetzung olefinisch-funktionalisierter Siloxanoligomere mit einem Gehalt an freiem Alkohol von weniger als 2 Gew.-% und einem Chlorgehalt von ≤ 100 mg/kg, bezogen auf die Zusammensetzung mit einer Viskosität kleiner gleich 1.000 mPa s.

Die erfindungsgemäßen Zusammensetzungen erhältlich nach dem erfindungsgemäßen Verfahren enthalten olefinisch funktionalisierte Siloxan-oligomere, die höchstens einen olefinischen Rest am Silizium-Atom aufweisen, und die olefinisch funktionalisierten Siloxanoligomere Si-O-vernetzte Strukturelemente aufweisen, die kettenförmige, cyclische, vernetzte und/oder raumvernetzte Strukturen bilden, wobei die Strukturelemente aus Alkoxysilanen der Formel II abgeleitet sind sowie optional zusätzlich aus Alkoxysilanen ausgewählt aus den Formeln III und IV, optional entsprich mindestens ein Siloxanoligomer der allgemeinen Formel I, wobei das Gewichtsmittel des Molekulargewichts (Mw) der Siloxanoligomere größer gleich 410 g/mol bis 580 g/mol und das Zahlenmittel des Molekulargewichts (Mn) größer gleich 370 bis 470 g/mol sind, und die Polydispersität als Quotient aus Mw/Mn bei 1,00 bis 1,25 liegt und optional die Strukturelemente zusammen in Bezug auf alle Silizium-Atome des Siloxanoligomers zu größer gleich 3 % als T-Struktur vorliegen. Besonders bevorzugt sind Gewichtsmittel des Molekulargewichts (Mw) der Siloxanoligomere größer gleich 430 g/mol bis 550 g/mol und das Zahlenmittel des Molekulargewichts (Mn) größer gleich 400 bis 450 g/mol, wobei die Polydispersität als Quotient aus Mw/Mn bei 1,00 bis 1,25, bei 1,00 bis 1,20, bevorzugt bis 1,00 bis 1,19 liegt und insbesondere die Strukturelemente zusammen in Bezug auf alle Silizium-Atome des Siloxanoligomers zu größer gleich 3 % als T-Struktur vorliegen.

Bevorzugt sind Zusammensetzungen, wobei größer gleich 85 % (Flächen-%, GPC), insbesondere größer gleich 90 % mit einem Molekulargewicht Mw von größer gleich 250 bis kleiner gleich 750 g/mol (Mw rel.) in der Gesamtzusammensetzung vorliegen. Alternativ oder zusätzlich ist es bevorzugt, wenn größer gleich 95 % ein Mw größer gleich 250 bis kleiner gleich 1000 g/mol aufweisen.

Zusätzlich zu vorgenannten Parametern liegen vorzugsweise die olefinisch funktionalisierte Siloxanoligomere zu größer gleich 85 % (Flächen-%) in Bezug auf die Gesamtzusammensetzung mit einem Molekulargewicht von größer gleich 250 bis 750 g/mol in der Gesamtzusammensetzung vor.

Weiter bevorzugt liegen in der Zusammensetzung die olefinisch funktionalisierten Siloxanoligomere zu größer gleich 95 % (Flächen-%) in Bezug auf die Gesamtzusammensetzung mit einem Molekulargewicht von größer gleich 250 bis 1000 g/mol in der Gesamtzusammensetzung vor. Die Flächen-% beziehen sich immer auf die Flächen-% der Gesamtzusammensetzung. Weiter weisen die erfindungsgemäßen Zusammensetzungen ein maximales Molekulargewicht von unter 2500 g/mol, bevorzugt von unter 2200 g/mol, weiter bevorzugt von unter 2100 g/mol auf, d.h. 100 % der Zusammensetzung weisen eine Molekulargewicht von kleiner gleich 2100 g/mol auf.

Gleichfalls liegen vorzugsweise in der Zusammensetzung die olefinisch funktionalisierten Siloxanoligomere vor, zu größer gleich 75 % (Flächen-%, GPC) als Disiloxan, Trisiloxan, Tetrasiloxan, Pentasiloxan, Cyclo-Trisiloxan, Cyclo-Tetrasiloxan, Cyclo-Pentasiloxan und/oder Cyclo-Hexasiloxan, insbesondere größer gleich 85 %, bevorzugt größer gleich 90 %, besonders bevorzugt größer gleich 95 %.

Ebenso können in der Zusammensetzung die olefinisch funktionalisierten Siloxanoligomere zu größer gleich 5 bis kleiner gleich 50 % (Flächen-%, GPC) als Disiloxan und/oder Cyclo-Trisiloxan vorliegen, insbesondere größer gleich 20 bis kleiner gleich 40 %, und größer gleich 20 bis kleiner gleich 50 % (Flächen-%, GPC) als Trisiloxan und/oder Cyclo-Tetrasiloxan, insbesondere größer gleich 20 bis kleiner gleich 45 %, sowie größer gleich 10 bis kleiner gleich 30 % (Flächen-%, GPC) als Tetrasiloxan und/oder Cyclo-Pentasiloxan, insbesondere größer gleich 10 bis kleiner gleich 25 %, und größer gleich 0 bis kleiner gleich 20 %, bevorzugt kleiner gleich 20 %, vorzugsweise 5 bis 20 %, 5 bis 17 %, besonders bevorzugt 5 bis 10 % und Pentasiloxan, und/oder Cyclo-Hexasiloxan liegen zu größer gleich 0 bis kleiner gleich 20 %, insbesondere zu größer gleich 5 bis kleiner 20 %, insbesondere zu größer gleich 5 bis kleiner gleich 10 % in der Gesamtzusammensetzung. Insbesondere liegen lineare oder verzweigte Hexasiloxane, Cyclo-Heptasiloxane und höhermolekulare Siloxanoligomere unter 10 Flächen-% in der Gesamtzusammensetzung vor, vorzugsweise kleiner gleich 9 %. Dabei liegt das maximale Molekulargewicht bei kleiner gleich 2000 g/mol. Besonders bevorzugt liegen größer gleich 70 % der Siloxanoligomere in der Zusammensetzung als Disiloxan, Cyclotrisiloxan, Trisiloxan, Cyclotetrasiloxan, Tetrasiloxan, Cyclopentasiloxan, Pentasiloxan und/oder als Cyclohexasiloxan vor, bevorzugt größer gleich 75 %, besonders bevorzugt größer gleich 80 %, weiter bevorzugt größer gleich 85 %. Alternativ liegen vorzugsweise größer gleich 90 % der Siloxanoligomere als Disiloxane bis zum Cyclohexasiloxan jedoch nicht als lineares und/oder verzweigtes Hexasiloxan, Cyclohetasiloxan und höhermolekular vor.

Bevorzugt sind Zusammensetzungen, in der die olefinischen Siloxanoligomere mit einem Molekulargewicht Mw größer gleich 250 bis 500 g/mol zu größer gleich 40 %, insbesondere zu größer gleich 45 %, bevorzugt zwischen 40 % bis 70% (Flächen-%, GPC), und die mit einem Molekulargewicht Mw größer gleich 500 bis 750 g/mol zu größer gleich 20 %, insbesondere zu größer gleich 25 %, bevorzugt größer gleich 20 bis kleiner gleich 35 %, und die mit einem Molekulargewicht von größer gleich 1000 g/mol zu kleiner gleich 12 %, insbesondere kleiner gleich 10 %, besonders bevorzugt kleiner gleich 7 % in Bezug auf die Gesamtzusammensetzung vorliegen. Molekulargewichte von 750 bis kleiner 1000 g/mol kleiner gleich können beispielsweise im Bereich bis zu 15 %, insbesondere kleiner gleich 12 % (Flächen-GPC) betragen.

Umesterungsprodukte können Alkoxysilane mit verschiedenen Alkoxy-Guppen umfassen, wie bspw. mit Methoxy- und Ethoxy-Gruppen funktionalisierte Alkoxysilane der Formeln II, II, IV oder auch der Formel I. Die Siloxanoligomere als auch die Alkoxysilane der Formeln II, III und IV können als Umesterungsprodukte vorliegen.

Dem Fachmann ist klar, dass die so hergestellten funktionellen Siloxanoligomere je nach gewünschter Anwendung mit einem Verdünnungsmittel verdünnt oder auch mit einem Polymer, wie einem thermoplastischen Basispolymer, wie PE, PP oder einem Elastomer, wie EVA versetzt oder compoundiert werden können. Weitere thermoplastische Basispolymere und Elastomere sind nachfolgend exemplarisch genannte, der Fachmann weiß, dass generell alle thermoplastischen Basispolymere bzw. Polymere oder Elastomere geeignet sind. Dem Fachmann sind übliche Verdünnungsmittel für Alkoxysiloxane bekannt, beispielsweise sind hier Alkohole, Ether, Ketone, Kohlenwasserstoffe, oder auch Mischungen dieser zu nennen. Die Zusammensetzungen der funktionellen Alkoxysilane können somit je nach gewünschter Anwendung als Konzentrat oder auch als verdünnte Zusammensetzung bei 99,9 bis 0,001 Gew.-% sowie alle dazwischen liegenden Werte, an funktionellen Siloxanoligomeren in der Gesamtzusammensetzung hergestellt werden. Bevorzugte Verdünnungen enthalten 10 bis 90 Gew.-% an funktionellen Siloxanoligomeren, besonders bevorzugt 20 bis 80 Gew.-%, weiter bevorzugt sind 30 bis 70 Gew.-%.

Um eine schnelle Verteilung im Extruder zu erlauben, ohne zu hohe Masseverluste in den heißen Extrudern zu erleiden ist ein ausgewogenes Verhältnis des Molekulargewichts Mw zur TGA Temperatur bei der 5% oder 50 % Masseverlust auftreten einzuhalten. Die vorgenannten Verbindungen zeigen üblicherweise Masseverlust von 50% bei Temperaturen oberhalb 200 °C, insbesondere oberhalb von 220 °C. Daher sind die erfindungsgemäßen Zusammensetzungen sehr gut zur Anwendung in Extrudern geeignet und erlauben zugleich aufgrund des sehr eng eingestellten Molekulargewichtes eine rasche Verteilung der Siloxanoligomere in den Thermoplasten. Zu dieser guten Verteilung tragen auch die leicht erhöhten T-Strukturen in den Siloxanen bei, da die Moleküle kompakter sind.

Als thermoplastische Basispolymere im Sinne der Erfindung werden insbesondere Acrylnitril-Butadien-Styrol (ABS), Polyamide (PA), Polymethylmethacrylat (PMMA), Polycarbonat (PC), Polyethylen (PE), wie LDPE, LLD-PE, m-PE, Polypropylen (PP), Polystyrol (PS), Polyvinylchlorid (PVC), Chlorpren, sowie die auf Ethylen-Einheiten basierenden Polymere Ethylen-Vinylacetat-Copolymere (EVA), EPDM oder EPM und/oder Celluloid oder silan-co-polymerisierte Polymere verstanden und beispielsweise aus ungesättigten funktionellen Monomeren inkl. Silanen, wie VTMO, VTEO, und Monomeren wie Ethylen und anderen Olefinen hergestellte Basispolymere, Monomere und/oder Prepolymere Vorläuferverbindungen dieser Basispolymere, wie Ethylen, Propylen. Weitere bevorzugte Elastomere können ausgewählt werden aus der Reihe Ethylen-Propylen-Kautschuk (EPR), Ethylen-Propylen-Dien-Kautschuk (EPDM), Styrol-Butadien-Kautschuk (SBR), Naturkautschuk (NR), Acrylatcopolymerkautschuk (ACM), Acrylnitril-Butadien-Kautschuk (NBR) und/oder Polybutadien-Kautschuk (BR).

Gegenstand der Erfindung ist auch die Verwendung der erfindungsgemäßen Zusammensetzung oder der nach dem erfindungsgemäßen Verfahren hergestellten Zusammensetzungen als Haftmittel, als Vernetzungsmittel durch Pfropfpolymerisation und/oder hydrolytische Kondensation in an sich bekannter Weise, zur Herstellung von mit olefinisch funktionalisierten Siloxanoligomeren gepfropfter Polymere, PrePolymere und/oder von mineralisch gefüllten Polymeren (Compounds), insbesondere bei der Herstellung von Thermoplasten oder Elastomeren, bevorzugt von mineralisch gefüllten Thermoplasten, Elastomeren oder von Pre-Polymeren dieser, zur Pfropfung oder bei der Polymerisation thermoplastischer Polyolefine, als Trockenmittel, insbesondere als Wasserfänger für Silikondichtmassen, in vernetzbaren Polymeren zur Herstellung von Kabeln, zur Herstellung vernetzbarer Polymere, als Ölphase in einer Emulsion und/oder gemeinsam mit Organosilanen oder Organopolysiloxanen. Zur erfindungsgemäßen gemeinsamen Verwendung der Zusammensetzung mit Organosilanen oder Organosiloxanen wird vollständig auf die Offenbarung der EP 1 205 481 B1 Bezug genommen, insbesondere auf den Offenbarungsgehalt des Absatzes [0039] und auf die dort offenbarte Liste an Organosilanen und Organosiloxanen.

Ferner finden erfindungsgemäße Zusammensetzungen vorteilhaft Verwendung zur Füllstoffmodifizierung (Füllstoffbeschichtung), Harzmodifizierung (Additiv), Oberflächenmodifizierung (Funktionalisierung, Hydrophobierung), als Bestandteil in Beschichtungssystemen (insbesondere Sol-Gel Systeme oder Hybridsysteme), zur Modifizierung von Kathoden und Anodenmaterialien in Batterien, als Elektrolytflüssigkeit, als Additiv in Elektrolytflüssigkeiten, für die Modifizierung von Fasern, insbesondere Glasfasern und Naturfasern, sowie zur Modifizierung von Textilien, zur Modifizierung von Füllstoffen für die Kunststeinindustrie, als Bautenschutzmittel oder Bestandteil in Bautenschutzmittel, als Zusatz für mineralisch härtende Massen, zur Modifizierung von Holz, Holzfasern und Cellulose.

Die Erfindung wird anhand der folgenden Beispiele näher erläutert ohne sie auf diese Ausführungsbeispiele zu begrenzen.

**Beispiele:**

Bestimmung des Molekulargewichts: Die Bestimmung von Molmassen bzw. des Molekulargewichts sowie der Molmassenverteilung kann mittels Gelpermeationschromatographie (GPC) erfolgen. Das GPC-Analyseverfahren wird u. a. in "Modern Size-Exclusion Liquid Chromatography", Andre Striegel et al, Verlag Wiley & Sons, 2. Aufl. 2009, ausführlich beschrieben. Dabei kann man zur Kalibrierung der Methode für Siloxananalysen als Standard beispielsweise Divinyltetramethoxydisiloxan oder Divinylteraethoxydisiloxan verwenden. Prozentangaben in Bezug auf die olefinischen Siloxanoligomere im vorliegenden Dokument entsprechen einer Angabe in Flächenprozent, die aus GPC-Analysen ermittelt werden können.

Verwendete Säulen MZ-Analysetechnik: Säulen: 50x8.0 mm, MZ-Gel SDplus (Styrol-/ Divinylbenzol-Copolymer mit hohem Vernetzungsgrad, sphärische Teilchenform), Porosität 50A (Angstroem, Å), 5 $\mu$m (Mikrometer) (Vorsäule), 300x8.0 mm, MZ-Gel SDplus, Porosität 50A (Angstroem, Å), 5 $\mu$m, 300x8.0 mm, MZ-Gelplus, Porosität 100A (Angstroem, Å), 5 $\mu$m, 300x8.0mm, MZ-Gel SDplus, Porosität 500A (Angstroem, Å), 5 $\mu$m; Elutionsmittel und Pumpenfluss: Methylketon (MEK) bei 1 ml/min, Standardsubstanz: Interner Standard - 1 g/l Ethylbenzol in 1 %iger Proben-Lösung. Das Messgerät wird zuvor gegen die jeweilige Substanz kalibriet (Monomer, Dimer, Trisiloxan etc.). Messgerät von Agilent: 1100 Series isotaktische Pumpe G1310A, 1100 Series Säulenofen G1316A, 1100 Series RID Detektor G1362A, Manueller Injektor G1328A, Vakuum Degasser G1322A, GPC-Software (PSS WinGPC Unity).

Bestimmung des Chlorgehaltes bzw. des Gesamtchlorid-Wertes: In einer Kalorimeterbombe wird das Silan mit Sauerstoff aufgeschlossen und anschließend mit Essigsäure und Flusssäure hydrolysiert. In der erhaltenen Lösung wird der Chloridgehalt durch Titration mit einer wohl definierten Silbernitratlösung bestimmt.

Bestimmung des Chlorgehaltes sowie des hydrolysierbaren Chlorids: Nach Hydrolyse mit Essigsäure. wird der Chloridgehalt durch Titration mit einer wohl definierten Silbernitratlösung bestimmt.

Bestimmung des SiO2-Gehaltes - Tiegelmethode: Der SiO2 Gehalt wird durch sauren Aufschluss mit konzentrierter Schwefelsäure und nachfolgender Verdampfung durch Fluorinierung bestimmt.

GC-Analytik: Im Rahmen der dem Fachmann wohl bekannten GC-Standardanalytik wird der Monomergehalt durch eine geeignete Kalibrierung und ggf. internen Standard bestimmt.

$^{29}$Si-NMR-Spektrometrie: Ferner kann zur Bestimmung des Monomerengehalts sowie von M-, D- und T-Strukturen kann dem Fachmann ebenfalls wohl bekannte $^{29}$Si-NMR-Spektrometrie eingesetzt werden.

Bestimmung der dynamischen Viskosität: Die Bestimmung der dynamischen Viskosität wurde gemäß DIN 53015 durchgeführt.

## 1. Synthesen

### 1.1 VTMO-Oligomer mit Alkoholdosierung - V082

Durchführung: In einer 2-l-Apparatur werden 401,2 g VTMO (Vinyltrimethoxysilan) vorgelegt und einem Anteil Methanol verdünnt. Im Anschluss wird ein Gemisch aus Methanol, Bi-Dest-Wasser und Salzsäure (37 %) bei 25 °C und Umgebungsdruck unter Rühren zudosiert. Es findet eine exotherme Reaktion statt. Sollte die Temperatur über 45 °C steigen wird die Dosierung unterbrochen. Die Gesamtreaktionszeit beläuft sich auf 5 Stunden beginnend bei der Dosierung des H$_2$O/HCl/Methanol-Gemisches. Nach der Reaktionszeit wird am Rotationsverdampfer der Alkohol bei bis zu 90 °C und 100mbar destilliert. Nach Erreichen der 100mbar wird dieser 15 Minuten gehalten bevor die Anlage entlastet wird. Der erhaltene Sumpf ist eine VTMO-Siloxan-Oligomeren-Zusammensetzung und wird als "Sumpf 1" bezeichnet. Nun erfolgt eine Probenentnahme. Sumpf 1 wird erneut mit 256,91 g Methanol vermischt und 30 Minuten bei 25 °C gerührt. Im Anschluss erfolgt am Rotationsverdampfer bei bis zu 90 °C und 100 mbar die Methanoldestillation. Nach Erreichen der 100mbar wird dieser 15 Minuten gehalten bevor die Anlage entlastet wird. Der erhaltene Sumpf ist eine VTMO-Siloxan-Oligomeren-Zusammensetzung, basierend auf VTMO und wird als "Sumpf 2" benannt.

Tabelle 1: Rohstoffe V082

| Stoff | Einwaage |
|---|---|
| Methanol (Verdünnung) | 83,5g |
| Methanol (Dosierung) | 173,2g |
| Salzsäure | 0,43g |
| Wasser Bi-Dest | 39,7g |

### 1.2 VTEO-Siloxanoligomer mit Alkoholdosierung - V083

Durchführung: In einer 2-l-Apparatur werden 400,0 g VTEO vorgelegt. Im Anschluss wird ein Gemisch aus Ethanol, Bi-Dest-Wasser und Salzsäure (37 %) bei 35 °C und Umgebungsdruck unter rühren zudosiert. Es findet eine exotherme Reaktion statt. Sollte die Temperatur über 60 °C steigen wird die Dosierung unterbrochen. Die Gesamtreaktionszeit beläuft sich auf 5 Stunden beginnend bei 77 °C nach vollständiger Dosierung des H$_2$O/EtOH/HCl-Gemisches. Nach der Reaktionszeit wird am Rotationsverdampfer der Alkohol bei bis zu 100 °C und 100mbar destilliert. Nach Erreichen der 100 mbar wird dieser noch 15 Minuten gehalten bevor die Anlage entlastet wird. Der erhaltene Sumpf ist eine VTEO-Siloxan-Oligomeren-Zusammensetzung und wird als "Sumpf 1" benannt. Es erfolgt eine Probenahme. Sumpf 1 wird erneut mit 190,46 g Ethanol vermischt und 30 Minuten bei 35 °C gerührt. Im Anschluss erfolgt am Rotationsverdampfer bei bis zu 100 °C und 100mbar die Ethanoldestillation. Nach Erreichen der 100 mbar wird dieser 15 Minuten gehalten bevor die Anlage entlastet wird. Der erhaltene Sumpf ist VTEO-Siloxan-Oligomeren-Zusammensetzung und wird als "Sumpf 2" benannt.

Tabelle 2: Rohstoffe V083

| Stoff | Einwaage |
|---|---|
| Ethanol | 190,50 |
| Wasser | 30,64 |
| Salzsäure | 0,24 |

**1.3 VTEO/PTEO-Siloxanoligomer mit Alkoholdosierung - V084**

Durchführung: In einer 2-I-Apparatur werden 211,7 g Vinyltriethoxysilan (VTEO) und 216,5 g Propyltriethoxysilan (PTEO) vorgelegt. Im Anschluss wird ein Gemisch aus Ethanol, Bi-Dest-Wasser und Salzsäure (37 %) bei 35 °C und Umgebungsdruck unter Rühren zudosiert. Es findet eine exotherme Reaktion statt. Sollte die Temperatur über 60 °C steigen wird die Dosierung unterbrochen. Die Gesamtreaktionszeit beläuft sich auf 5 Stunden beginnend bei 79 °C nach vollständiger Dosierung des $H_2O$/EtOH/HCl-Gemisches. Nach der Reaktionszeit wird am Rotationsverdampfer der Alkohol bei bis zu 100 °C und 100 mbar destilliert. Nach Erreichen der 100 mbar wird dieser noch 15 Minuten gehalten bevor die Anlage entlastet wird. Der erhaltene Sumpf ist ein VTEO/PTEO-Siloxan-Oligomeren-Zusammensetzung und wird als "Sumpf 1" bezeichnet. Es erfolgt eine Probenentnahme. Sumpf 1 wird erneut mit 189,50 g Ethanol vermischt und 30 Minuten bei 25 °C gerührt. Im Anschluss erfolgt am Rotationsverdampfer bei bis zu 100 °C und 100 mbar die Ethanoldestillation. Nach Erreichen der 100 mbar wird dieser 15 Minuten gehalten bevor die Anlage entlastet wird. Der erhaltene Sumpf ist eine VTEO/PTEO-Siloxan-Oligomeren-Zusammensetzung und wird als "Sumpf 2" bezeichnet.

Tabelle 3: Rohstoffe V084

| Stoff | Einwaage |
|---|---|
| Wasser | 29,6g |
| Ethanol | 189,5g |
| HCl | 0,22g |

**2. Ionentauscher - beim erfindungsgemäßen Verfahren integrierbar**

Beispiel 2.1: 150 g Vinyl-/Alkyl-funktionelles Siloxancooligomer (Gehalt an hydrolysierbarem Chlorid: 255 Gew.-ppm bzw. mg/kg) wurden mit einer Fließgeschwindigkeit von 2,01 m/h über den Ionentauscher Lewatit MP 62 (erhältlich von der Firma Lanxess) in der $OH^-$-Form gegeben. Es wurde nach Aufarbeitung 140,1 g Vinyl-/Alkyl-funktionelles Siloxancooligomer mit 32 Gew.-ppm hydrolysierbarem Chlorid erhalten. Der Ethanolgehalt des nach Eluation erhaltenen geruchlosen Produktes betrug 18 w% EtOH. EtOH konnte am Rotationsverdampfer entfernt werden.

Beispiel 2.2: 150 g Vinyl-/Alkyl-funktionelles Siloxancooligomer (Gehalt an hydrolysierbarem Chlorid: 110 Gew.-ppm) wurden mit einer Fließgeschwindigkeit von 2,05 m/h über den Ionentauscher Lewatit MP 62 (erhältlich von der Firma Lanxess) in der $OH^-$-Form gegeben. Es wurde nach Aufarbeitung 142,8 g Vinyl-/Alkyl-funktionelles Siloxancooligomer mit 4 Gew.-ppm hydrolysierbarem Chlorid erhalten.

**3. Analytik**

**3.1 Allgemeine Analytik**

Tabelle 4: Analysenergebnisse aus V082, V083 und V084

| Versuchs-Nr. | V082 | | V083 | | V084 | |
|---|---|---|---|---|---|---|
| | "Sumpf 1" | "Sumpf 2" | "Sumpf 1" | "Sumpf 2" | "Sumpf 1" | "Sumpf 2" |
| Gesamtchlorid [mg/kg] | <35 | 40 | 35 | <35 | 115 | 70 |
| Hydrol. Chlorid [mg/kg] | 24 | 4 | 3 | <3 | 4 | 4 |
| $SiO_2$ [Massen-%] | 54,7 | 54,9 | 45,4 | 45,4 | 41,6 | 41,6 |
| Freier Alkohol [Massen-%] | 0,3 | 0,2 | 0,7 | 0,7 | 0,5 | 0,5 |
| Monomer [Massen-%] | 1,7 | 0,7 | 1,5 | 0,9 | 3,2 | 2,5 |

### 3.2. GPC-Analysen

Tabelle 5a: Ergebnisse der GPC-Analysen zu den Beispielen V082, V083 und V084

| Versuchs-Nr. | Mn [g/mol]l | Mw [g/mol] | D |
|---|---|---|---|
| V082 Sumpf1 | 424,50 | 516,97 | 1,2191 |
| V082 Sumpf2 | 425,90 | 513,49 | 1,2056 |
| V083 Sumpf1 | 409,36 | 476,39 | 1,1638 |
| V083 Sumpf2 | 426,97 | 492,92 | 1,1545 |
| V084 Sumpf1 | 416,27 | 456,23 | 1,0960 |
| V084 Sumpf2 | 423,00 | 464,28 | 1,0976 |

Tabelle 5b: Ergebnisse der GPC-Analysen zu analog den Beispielen 1.1 - V082, Bsp. 1.2 - V083 und Bsp. 1.3 - V084 hergestellten weiteren Siloxanoligomeren.

| analoge Versuche | Mn g/mol | Mw g/mol | D | Mmax [g/mol] |
|---|---|---|---|---|
| V082 Sumpf1 | 474 | 556,3 | 1,17 | 2000 |
| V082 Sumpf2 | 482,9 | 561,1 | 1,16 | 2000 |
| V083 Sumpf1 | 435,4 | 488,2 | 1,12 | 1300 |
| V083 Sumpf2 | 447,9 | 503,4 | 1,12 | 1500 |
| V084 Sumpf1 | 427,2 | 469,7 | 1,09 | 1200 |
| V084 Sumpf2 | 427,7 | 475,7 | 1,11 | 1200 |

Tabelle 5c: Erläuterung s. Tabelle 5d

| analog zu | < Disiloxan [%] | Disiloxan + Cyclo-Trisiloxan [%] | Trisiloxan + Cyclo-Tetrasiloxan [%] | Tetrasiloxan + Cyclo-Pentasiloxan [%] | Pentasiloxan + Cyclo-Hexasiloxan [%] | > Pentasiloxan [%] |
|---|---|---|---|---|---|---|
| V082 Sumpf1 | < 0,1 | 8,9 | 25,8 | 23,3 | 14,8 | 17,3 |
| V082 Sumpf2 | < 0,1 | 8,5 | 25,5 | 23,4 | 15,2 | 27,5 |
| V083 Sumpf1 | 1,4 | 25,1 | 39,8 | 17,7 | 8,4 | 7,6 |

(fortgesetzt)

| analog zu | < Disiloxan [%] | Disiloxan + Cyclo-Trisiloxan [%] | Trisiloxan + Cyclo-Tetrasiloxan [%] | Tetrasiloxan + Cyclo-Pentasiloxan [%] | Pentasiloxan + Cyclo-Hexasiloxan [%] | > Pentasiloxan [%] |
|---|---|---|---|---|---|---|
| V083 Sumpf2 | < 0,1 | 23,4 | 40,5 | 18,2 | 8,9 | 8,9 |
| V084 Sumpf1 | 2,5 | 36,5 | 38 | 14,1 | 5,5 | 3,5 |
| V084 Sumpf2 | 2 | 35,2 | 38 | 14,5 | 5,9 | 4,4 |

Tabelle 5d: Ergebnisse der GPC-Analysen (Anteile in Flächen-%) der analog den Beispielen 1.1 - V082, Bsp. 1.2 - V083 und Bsp. 1.3 - V084 hergestellten weiteren Siloxanoligomeren.

| | 0 - 250 rel. MW [%] | 250 - 500 rel. MW [%] | 500 - 750 rel. MW [%] | 750 - 1000 rel. MW [%] | > 1000 rel. MW [%] |
|---|---|---|---|---|---|
| V082 Sumpf1 | 1,46 | 48,84 | 32,03 | 12,21 | 5,47 |
| V082 Sumpf2 | 1,35 | 48,12 | 32,47 | 12,45 | 5,61 |
| V083 Sumpf1 | 1,85 | 63,56 | 26,44 | 6,65 | 1,5 |
| V083 Sumpf2 | 0,51 | 62,57 | 27,41 | 7,41 | 2,1 |
| V084 Sumpf1 | 2,45 | 66,73 | 25,47 | 4,64 | 0,71 |
| V084 Sumpf2 | 2 | 65,81 | 25,96 | 5,26 | 0,97 |

Tabelle 6: Ergebnisse aus NMR-Analysen zu V082

| Versuchs-Nr. | $^1$H- und $^{13}$C-NMR | Anteile in den Siloxanoligomeren-Zusammensetzungen | | | |
|---|---|---|---|---|---|
| | | Silanmonomer [mol-%] | M-Struktur [mol-%] | D-Struktur [mol-%] | T-Struktur [mol-%] |
| V082 Sumpf1 | 1,4mol SiOMe | 1,1 (VTMO) | 41,1 | 49,8 | 8,0 |
| V082 Sumpf2 | 1,3mol SiOMe | 0,5 (VTMO) | 40,4 | 50,4 | 8,7 |

Tabelle 7: Ergebnisse aus NMR-Analysen zu V083

| Versuchs-Nr. | $^1$H- und $^{13}$C-NMR | Anteile in den Siloxanoligomeren-Zusammensetzungen | | | |
|---|---|---|---|---|---|
| | | Silanmonomer [mol-%] | M-Struktur [mol-%] | D-Struktur [mol-%] | T-Struktur [mol-%] |
| V083 Sumpf1 | 1,4mol SiOEt | 1,0 (VTEO) | 56,2 | 39,8 | 3,0 |
| V083 Sumpf2 | 1,4mol SiOEt | 0,6 (VTEO) | 52,7 | 42,6 | 4,1 |

Tabelle 8: Ergebnisse aus NMR-Analysen zu V084

| Versuchs-Nr. | $^1$H- und $^{13}$C-NMR | Anteile in den Siloxanoligomeren-Zusammensetzungen | | | |
|---|---|---|---|---|---|
| | | Silanmonomer [mol-%] | M-Struktur [mol-%] | D-Struktur [mol-%] | T-Struktur [mol-%] |
| V084 Sumpf1 | 3,0mol SiOEt und 0,94mol Propylsilyl | - (VTEO) | 33,4 | 17,6 | 0,9 |
| | | 1,8 (PTEO) | 33,9 | 12,4 | - |
| V084 Sumpf2 | 3,0mol SiOEt und 0,94mol Propylsilyl | - (VTEO) | 33,8 | 16,4 | 1,0 |
| | | 1,4 (PTEO) | 35,1 | 12,3 | - |

## 4. Vergleichsbeispiele

**Vergleichsbeispiel 1:**

V078 - Beispiel 1 aus EP0518057 B1 - Herstellung eines Cokondensats aus Vinyltrimethoxysilan und Methyltrimethoxysilan mit einem Molverhältnis Vinyl-: Methoxy-Gruppen von rd. 1 : 3

Durchführung: In einer 2-I-Vierhalsapparatur mit Wasserkühler und Magnetrührer wurden 397,6 g Vinyltrimethoxysilan (VTMO) und 244,6 g Methyltrimethoxysilan bei 20°C vorgelegt. Das Gemisch wurde mit einer 2400 ppm Chlorwasserstoff enthaltenden Lösung von 49,9 g destilliertem Wasser in 332,8 g Methanol versetzt; dazu diente ein 500 ml Tropftrichter. Nach insgesamt 16 Stunden wurde das gesamte Methanol samt HCl bei ca. 300 mbar abdestilliert. Danach wurde das so erhaltene Oligomerengemisch bis zu einem Druck von ca. 1 mbar und einem Siedeintervall bis 113°C destilliert. So wurden 170 g klares Produkt gewonnen.

Tabelle 9: Rohstoffe V078

| Stoff | Lieferant | Einwaage |
|---|---|---|
| VTMO | Evonik Degussa GmbH | 397,6 g |
| MTMS | Evonik Degussa GmbH | 244,6 g |
| Salzsäure 2400ppm | Merck (HCl 37%) Wasser Bidest | 49,9 g |
| Methanol | ROTH | 332,8 g |

**Vergleichsbeispiel 2:**

V081 - Beispiel 6 aus EP 0518057 B1 - Herstellung eines Kondensats aus Vinyltrimethoxysilan mit einem Molverhältnis von Vinyl- : Methoxy-Gruppen von ca. 1 : 1,75:

Durchführung: In einer 2I-Vierhalsapparatur mit Wasserkühler und Magnetrührer wurden 693,83 g VTMO bei 20 °C vorgelegt. Das Gemisch wurde mit einer 1100 ppm Chlorwasserstoff enthaltenden Lösung von 52,82 g destilliertem Wasser in 351,53 g Methanol versetzt. Dazu diente ein 500ml Tropftrichter. Die Temperatur stieg innerhalb von 26 Minuten auf ca. 36 °C an. Nach insgesamt 13 Stunden wurde das gesamte Methanol samt Salzsäure innerhalb von 2 - 3 Stunden bei ca. 300 mbar abdestilliert. Danach wurde das so erhaltene Oligomerengemisch bis zu einem Druck von ca. 1 mbar und einem Siedeintervall bis 100 °C destilliert. So wurden 240 g klares Produkt gewonnen.

Tabelle 10: Rohstoffe V081

| Stoff | Lieferant | Einwaage |
|---|---|---|
| VTMO | Evonik Degussa GmbH | 693,7 g |
| Methanol | | 351,5 g |
| Salzsäure 1100ppm | Merck (HCl 37%) Wasser Bidest | 52,8 g |

**Analyenergebnisse zu den Vergleichsversuchen:**

Tabelle 11: Analysenergebnisse zu V078 (Vergleichsbeispiel 1)

| Versuchs-Nr. V078 | Gesamtchloride [mg/kg] | hydrolysierbares Chlorid [mg/kg] | $SiO_2$ (Masse) [%] | VTMO (Masse) [%] | Farbzahl [mg Pt-Co/l] |
|---|---|---|---|---|---|
| Destillat (vgl. Beispiel 1 in EP0518057B1) | 230 | 16 | 52,4 | <0,1 | <5 |

Tabelle 12: Analysenergebnisse zu V081 (Vergleichsbeispiel 2)

| Versuchs-Nr. V081 | Gesamtchloride [mg/kg] | hydrolysierbares Chlorid [mg/kg] | $SiO_2$ (Masse) [%] | VTMO (Masse) [%] | Farbzahl [mg Pt-Co/l] |
|---|---|---|---|---|---|
| Destillat (vgl. Beispiel 6 in EP0518057B1) | 50 | <3 | 48,6 | 1,7 | <5 |

Tabelle 13: Auswertung der GPC-Analysenergebnisse

| Versuchs- Nummer | Mn [g/mol] | Mw [g/mol] | D = Mw/Mn |
|---|---|---|---|
| V078 | 275,13 | 291,11 | 1,0581 |
| V081 | 254,06 | 269,90 | 1,0624 |

Tabelle 14: Ergebnisse aus den $^{29}$Si-NMR-Analysen an den Produkten aus den Vergleichsversuchen V078 und V081, [VS= Vinylsilyl, MS= Methylsilyl]

| Vergleichsversuchs-Nr. | Anteile in den Siloxanoligomeren-Zusammensetzungen | | | |
|---|---|---|---|---|
| | M-Struktur [mol-%] | D-Struktur [mol-%] | T-Struktur [mol-%] | Silan Monomer [mol-%] |
| V078 | 52,1 (VS) | 9,1 (VS) | - (VS) | 0,9 (VTMO) |
| | 29,3 (MS) | 8,6 (MS) | - (MS) | - (MTMS) |
| V081 | 91,8 (VS) | 6,8 (VS) | - (VS) | 1,2 (VTMO) |

## 5. Anwendungstechnische Versuche

Tabelle 14: Produktzuordnung für AT-Versuche

| Produkt aus Versuchs-Nr. | AT-Versuchs-Nr. |
|---|---|
| V082 Sumpf 1 | - |
| V082 Sumpf 2 | V127 |
| V083 Sumpf 1 | - |
| V083 Sumpf 2 | V128 |
| V084 Sumpf 1 | - |
| V084 Sumpf 2 | V129 |
| V078 | V116 |
| V081 | V118 |

**5.1 Knetversuche**

Folgende Knetungen wurden mit einem Temp.-Profil von "3min bei 140 °C, von 140 °C auf 170 °C in 2min, 5min bei 170 °C" bei einer Drehzahl von 30 U/min im HAAKE-Kneter bearbeitet. Von jedem Ansatz wurden anschließend je zwei Platten bei 190 °C und einem Lastdruck von 20t gepresst. Um die Zugabe des Peroxides zu vereinfachen wurden Silan/Peroxid-Lösungen angesetzt.

**5.2 Vorbereitung der Messkörper**

Von den hergestellten Proben wurden nach einer Lagerung von bei 23 °C und 50 % relativer Luftfeuchtigkeit im Klimaraum, Probekörper für Zugversuche und die Bestimmung der Wasseraufnahmefähigkeit bzw. Bestimmung des Schmelzindex gemacht.

Tabelle 15: Rohstoffe und Chargen der Anwendungstechnik

| Stoff | Charge |
|-------|--------|
| ATH | M56/15 |
| EVA | M56/156 |
| DCUP | M56/026 |

Tabelle 16: Peroxid-Mischungen für Knetungen

| Siloxanoligomer-DCUP-Lsg. Charge | Einwaage DCUP | Siloxanoligomereinwaage | für AT-Versuch Nr. |
|---|---|---|---|
| V078 | 9,81g | 0,19g | V116 |
| V081 | 9,81g | 0,19g | V118 |
| V082 | 9,81g | 0,19g | V127 |
| V083 | 9,81g | 0,19g | V128 |
| V084 | 9,82g | 0,19g | V129 |

Tabelle 17: Einwaagen der Knetversuche

| Versuchs- Nr. | Einwaage EVA | Einwaage ATH | Einwaage DCUP-Silanoxanoligomer-Lsg | Silanoligomer-DCUP-Lsg. Charge |
|---|---|---|---|---|
| V116 | 27,72g | 41,61g | 0,45g | V078 |
| V118 | 27,72g | 41,61g | 0,44g | V081 |
| V127 | 27,72g | 41,61g | 0,42g | V082 |
| V128 | 27,72g | 41,61g | 0,42g | V083 |
| V129 | 27,72g | 41,61g | 0,44g | V084 |
| V153 (Blindprobe) | 27,72g | 41,61g | - | - |

**5.3 Bestimmungen des Schmelzindex (MFR) und des Volumen-Fließindex (MVR)**

Die Bearbeitung und Auswertung erfolgte in Anlehnung an die DIN ISO 1133 (Verfahren B), auf deren Inhalt vollständig Bezug genommen und zum Inhalt der Anmeldung gemacht wird. Prüfgerät: Zwick Fließprüfgerät 4106. Die Schmelzindex-(MFR) bzw. Volumen-Fließindexbestimmung (MVR) erfolgt unter festgelegter Scherbelastung und definierter Temperatur ($T_{PT}$) und definierter Belastung ($m_{nom}$) einer Kunststoffschmelze durch eine Normdüse. Ermittelt wird die Wegänderung des Stempels über die Zeit und gemäß den, dem Fachmann bekannten Formeln MVR und MRF berechnet. Es wurden ~7 g der einzelnen Proben kleingeschnitten und bei einer Temperatur von 160 °C und einer Belastung von 21,6 kg ist der Schmelzindex ("MFR") bestimmt worden.

Tabelle 18: Ergebnisse zur Analyse des Schmelzindex (MFR) und des Volumen-Fließindex (MVR) aus V116 und V118

| Versuchs-Nr. | V116 | V118 |
|---|---|---|
| Siloxanoligomer aus | V078 | V081 |
| Versuchstemperatur | 160°C | |
| Vorheizzeit | 4min | |
| Belastungsgewicht | 21,6 kg | |
| MFR [g min] | 3,19 | 3,39 |
| MVR [$cm^3$ min] | 2,36 | 2,51 |
| Dichte [$g/cm^3$] | 1,352 | 1,348 |

Tabelle 19: Ergebnisse zur Analyse des Schmelzindex (MFR) und des Volumen-Fließindex (MVR) aus V127, V128, V129 und V153 (Blindprobe)

| Versuchs-Nr. | V153 | V127 | V128 | V129 |
|---|---|---|---|---|
| Siloxanoligomer aus | - | V082 | V083 | V084 |
| Versuchstemperatur | 160°C | | | |
| Vorheizzeit | 4min | | | |
| Belastungsgewicht | 21,6kg | | | |
| MFR [g min] | 2,03 | 3,27 | 3,47 | 3,67 |
| MVR [$cm^3$ min] | 1,50 | 2,43 | 2,57 | 2,72 |
| Dichte [$g/cm^3$] | 1,349 | 1,350 | 1,351 | 1,351 |

**5.4 Wasseraufnahmefähigkeit**

**5.4.1 Bestimmung der Wasseraufnahmefähigkeit**

Prüfkörper definierter Geometrie werden unter definierten Bedingungen (Temperatur, Zeit) in einem Wasserbad gelagert. Dabei wird die sich ergebende Gewichtsänderung der Proben vor, während der Lagerung und nach den Trocknungsvorgängen erfasst. Die Wasseraufnahmefähigkeit wurde mittels der hergestellten Probekörper nach einem Zeitraum von 24 Stunden durch eine Dreifachbestimmung ermittelt, indem diese für den besagten Zeitraum im Wasserbad bei 70 °C gelagert wurden.

Tabelle 20: Ergebnisse der Wasseraufnahmefähigkeit

| Versuchs-Nr. | Wert [mg/cm] nach 7d Lagerung |
|---|---|
| V153 | 3,81 |
| V116 | 1,55 |
| V118 | 1,40 |
| V127 | 1,22 |
| V128 | 1,64 |
| V129 | 1,64 |

**5.5 Bestimmung der Zugeigenschaften**

Die Bestimmung der Zugeigenschafen erfolgte in Anlehnung an die DIN EN ISO 527-1, 527-2, 527-3, auf deren Inhalt vollständig Bezug genommen und zum Inhalt der Anmeldung gemacht wird. Dazu wird ein Probenstab definierter Geometrie in die Zugprüfmaschine eingespannt und bis zum Bruch einachsig belastet (einachsige Dehnung bei definierter Dehngeschwindigkeit). Aufgenommen wird dabei die Spannungsänderung am Probenstab über die Dehnung des Probenkörpers und die Zugfestigkeit und die Bruchdehnung ermittelt. Prüfgerät Zwick Universalprüfgerät 4115. Mittels der hergestellten Probekörper bzw. Zugstäbe ("Bones"), sind nach 24h Lagerung im Klimaraum bei 23°C und 50% relativer Luftfeuchtigkeit, die Zugeigenschaften (Bruchdehnung und Zugfestigkeit) der Proben, mit einer Prüfgeschwindigkeit von 200mm/min und einer Vorkraft von 0,2 MPa durch eine Fünffachbestimmung ermittelt worden.

Tabelle 21: Gesamtübersicht Ergebnisse Zugeigenschaften und Bruchdehnungen

| Produkt aus Versuch Nr. | AT-Versuchs-Nr. | Bruchdehnung [%] | Zugfestigkeit [MPa] |
|---|---|---|---|
| V082 | V127 | 73,81 | 8,87 |
| V083 | V128 | 88,01 | 8,14 |
| V084 | V129 | 55,15 | 8,07 |
| V078 | V116 | 80,37 | 8,66 |
| V081 | V118 | 85,61 | 9,31 |

**Patentansprüche**

1. Verfahren zur Herstellung einer Zusammensetzung enthaltend olefinisch funktionalisierte Siloxanoligomere, indem mindestens

   (i) ein olefinisch-funktionalisiertes Alkoxysilan der allgemeinen Formel II,

   $$A\text{-}Si(R^2)_x(OR^1)_{3-x} \qquad (II),$$

   wobei in Formel II A einem olefinischen Rest entspricht, der ausgewählt ist aus einer linearen, verzweigten oder cyclischen Alkenyl- oder Cycloalkenyl-alkylen-funktionelle Gruppe mit jeweils 2 bis 16 C-Atomen, $R^2$ unabhängig einem linearen, verzweigten oder cyclischen Alkyl-Rest mit 1 bis 15 C-Atomen und x gleich 0 oder 1 und $R^1$ unabhängig einem linearen, verzweigten oder cyclischen Alkyl-Rest mit 1 bis 4 C-Atomen entsprechen,
   (ii) in Gegenwart eines Hydrolyse- und/oder Kondensationskatalysators
   (iii) mit einer definierten Menge Wasser in Gegenwart von Alkohol als Lösemittels zu den Siloxanoligomeren umgesetzt wird und
   (iv) der Hydrolysealkohol und das vorliegende Lösemittel im Wesentlichen abgetrennt werden und
   (v) mindestens einmal während Schritt (iv) oder nachfolgend eine definierte Menge Alkohol nachdosiert und abtrennt,
   (vi) wobei ein Gehalt an Gesamtchlorid in der Zusammensetzung kleiner gleich 100 mg/kg und
   (vii) ein Gewichtsmittel des Molekulargewichts (Mw) größer gleich 410 g/mol erhalten wird.

2. Verfahren nach Anspruch 1, **dadurch gekennzeichnet, dass** (i) ein olefinisch-funktionalisiertes Alkoxysilan der allgemeinen Formel II in (ii) in Gegenwart eines Hydrolyse- und/oder Kondensationskatalysators mit (i.1) mindestens einem Alkoxysilan der Formel III umgesetzt wird,

   $$B\text{-}Si(R^4)_y(OR^3)_{3-y} \qquad (III),$$

   wobei in Formel III B einem gesättigten Kohlenwasserstoff-Rest entspricht, der ausgewählt ist aus einem linearen, verzweigten oder cyclischen Alkyl-Rest mit 1 bis 16 C-Atomen, $R^3$ jeweils unabhängig voneinander einem linearen, verzweigten oder cyclischen Alkyl-Rest mit 1 bis 4 C-Atomen und $R^4$ einem linearen, verzweigten oder cyclischen Alkyl-Rest mit 1 bis 15 C-Atomen entsprechen und y gleich 0 oder 1 ist.

3. Verfahren nach Anspruch 1 oder 2, **dadurch gekennzeichnet, dass**

(i) ein olefinisch-funktionalisiertes Alkoxysilan der allgemeinen Formel II in

(ii) in Gegenwart eines Hydrolyse- und/oder Kondensationskatalysators mit (i.2) mindestens einem Tetraalkoxysilan der Formel IV umgesetzt wird,

$$Si(OR^3)_4 \qquad (IV),$$

wobei in Formel IV $R^3$ jeweils unabhängig voneinander ein linearer, verzweigter oder cyclischer Alkyl-Rest mit 1 bis 4 C-Atomen ist,

4. Verfahren nach einem der Ansprüche 1 bis 3,
**dadurch gekennzeichnet, dass**
der Alkohol Methanol, Ethanol oder ein Gemisch enthaltend einen oder beide Alkohole ist.

5. Verfahren nach einem der Ansprüche 1 bis 4,
**dadurch gekennzeichnet, dass**
die Zusammensetzung enthaltend olefinisch funktionalisierte Siloxanoligomere im Anschluss an Schritt (v) als Sumpfprodukt gewonnen wird.

6. Verfahren nach einem der Ansprüche 1 bis 5,
**dadurch gekennzeichnet,**
**dass** größer gleich 1 % der Silizium-Atome im olefinisch funktionalisierten Siloxanoligomer in Bezug auf die Gesamtsumme an Silizium-Atomen im Siloxanoligomer als T-Struktur erhalten werden und/oder der Gehalt an Silizium-Atomen monomerer Alkoxysilane der Formeln II, III und/oder IV oder deren Hydrolyseprodukte kleiner gleich 3 % in Bezug auf alle Silizium-Atome erhalten wird.

7. Verfahren nach einem der Ansprüche 1 bis 6,
**dadurch gekennzeichnet,**
**dass**

- im olefinisch-funktionalisierten Alkoxysilan der allgemeinen Formel II

$$A\text{-}Si(R^2)_x(OR^1)_{3-x} \qquad (II)$$

A ausgewählt ist aus einer Vinyl-, Allyl-, Butenyl-, Pentenyl-, Hexenyl-, Ethylhexenyl-, Heptenyl-, Octenyl-, Cyclohexenyl-C1 bis C8-alkylen-, vorzugsweise Cyclohexenyl-2-ethylen-, 3'-Cyclohexenyl-2-ethylen- Gruppe, x gleich 0 oder 1, und $R^1$ unabhängig eine Methyl-, Ethyl- oder Propyl-Gruppe sind, und unabhängig
- im Alkoxysilan der Formel III

$$B\text{-}SI(R^4)_y(OR^3)_{3-y} \qquad (III)$$

der unsubstituierte Kohlenwasserstoff-Rest B ausgewählt ist aus einer Methyl-, Ethyl-, Propyl-, Butyl-, i-Butyl-, n-Butyl-, tert-Butyl-, Pentyl-, n-Pentyl-, iso-Pentyl-, neo-Pentyl-, Hexyl-, i-Hexyl-, neo-Hexyl-, 2,2-Dimethylbutyl-, 2,3-Dimethylbutyl-, 2-Methylpentyl-, 3-Methylpentyl-, Octyl-, n-Octyl-, iso-Octyl-, Nonyl-, Decyl-, Undecyl-, Dodecyl- , $C_{13}H_{27}$-, $C_{14}H_{29}$-, $C_{15}H_{31}$- und Hexadecyl-Gruppe und $R^3$ eine Methyl-, Ethyl- oder Propyl-Gruppe und y gleich 0 oder 1 sind.

8. Verfahren nach einem der Ansprüche 1 bis 7
**dadurch gekennzeichnet, dass**
in dem olefinisch funktionalisierten Alkoxysilanen der allgemeinen Formel II x gleich 0 und/oder in dem mit einem gesättigten Kohlenwasserstoff-Rest funktionalisierten Alkoxysilan der Formel III y gleich 0 sind.

9. Verfahren nach einem der Ansprüche 1 bis 8,
**dadurch gekennzeichnet,**
**dass** eine definierte Menge Wasser von größer gleich 0,60 bis 1,48 mol Wasser je Mol Silizium-Atome der eingesetzten Alkoxysilane der Formel II und/oder III zugesetzt wird.

10. Verfahren nach einem der Ansprüche 1 bis 9,
**dadurch gekennzeichnet,**

**dass** die Alkoxysilane der Formeln II, III und/oder IV in Gegenwart eines sauren Katalysators zumindest partiell hydrolysiert und kondensiert werden und optional der Alkohol im Wesentlichen vollständig entfernt wird.

**11.** Verfahren nach einem der Ansprüche 10,
**dadurch gekennzeichnet,**
**dass** der saure Katalysator Chlorwasserstoff ist.

**12.** Verfahren nach einem der Ansprüche 1 bis 11,
**dadurch gekennzeichnet, dass**

a) in Schritt (iii) mit einer definierten Menge Wasser in Gegenwart eines Alkohols in einer Menge von je 0,001 bis 5,0 Volumeneinheiten Alkohol je Volumeneinheit Alkoxysilan, und/oder
b) in Schritt (v) mindestens einmal während Schritt (iv) oder nachfolgend eine definierte Menge Alkohol nachdosiert und abgetrennt wird.

**13.** Verfahren nach Anspruch 12,
**dadurch gekennzeichnet, dass**
in Schritt (iii) mit einer definierten Menge Wasser in Gegenwart eines Alkohols in einer Menge von je 0,05 bis 2,5 Volumeneinheiten Alkohol je Volumeneinheit Alkoxysilan umsetzt, insbesondere mit 0,1 bis 2,0 Volumeneinheiten Alkohol je Volumeneinheit Alkoxysilan.

**14.** Verfahren nach einem der Ansprüche 11 bis 13,
**dadurch gekennzeichnet, dass** jeweils unabhängig

- das olefinisch funktionalisierten Alkoxysilan der allgemeinen Formel II ausgewählt ist aus Vinyltriethoxysilan, Allyltriethoxysilan, Butenyltriethoxysilan, Pentenyltriethoxysilan, Hexenyltriethoxysilan, Ethylhexenyltriethoxysilan, Heptenyltriethoxysilan, Octenyltriethoxysilan, Cyclohexenyl-C1 bis C8-alkylentriethoxysilan, Cyclohexenyl-2-ethylentriethoxysilan, 3'-Cyclohexenyl-2-ethylentriethoxysilan, Cyclohexadienyl-C1 bis C8-alkylentriethoxysilan, Cyclohexadienyl-2-ethylentriethoxysilan, Vinyltrimethoxysilan, Allyltrimethoxysilan, Butenyltrimethoxysilan, Pentenyltrimethoxysilan, Hexenyltrimethoxysilan, Ethylhexenyltrimethoxysilan, Heptenyltrimethoxysilan, Octenyltrimethoxysilan, Cyclohexenyl-C1 bis C8-alkylentrimethoxysilan, Cyclohexenyl-2-ethylentrimethoxysilan, 3'-Cyclohexenyl-2-ethylentrimethoxysilan, Cyclohexadienyl-C1 bis C8-alkylentrimethoxysilan und Cyclohexadienyl-2-ethylentrimethoxysilan, und jeweils unabhängig
- das Alkoxysilan der Formel III ausgewählt ist aus Methyltriethoxysilan, Ethyltriethoxysilan, n-Propyltriethoxysilan, iso-Propyltriethoxysilan, Butyltriethoxysilan, n-Butyltriethoxysilan, i-Butyltriethoxysilan, Hexyltriethoxysilan, n-Hexyltriethoxysilan, iso-Hexyltriethoxysilan, Heptyltriethoxysilan, Octyltriethoxysilan, n-Octyltriethoxysilan, iso-Octyltriethoxysilan, Undecyltriethoxysilan, Decyltriethoxysilan, Nonadecyltriethoxysilan, Dodecyltriet-hoxysilan, $C_{13}H_{27}$-Triethoxysilan, $C_{14}H_{29}$-Triethoxysilan oder $C_{15}H_{31}$-Triethoxysilan, Hexadecyltriethoxysilan, Methyltrimethoxysilan, Ethyltrimethoxysilan, n-Propyltrimethoxysilan, iso-Propyltrimethoxysilan Butyltrimethoxysilan, n-Butyltrimethoxysilan, i-Butyltrimethoxysilan, Hexyltrimethoxysilan, n-Hexyltrimethoxysilan, iso-Hexyltrimethoxysilan, Heptyltrimethoxysilan, Octyltrimethoxysilan, n-Octyltrimethoxysilan, iso-Octyltrimethoxysilan, Undecyltrimethoxysilan, Decyltrimethoxysilan, Nonadecyltrimethoxysilan, Dodecyltrimethoxysilan, $C_{13}H_{27}$-Tri-methoxysilan, $C_{14}H_{29}$- Trimethoxysilan oder $C_{15}H_{31}$-Trimethoxysilan und Hexadecyltrimethoxysilan. und jeweils unabhängig
- das Alkoxysilan der Formel IV ausgewählt ist aus Tetraethoxysilan und Tetramethoxysilan.

**15.** Verfahren nach einem der Ansprüche 1 bis 14,
**dadurch gekennzeichnet,**
**dass** der Hydrolysealkohol und das Lösemittel destillativ abgetrennt werden und vorzugsweise

(15.i) mindestens einmal während der destillativen Aufarbeitung in Schritt iv oder v oder anschließend eine definierte Menge Alkohol zudosiert wird und/oder
(15.ii) vor oder während der destillativen Abtrennung des Hydrolysealkohols und des Lösemittels in Schritt iv oder v eine definierte Menge Alkalimetall, Erdalkalimetall, Aluminium, ein Metallhydrid oder eine Base zugesetzt werden, und nachfolgend filtriert oder dekantiert wird oder ein Inkontaktbringen mit einem Ionentauscher erfolgt.

**16.** Verfahren nach einem der Ansprüche 1 bis 15,
**dadurch gekennzeichnet,**

**dass** in (vii) eine Zusammensetzung gewonnen wird mit olefinisch funktionalisierten Siloxanoligomeren, deren Molekulargewicht Mw zu größer gleich 85 % (Flächen-%, GPC) größer gleich 250 bis 750 g/mol in Bezug auf die Gesamtzusammensetzung beträgt.

**17.** Verfahren nach einem der Ansprüche 1 bis 16,
**dadurch gekennzeichnet,**
**dass** in (vii) eine Zusammensetzung gewonnen wird mit olefinisch funktionalisierten Siloxanoligomeren, deren Molekulargewicht Mw zu größer gleich 95 % (Flächen-%, GPC) größer gleich 250 bis 1000 g/mol in Bezug auf die Gesamtzusammensetzung beträgt.

**18.** Zusammensetzung erhältlich nach einem Verfahren nach einem der Ansprüche 1 bis 17, enthaltend olefinisch funktionalisierte Siloxanoligomere, die höchstens einen olefinischen Rest am Silizium-Atom aufweisen, und die olefinisch funktionalisierten Siloxanoligomere Si-O-vernetzte Strukturelemente aufweisen, die kettenförmige, cyclische, vernetzte und/oder raumvernetzte Strukturen bilden, wobei die Strukturelemente aus Alkoxysilanen der Formel II abgeleitet sind sowie optional zusätzlich aus Alkoxysilanen ausgewählt aus den Formeln III und IV, wobei das Gewichtsmittel des Molekulargewichts (Mw) der Siloxanoligomere größer gleich 410 g/mol bis 580 g/mol und das Zahlenmittel des Molekulargewichts (Mn) größer gleich 370 bis 470 g/mol betragen, und die Polydispersität als Quotient aus Mw/Mn bei 1,00 bis 1,25 liegt.

**19.** Zusammensetzung nach Anspruch 18, **dadurch gekennzeichnet, dass** in der Zusammensetzung die olefinischen Siloxanoligomere mit einem Molekulargewicht Mw größer gleich 250 bis 500 g/mol zu größer gleich 45 % (Flächen-%, GPC), mit einem Molekulargewicht Mw größer gleich 500 bis 750 g/mol zu größer gleich 20 % und mit einem Molekulargewicht von größer gleich 1000 g/mol zu kleiner gleich 10 % in Bezug auf die Gesamtzusammensetzung vorliegen.

**20.** Verwendung einer nach einem der Ansprüche 1 bis 17, hergestellten Zusammensetzung sowie die Zusammensetzung nach Anspruch 18 oder 19 als Haftmittel, als Vernetzungsmittel durch Pfropfpolymerisation und/oder hydrolytische Kondensation in an sich bekannter Weise, zur Herstellung von mit olefinisch funktionalisierten Siloxanoligomeren gepfropfter Polymere, PrePolymere und/oder von mineralisch gefüllten Polymeren zur Herstellung von mit olefinisch funktionalisierten Siloxanoligomeren gepfropfter Polymere, PrePolymere und/oder von mineralisch gefüllten Thermoplasten oder Elastomeren, bevorzugt von mineralisch gefüllten Thermoplasten, Elastomeren oder von Pre-Polymeren dieser, zur Pfropfung oder bei der Polymerisation thermoplastischer Polyolefine, als Trockenmittel, insbesondere als Wasserfänger für Silikondichtmassen, in vernetzbaren Polymeren zur Herstellung von Kabeln, zur Herstellung vernetzbarer Polymere, als Ölphase in einer Emulsion und/oder gemeinsam mit Organosilanen oder Organopolysiloxanen, zur Füllstoffmodifizierung Füllstoffbeschichtung, Harzmodifizierung, Harzadditiv, Oberflächenmodifizierung, Oberflächenfunktionalisierung, Oberflächenhydrophobierung, als Bestandteil in Beschichtungssystemen, als Bestandteil in Sol-Gel Systemen oder Beschichtungssystemen oder Hybrid-Beschichtungssystemen, zur Modifizierung von Kathoden und Anodenmaterialien in Batterien, als Elektrolytflüssigkeit, als Additiv in Elektrolytflüssigkeiten, für die Modifizierung von Fasern, insbesondere Glasfasern und Naturfasern, sowie zur Modifizierung von Textilien, zur Modifizierung von Füllstoffen für die Kunststeinindustrie, als Bautenschutzmittel oder Bestandteil in Bautenschutzmittel, als Zusatz für mineralisch härtende Massen, zur Modifizierung von Holz, Holzfasern und Cellulose.

## Claims

**1.** Process for preparing a composition comprising olefinically functionalized siloxane oligomers, by reacting at least

(i) an olefinically functionalized alkoxysilane of the general formula II,

$$A\text{-}Si\,(R^2)_x(OR^1)_{3\text{-}x} \qquad (II),$$

where A in formula II corresponds to an olefinic radical which is selected from a linear, branched or cyclic alkenyl- or cycloalkenyl-alkylene-functional group having in each case 2 to 16 C atoms,
$R^2$ independently corresponds to a linear, branched or cyclic alkyl radical having 1 to 15 C atoms and x is 0 or 1, and $R^1$ independently corresponds to a linear, branched or cyclic alkyl radical having 1 to 4 C atoms,
(ii) in the presence of a hydrolysis and/or condensation catalyst
(iii) with a defined amount of water in the presence of alcohol as solvent, to give the siloxane oligomers, and

(iv) substantially removing the hydrolysis alcohol and the solvent present, and

(v) at least once during step (iv) or subsequently, adding a further defined amount of alcohol and carrying out removal,

(vi) the resulting total chloride content of the composition being less than or equal to 100 mg/kg, and

(vii) the resulting weight-average molecular weight (Mw) being greater than or equal to 410 g/mol.

**2.** Process according to Claim 1, **characterized in that** (i) an olefinically functionalized alkoxysilane of the general formula II is reacted in (ii) in the presence of a hydrolysis and/or condensation catalyst with (i.1) at least one alkoxysilane of the formula III,

$$B\text{-}Si(R^4)_y(OR^3)_{3-y} \qquad (III),$$

where in formula III B corresponds to a saturated hydrocarbon radical selected from a linear, branched or cyclic alkyl radical having 1 to 16 C atoms, $R^3$ corresponds independently at each occurrence to a linear, branched or cyclic alkyl radical having 1 to 4 C atoms, and $R^4$ corresponds to a linear, branched or cyclic alkyl radical having 1 to 15 C atoms, and y is 0 or 1.

**3.** Process according to Claim 1 or 2, **characterized in that**

(i) an olefinically functionalized alkoxysilane of the general formula II is reacted
(ii) in the presence of a hydrolysis and/or condensation catalyst
with (i.2) at least one tetraalkoxysilane of the formula IV,

$$Si(OR^3)_4 \qquad (IV),$$

where in formula IV $R^3$ corresponds independently at each occurrence to a linear, branched or cyclic alkyl radical having 1 to 4 C atoms.

**4.** Process according to any of Claims 1 to 3,
**characterized in that**
the alcohol is methanol, ethanol or a mixture comprising one or both alcohols.

**5.** Process according to any of Claims 1 to 4,
**characterized in that**
the composition comprising olefinically functionalized siloxane oligomers is obtained following step (v) as a liquid-phase product.

**6.** Process according to any of Claims 1 to 5,
**characterized in that**
greater than or equal to 1% of the silicon atoms in the olefinically functionalized siloxane oligomer,
in relation to the sum total of silicon atoms in the
siloxane oligomer, are obtained as T structure and/or
the amount of silicon atoms of monomeric alkoxysilanes of the formulae II, III and/or IV or hydrolysis products thereof obtained is less than or equal to 3% in relation to all silicon atoms.

**7.** Process according to any of Claims 1 to 6,
**characterized
in that**

- in the olefinically functionalized alkoxysilane of the general formula II

$$A\text{-}Si(R^2)_x(OR^1)_{3-x} \qquad (II)$$

A is selected from a vinyl, allyl, butenyl, pentenyl, hexenyl, ethylhexenyl, heptenyl, octenyl, cyclohexenyl-C1 to C8-alkylene, preferably cyclohexenyl-2-ethylene, 3'-cyclohexenyl-2-ethylene group, x is 0 or 1, and $R^1$ independently is a methyl, ethyl or propyl group, and independently
- in the alkoxysilane of the formula III

$$B\text{-}Si(R^4)_y(OR^3)_{3-y} \qquad (III)$$

the unsubstituted hydrocarbon radical B is selected from a

methyl, ethyl, propyl, butyl, isobutyl, n-butyl, tert-butyl, pentyl, n-pentyl, isopentyl, neopentyl, hexyl, isohexyl, neohexyl, 2,2-dimethylbutyl, 2,3-dimethylbutyl, 2-methylpentyl, 3-methylpentyl, octyl, n-octyl, isooctyl, nonyl, decyl, undecyl, dodecyl, $C_{13}H_{27}$, $C_{14}H_{29}$, $C_{15}H_{31}$ and hexadecyl group and $R^3$ is a methyl, ethyl or propyl group and y is 0 or 1.

8. Process according to any of Claims 1 to 7,
**characterized in that**
in the olefinically functionalized alkoxysilane of the general formula II
x is 0 and/or in the alkoxysilane of the formula III functionalized with a saturated hydrocarbon radical, y is 0.

9. Process according to any of Claims 1 to 8,
**characterized**
**in that** a defined amount of water is added of greater than or equal to 0.60 to 1.48 mol of water per mole of silicon atoms in the alkoxysilanes of the formula II and/or III used.

10. Process according to any of Claims 1 to 9,
**characterized**
**in that** the alkoxysilanes of the formulae II, III and/or IV are subjected to at least partial hydrolysis and condensation in the presence of an acidic catalyst, and the alcohol optionally is removed substantially completely.

11. Process according to any of Claims 10,
**characterized**
**in that** the acidic catalyst is hydrogen chloride.

12. Process according to any of Claims 1 to 11,
**characterized in that**

a) in step (iii) with a defined amount of water in the presence of an alcohol in an amount of 0.001 to 5.0 volume units of alcohol per volume unit of alkoxysilane, and/or
b) in step (v), at least once during step (iv) or subsequently, a further defined amount of alcohol is added and removal is carried out.

13. Process according to Claim 12,
**characterized in that**
in step (iii) reacts with a defined amount of water in the presence of an alcohol in an amount of 0.05 to 2.5 volume units of alcohol per volume unit of alkoxysilane, more particularly with 0.1 to 2.0 volume units of alcohol per volume unit of alkoxysilane.

14. Process according to any of Claims 11 to 13,
**characterized in that**, in each case independently,

- the olefinically functionalized alkoxysilane of the general formula II is selected from vinyltriethoxysilane, allyltriethoxysilane, butenyltriethoxysilane, pentenyltriethoxysilane, hexenyltriethoxysilane, ethylhexenyltriethoxysilane, heptenyltriethoxysilane, octenyltriethoxysilane, cyclohexenyl-C1 to C8-alkylenetriethoxysilane, cyclohexenyl-2-ethylenetriethoxysilane, 3'-cyclohexenyl-2-ethylenetriethoxysilane, cyclohexadienyl-C1 to C8-alkylenetriethoxysilane, cyclohexadienyl-2-ethylenetriethoxysilane, vinyltrimethoxysilane, allyltrimethoxysilane, butenyltrimethoxysilane, pentenyltrimethoxysilane, hexenyltrimethoxysilane, ethylhexenyltrimethoxysilane, heptenyltrimethoxysilane, octenyltrimethoxysilane, cyclohexenyl-C1 to C8-alkylenetrimethoxysilane, cyclohexenyl-2-ethylenetrimethoxysilane, 3'-cyclohexenyl-2-ethylenetrimethoxysilane, cyclohexadienyl-C1 to C8-alkylenetrimethoxysilane and cyclohexadienyl-2-ethylenetrimethoxysilane, and in each case independently
- the alkoxysilane of the formula III is selected from methyltriethoxysilane, ethyltriethoxysilane, n-propyltriethoxysilane, isopropyltriethoxysilane, butyltriethoxysilane, n-butyltriethoxysilane, isobutyltriethoxysilane, hexyltriethoxysilane, n-hexyltriethoxysilane, isohexyltriethoxysilane, heptyltriethoxysilane, octyltriethoxysilane, n-octyltriethoxysilane, isooctyltriethoxysilane, undecyltriethoxysilane, decyltriethoxysilane, nonadecyltriethoxysilane, dodecyltriethoxysilane, $C_{13}H_{27}$-triethoxysilane, $C_{14}H_{29}$-triethoxysilane or $C_{15}H_{31}$-triethoxysilane, hexadecyltri-

ethoxysilane, methyltrimethoxysilane, ethyltrimethoxysilane, n-propyltrimethoxysilane, isopropyltrimethoxysilane, butyltrimethoxysilane, n-butyltrimethoxysilane, isobutyltrimethoxysilane, hexyltrimethoxysilane, n-hexyltrimethoxysilane, isohexyltrimethoxysilane, heptyltrimethoxysilane, octyltrimethoxysilane, n-octyltrimethoxysilane, isooctyltrimethoxysilane, undecyltrimethoxysilane, decyltrimethoxysilane, nonadecyltrimethoxysilane, dodecyltrimethoxysilane, $C_{13}H_{27}$-trimethoxysilane, $C_{14}H_{29}$-trimethoxysilane or $C_{15}H_{31}$-trimethoxysilane and hexadecyltrimethoxysilane, and in each case independently
- the alkoxysilane of the formula IV is selected from tetraethoxysilane and tetramethoxysilane.

15. Process according to any of Claims 1 to 14,
    **characterized**
    **in that** the hydrolysis alcohol and the solvent are removed by distillation and preferably

    (15.i) at least once during the distillative work-up in step iv or v, or subsequently, a defined amount of alcohol is metered in and/or
    (15.ii) before or during the distillative removal of the hydrolysis alcohol and of the solvent in step iv or v, a defined amount of alkali metal, alkaline earth metal, aluminium, a metal hydride or a base is added, followed by filtration or decantation or by contacting with an ion exchanger.

16. Process according to any of Claims 1 to 15,
    **characterized**
    **in that** in (vii) a composition is obtained with olefinically functionalized siloxane oligomers whose molecular weight Mw is
    greater than or equal to 250 to 750 g/mol to an extent of greater than or equal to 85% (area%, GPC) in relation to the overall composition.

17. Process according to any of Claims 1 to 16,
    **characterized**
    **in that** in (vii) a composition is obtained with olefinically functionalized siloxane oligomers whose molecular weight Mw is
    greater than or equal to 250 to 1000 g/mol to an extent of greater than or equal to 95% (area%, GPC) in relation to the overall composition.

18. Composition obtainable by a process according to any of Claims 1 to 17, comprising olefinically functionalized siloxane oligomers which have not more than one olefinic radical on the silicon atom, the olefinically functionalized siloxane oligomers comprise Si- O-crosslinked structural elements which form catenary, cyclic, crosslinked and/or three-dimensionally crosslinked structures, the structural elements being derived from alkoxysilanes of the formula II and also, optionally, additionally from alkoxysilanes selected from the formulae III and IV, where the weight-average molecular weight (Mw) of the siloxane oligomers is greater than or equal to 410 g/mol to 580 g/mol and the number-average molecular weight (Mn) is greater than or equal to 370 to 470 g/mol, and the polydispersity, as the ratio of Mw/Mn, is 1.00 to 1.25.

19. Composition according to Claim 18, **characterized in that** in the composition the olefinic siloxane oligomers with a molecular weight Mw of greater than or equal to 250 to 500 g/mol are present at greater than or equal to 45% (area%, GPC), those with a molecular weight Mw of greater than or equal to 500 to 750 g/mol are present at greater than or equal to 20%, and those with a molecular weight of greater than or equal to 1000 g/mol are present at less than or equal to 10% in relation to the overall composition.

20. Use of a composition produced according to any of Claims 1 to 17, and also the composition according to Claim 18 or 19, as adherence agents, as crosslinking agents by graft polymerization and/or hydrolytic condensation in a conventional way, for producing polymers, prepolymers and/or mineral-filled polymers grafted with olefinically functionalized siloxane oligomers, for producing polymers, prepolymers and/or mineral-filled thermoplastics or elastomers that are grafted with olefinically functionalized siloxane oligomers, preferably of mineral-filled thermoplastics, elastomers or prepolymers thereof, for the grafting or in the polymerization of thermoplastic polyolefins, as drying agents, more particularly as water scavengers for silicone sealants, in crosslinkable polymers for producing cables, for preparing crosslinkable polymers, as oil phase in an emulsion and/or together with organosilanes or organopolysiloxanes, for filler modification, filler coating, resin modification, resin additive, surface modification, surface functionalization, surface hydrophobization, as constituent in coating systems, as constituent in sol-gel systems or coating systems or hybrid coating systems, for modifying cathodes and anode materials in batteries, as electrolyte fluid, as additive in electrolyte fluids, for the modification of fibres, more particularly glass fibres and natural fibres, and for modifying textiles, for modifying fillers for the artificial stone industry, as architectural preservative or constituent of architectural preservatives, as addition for mineral-curing compositions, for modifying wood, wood fibres and cellulose.

## Revendications

1. Procédé de fabrication d'une composition contenant des oligomères de siloxane à fonctionnalisation oléfinique, en ce qu'au moins

   (i) un alcoxysilane à fonctionnalisation oléfinique de formule générale II,

   $$A-Si(R^2)_x(OR^1)_{3-x} \qquad (II),$$

   A dans la formule II correspondant à un radical oléfinique qui est choisi parmi un groupe fonctionnel alcényl- ou cycloalcényl-alkylène linéaire, ramifié ou cyclique contenant à chaque fois 2 à 16 atomes C, les $R^2$ correspondant indépendamment à un radical alkyle linéaire, ramifié ou cyclique contenant 1 à 15 atomes C et x représentant 0 ou 1, et les $R^1$ correspondant indépendamment à un radical alkyle linéaire, ramifié ou cyclique contenant 1 à 4 atomes C,
   (ii) est mis en réaction en présence d'un catalyseur d'hydrolyse et/ou de condensation
   (iii) avec une quantité définie d'eau en présence d'un alcool en tant que solvant pour former les oligomères de siloxane, et
   (iv) l'alcool de l'hydrolyse et le solvant présent sont essentiellement séparés, et
   (v) une quantité définie d'alcool est encore ajoutée au moins une fois pendant l'étape (iv) ou après et séparée,
   (vi) une teneur en chlorure total de la composition inférieure ou égale à 100 mg/kg et
   (vii) une moyenne en poids du poids moléculaire (Mw) supérieure ou égale à 410 g/mol étant obtenues.

2. Procédé selon la revendication 1, **caractérisé en ce que** (i) un alcoxysilane à fonctionnalisation oléfinique de formule générale II est mis en réaction (ii) en présence d'un catalyseur d'hydrolyse et/ou de condensation avec (i.1) au moins un alcoxysilane de formule III,

   $$B-Si(R^4)_y(OR^3)_{3-y} \qquad (III),$$

   B dans la formule III correspondant à un radical hydrocarboné saturé, qui est choisi parmi un radical alkyle linéaire, ramifié ou cyclique contenant 1 à 16 atomes C, les $R^3$ correspondant à chaque fois indépendamment les uns des autres à un radical alkyle linéaire, ramifié ou cyclique contenant 1 à 4 atomes C, et les $R^4$ correspondant à un radical alkyle linéaire, ramifié ou cyclique contenant 1 à 15 atomes C, et y représentant 0 ou 1.

3. Procédé selon la revendication 1 ou 2, **caractérisé en ce que**

   (i) un alcoxysilane à fonctionnalisation oléfinique de formule générale II
   (ii) est mis en réaction en présence d'un catalyseur d'hydrolyse et/ou de condensation avec (i.2) au moins un tétraalcoxysilane de formule IV,

   $$Si(OR^3)_4 \qquad (IV),$$

   les $R^3$ dans la formule IV correspondant à chaque fois indépendamment les uns des autres à un radical alkyle linéaire, ramifié ou cyclique contenant 1 à 4 atomes C.

4. Procédé selon l'une quelconque des revendications 1 à 3,
   **caractérisé en ce que**
   l'alcool est le méthanol, l'éthanol ou un mélange contenant l'un ou les deux alcools.

5. Procédé selon l'une quelconque des revendications 1 à 4,
   **caractérisé en ce que**
   la composition contenant des oligomères de siloxane à fonctionnalisation oléfinique est obtenue après l'étape (v) en tant que produit de fond.

**6.** Procédé selon l'une quelconque des revendications 1 à 5,
**caractérisé en ce que**
1 % ou plus des atomes de silicium de l'oligomère de siloxane à fonction-nalisation oléfinique par rapport à la somme totale des atomes de silicium de l'oligomère de siloxane sont obtenus sous la forme d'une structure T et/ou la teneur en atomes de silicium d'alcoxysilanes monomères de formule II, III et/ou IV ou leurs produits d'hydrolyse est inférieure ou égale à 3 % par rapport à tous les atomes de silicium.

**7.** Procédé selon l'une quelconque des revendications 1 à 6,
**caractérisé**

**en ce que**

- dans l'alcoxysilane à fonctionnalisation oléfinique de formule générale II

$$A\text{-}Si(R^2)_x(OR^1)_{3\text{-}x} \qquad (II)$$

A est choisi parmi un groupe vinyle, allyle, butén-yle, penténéyle, hexényle, éthylhexényle, heptényle, octényle, cyclohexényl-alkylène en C1 à C8, de préférence cyclohexényl-2-éthylène, 3'-cyclohexényl-2-éthylène, x représente 0 ou 1, et les $R^1$ représentent indépendamment un groupe méthyle, éthyle ou propyle, et indépendamment

- dans l'alcoxysilane de formule III

$$B\text{-}Si(R^4)_y(OR^3)_{3\text{-}y} \qquad (III)$$

le radical hydrocarboné non substitué B est choisi parmi un groupe méthyle, éthyle, propyle, butyle, i-butyle, n-butyle, tert-butyle, pentyle, n-pentyle, iso-pentyle, néo-pentyle, hexyle, i-hexyle, néo-hexyle, 2,2-diméthylbutyle, 2,3-diméthylbutyle, 2-méthylpentyle, 3-méthylpentyle, octyle, n-octyle, iso-octyle, nonyle, décyle, undécyle, dodécyle, $C_{13}H_{27}$, $C_{14}H_{29}$, $C_{15}H_{31}$ et hexadécyle, et les $R^3$ représentent un groupe méthyle, éthyle ou propyle, et y représente 0 ou 1.

**8.** Procédé selon l'une quelconque des revendications 1 à 7,
**caractérisé en ce que**
dans l'alcoxysilane à fonctionnalisation oléfinique de formule générale II, x représente 0 et/ou, dans l'alcoxysilane fonctionnalisé avec un radical hydrocarboné saturé de formule III, y représente 0.

**9.** Procédé selon l'une quelconque des revendications 1 à 8,
**caractérisé en ce**
**qu'**une quantité définie d'eau de 0,60 ou plus à 1,48 mol d'eau par mol d'atomes de silicium des alcoxysilanes de formule II et/ou III utilisés est ajoutée.

**10.** Procédé selon l'une quelconque des revendications 1 à 9,
**caractérisé en ce que**
les alcoxysilanes de formule II, III et/ou IV sont au moins partiellement hydrolysés et condensés en présence d'un catalyseur acide et l'alcool est éventuellement éliminé essentiellement en totalité.

**11.** Procédé selon l'une quelconque des revendications 10,
**caractérisé en ce que**
le catalyseur acide est le chlorure d'hydrogène.

**12.** Procédé selon l'une quelconque des revendications 1 à 11,
**caractérisé en ce que**

a) à l'étape (iii) avec une quantité définie d'eau en présence d'un alcool en une quantité de 0,001 à 5,0 unités volumiques d'alcool par unité volumique d'alcoxysilane, et/ou
b) à l'étape (v), une quantité définie d'alcool est encore ajoutée au moins une fois pendant l'étape (iv) ou après et séparée.

**13.** Procédé selon la revendication 12,
**caractérisé en ce que**

à l'étape (iii) réagit avec une quantité définie d'eau en présence d'un alcool en une quantité de 0,05 à 2,5 unités volumiques d'alcool par unité volumique d'alcoxysilane, notamment avec 0,1 à 2,0 unités volumiques d'alcool par unité volumique d'alcoxysilane.

14. Procédé selon l'une quelconque des revendications 11 à 13,
**caractérisé en ce que**, à chaque fois indépendamment

- l'alcoxysilane à fonctionnalisation oléfinique de formule générale II est choisi parmi le vinyltriéthoxysilane, l'allyltriéthoxysilane, le butényltriéthoxysilane, le pentényltriéthoxysilane, l'hexényltriéthoxysilane, l'éthylhexényltriéthoxysilane, l'heptényltriéthoxysilane, l'octényltriéthoxysilane, le cyclohexényl-alkylène en C1 à C8-triéthoxysilane, le cyclohexényl-2-éthylènetriéthoxysilane, le 3'-cyclohexényl-2-éthylènetriéthoxysilane, le cyclohexadiényl-alkylène en C1 à C8-triéthoxysilane, le cyclohexadiényl-2-éthylènetriéthoxysilane, le vinyltriméthoxysilane, l'allyltriméthoxysilane, le butényltriméthoxysilane, le pentényltriméthoxysilane, l'hexényltriméthoxysilane, l'éthylhexényltriméthoxysilane, l'heptényltriméthoxysilane, l'octényltriméthoxysilane, le cyclohexényl-alkylène en C1 à C8-triméthoxysilane, le cyclohexényl-2-éthylène-triméthoxysilane, le 3'-cyclohexényl-2-éthylène-triméthoxysilane, le cyclohexadiényl-alkylène en C1 à C8-triméthoxysilane et le cyclohexadiényl-2-éthylène-triméthoxysilane, et à chaque fois indépendamment
- l'alcoxysilane de formule III est choisi parmi le méthyltriéthoxysilane, l'éthyltriéthoxysilane, le n-propyltriéthoxysilane, l'iso-propyltriéthoxysilane, le butyltriéthoxysilane, le n-butyltriéthoxysilane, l'i-butyltriéthoxysilane, l'hexyltriéthoxysilane, le n-hexyltriéthoxysilane, l'iso-hexyltriéthoxysilane, l'heptyltriéthoxysilane, l'octyltriéthoxysilane, le n-octyltriéthoxysilane, l'iso-octyltriéthoxysilane, l'undécyltriéthoxysilane, le décyltriéthoxysilane, le nonadécyltriéthoxysilane, le dodécyltriéthoxysilane, le triéthoxysilane en C13H27, le triéthoxysilane en C14H29 ou le triéthoxysilane en C15H31, l'hexadécyltriéthoxysilane, le méthyltriméthoxysilane, l'éthyltriméthoxysilane, le n-propyltriméthoxysilane, l'iso-propyltriméthoxysilane, le butyltriméthoxysilane, le n-butyltriméthoxysilane, l'i-butyltriméthoxysilane, l'hexyltriméthoxysilane, le n-hexyltriméthoxysilane, l'iso-hexyltriméthoxysilane, l'heptyltriméthoxysilane, l'octyltriméthoxysilane, le n-octyltriméthoxysilane, l'iso-octyltriméthoxysilane, l'undécyltriméthoxysilane, le décyltriméthoxysilane, le nonadécyltriméthoxysilane, le dodécyltriméthoxysilane, le triméthoxysilane en C13H27, le triméthoxysilane en C14H29 ou le triméthoxysilane en C15H31 et l'hexadécyltriméthoxysilane, et à chaque fois indépendamment
- l'alcoxysilane de formule IV est choisi parmi le tétraéthoxysilane et le tétraméthoxysilane.

15. Procédé selon l'une quelconque des revendications 1 à 14,
**caractérisé en ce que**
l'alcool de l'hydrolyse et le solvant sont séparés par distillation et, de préférence
(15.i) une quantité définie d'alcool est ajoutée au moins une fois pendant le traitement par distillation de l'étape iv ou v ou après et/ou (15.ii) une quantité définie d'un métal alcalin, d'un métal alcalino-terreux, d'aluminium, d'un hydrure métallique ou d'une base est ajoutée avant ou pendant la séparation par distillation de l'alcool de l'hydrolyse et du solvant à l'étape iv ou v, puis filtrée ou décantée, ou une mise en contact avec un échangeur d'ions a lieu.

16. Procédé selon l'une quelconque des revendications 1 à 15,
**caractérisé en ce**
**qu'**une composition est obtenue en (vii), contenant des oligomères de siloxane à fonctionnalisation oléfinique dont le poids moléculaire Mw est en une proportion supérieure ou égale à 85 % (% de surface, CPG) de 250 ou plus à 750 g/mol par rapport à la composition totale.

17. Procédé selon l'une quelconque des revendications 1 à 16,
**caractérisé en ce**
**qu'**une composition est obtenue en (vii), contenant des oligomères de siloxane à fonctionnalisation oléfinique dont le poids moléculaire Mw est en une proportion supérieure ou égale à 95 % (% de surface, CPG) de 250 ou plus à 1 000 g/mol par rapport à la composition totale.

18. Composition pouvant être obtenue par un procédé selon l'une quelconque des revendications 1 à 17, contenant des oligomères de siloxane à fonctionnalisation oléfinique, qui comprennent au plus un radical oléfinique sur l'atome de silicium, et les oligomères de siloxane à fonctionnalisation oléfinique comprenant des éléments structuraux à réticulation Si-O, qui forment des structures linéaires, cycliques, réticulées et/ou réticulées dans l'espace, les éléments structuraux dérivant d'alcoxysilanes de formule II et éventuellement également d'alcoxysilanes choisis parmi les formules III et IV, la moyenne en poids du poids moléculaire (Mw) des oligomères de siloxane étant de 410 g/mol ou plus à 580 g/mol et la moyenne en nombre du poids moléculaire (Mn) étant de 370 ou plus à 470 g/mol, et la polydispersité en tant que quotient Mw/Mn étant de 1,00 à 1,25.

**19.** Composition selon la revendication 18,
**caractérisée en ce que**
les oligomères de siloxane oléfiniques se présentent dans la composition avec un poids moléculaire Mw de 250 ou plus à 500 g/mol en une proportion supérieure ou égale à 45 % (% de surface, CPG), avec un poids moléculaire Mw de 500 ou plus à 750 g/mol en une proportion supérieure ou égale à 20 %, et avec un poids moléculaire de 1 000 g/mol ou plus en une proportion inférieure ou égale à 10 %, par rapport à la composition totale.

**20.** Utilisation d'une composition fabriquée selon l'une quelconque des revendications 1 à 17, ainsi que de la composition selon la revendication 18 ou 19, en tant qu'agent adhésif, en tant qu'agent de réticulation par polymérisation-greffage et/ou condensation hydrolytique d'une manière connue en soi, pour la fabrication de polymères greffés avec des oligomères de siloxane à fonctionnalisation oléfinique, de prépolymères et/ou de polymères contenant des charges minérales, pour la fabrication de polymères greffés avec des oligomères de siloxane à fonctionnalisation oléfinique, de prépolymères et/ou de thermoplastiques ou d'élastomères contenant des charges minérales, de préférence de thermoplastiques ou d'élastomères contenant des charges minérales, ou de prépolymères de ceux-ci, pour le greffage ou lors de la polymérisation de polyoléfines thermoplastiques, en tant qu'agent siccatif, notamment en tant que capteur d'eau pour matériaux d'étanchéité à base de silicone, dans des polymères réticulables pour la fabrication de câbles, pour la fabrication de polymères réticulables, en tant que phase huileuse dans une émulsion et/ou conjointement avec des organosilanes ou des organopolysiloxanes, pour la modification de charges, pour le revêtement de charges, pour la modification de résines, additif de résine, la modification de surfaces, la fonctionnalisation de surfaces, l'hydrophobation de surfaces, en tant que constituant dans des systèmes de revêtement, en tant que constituant dans des systèmes sol-gel ou des systèmes de revêtement ou des systèmes de revêtement hybrides, pour la modification de cathodes et de matériaux d'anodes dans des batteries, en tant que liquide électrolytique, en tant qu'additif dans des liquides électrolytiques, pour la modification de fibres, notamment de fibres de verre et de fibres naturelles, ainsi que pour la modification de textiles, pour la modification de charges pour l'industrie des pierres artificielles, en tant qu'agent de protection des matériaux ou constituant d'agents de protection des matériaux, en tant qu'additif pour matériaux durcisseurs minéraux, pour la modification de bois, de fibres de bois et de cellulose.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0518057 B1
- US 5282998 A
- US 6395856 B1
- CN 100343311 C
- JP 10298289 A
- JP 2004099872 A
- EP 1205481 B1

**In der Beschreibung aufgeführte Nicht-Patentliteratur**

- **H.-G. HORN ; H. CH. MARSMANN.** Strukturuntersuchungen von oligomeren und polymeren Siloxanen durch hochauflösende Si-Kernresonanz. *Die Markromolekulare Chemie,* 1972, vol. 162, 255-267
- **G. ENGELHARDT ; H. JANCKE.** Über die H-, C- und Si-NMR chemischen Verschiebungen einiger linearer, verzweigter und cyclischer Methyl-Siloxan-Verbindungen. *J. Organometal. Chem.,* 1971, vol. 28, 293-300
- NMR spectroscopy of organosilicon compounds. **ELIZABETH A. WILLIAMS.** The Chemistry of Organic Silicon Compounds. John Wiley & Sons Ltd, 1989, 511-533
- **ANDRE STRIEGEL et al.** Modern Size-Exclusion Liquid Chromatography. Verlag Wiley & Sons, 2009